(19) Europäisches Patentamt
European Patent Office
Office européen des brevets

(11) EP 3 712 679 A1

(12) EUROPEAN PATENT APPLICATION

(43) Date of publication:
**23.09.2020 Bulletin 2020/39**

(21) Application number: **20161859.2**

(22) Date of filing: **09.03.2020**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **20.03.2019 JP 2019052115**

(51) Int Cl.:
***G02B 26/10*** *(2006.01)* ***G02B 27/01*** *(2006.01)*

(71) Applicant: **Ricoh Company, Ltd.**
**Tokyo 143-8555 (JP)**

(72) Inventor: **TANAKA, Hiroaki**
**Tokyo, 143-8555 (JP)**

(74) Representative: **J A Kemp LLP**
**14 South Square**
**Gray's Inn**
**London WC1R 5JJ (GB)**

# (54) OPTICAL SCANNER, DISPLAY SYSTEM, AND MOBILE OBJECT

(57) An optical scanner (10) includes a light source (11); a light deflector (13) configured to deflect light emitted from the light source (11) to scan in a main scanning direction and a sub-scanning direction perpendicular to the main scanning direction; a photosensor (61) having a detection field, configured to detect the light scanning the detection field; and a controller (17). The controller (17) is configured to control the light source (11) to emit light to scan an irradiation area; and shift the irradiation area between a first position overlapping with the detection field and a second position other than the first position in the sub-scanning direction.

FIG. 1

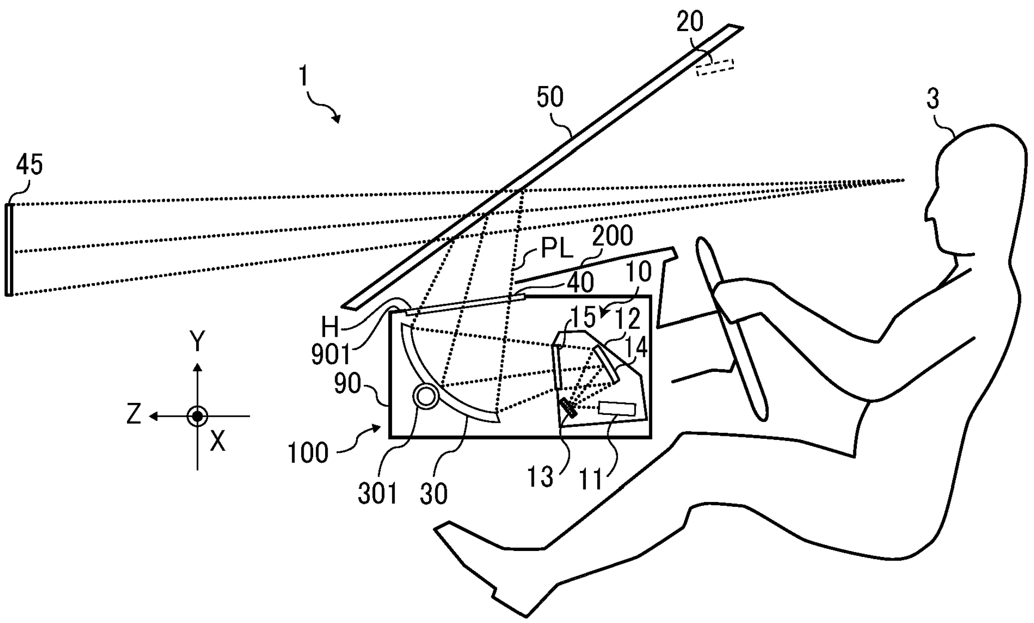


EP 3 712 679 A1

## Description

BACKGROUND

Technical Field

The present disclosure relates to an optical scanner, a display system, and a mobile obj ect.

Related Art

In the related art, two-dimensional scanning devices are known that includes an oscillating mirror used to scan the light flux emitted from a light source in the first and second directions and form a two-dimensional scanning area.

JP-5221965-B (JP-2009-180753-A) discloses the two-dimensional scanner that detects spots of scanning light emitted at an appropriate timing (high-luminance portions formed by the scanning light), which are at at least two locations separated from each other in the second direction, by using a photo-sensing element. However, there have been issues such that in forming an image by two-dimensional scanning, the detection accuracy might decrease due to the changes in environment temperature or over time.

SUMMARY

In view of the above, it is an object to provide an optical scanner that substantially prevents a decrease in detection accuracy due to the changes in the environment or the changes over time, a display system incorporating the optical scanner, and a mobile object incorporating the display system.

In one aspect of this disclosure, there is provided an improved optical scanner including a light source; a light deflector configured to deflect light emitted from the light source to scan in a main scanning direction and a sub-scanning direction perpendicular to the main scanning direction; a photosensor having a detection field, configured to detect the light scanning the detection field; and a controller. The controller is configured to control the light source to emit light to scan an irradiation area; and shift the irradiation area between a first position overlapping with the detection field and a second position other than the first position in the sub-scanning direction.

In another aspect of this disclosure, there is provided an improved display system including the above-described optical scanner; an imaging optical system configured to reflect the light that has been deflected by the light deflector to scan the screen and projected by the screen; and a reflector configured to reflect the light reflected from the imaging optical system so as to form a virtual image.

In still another aspect of this disclosure, there is provided an improved mobile object including the above-described display system. The reflector is a windshield of the mobile obj ect.

The embodiments of the present disclosure provide an optical scanner that substantially prevents a decrease in detection accuracy due to the changes in the environment or the changes over time, a display system incorporating the optical scanner, and a mobile object incorporating the display system.

BRIEF DESCRIPTION OF THE SEVERAL VIEWS OF THE DRAWINGS

A more complete appreciation of the disclosure and many of the attendant advantages and features thereof can be readily obtained and understood from the following detailed description with reference to the accompanying drawings, wherein:

FIG. 1 is an illustration of an example configuration of a display system according to a first embodiment of the present disclosure;
FIG. 2 is a block diagram of an example hardware configuration of a display device according to the first embodiment;
FIG. 3 is a diagram illustrating a specific configuration of a light-source device according to the first embodiment;
FIG. 4 is an illustration of a specific configuration of a light deflector according to the first embodiment;
FIG. 5 is an illustration of an example of a specific configuration of a screen according to the first embodiment;
FIGs. 6A and 6B are illustrations for describing the differences in action caused by the differences of the diameter of incident light flux and the lens diameter in a microlens array;
FIG. 7 is an illustration for describing the relation of a mirror and a scanning range of the light deflector;
FIG. 8 is an illustration of an example of a trajectory of a scanning line when two-dimensional scanning is performed, according to an embodiment of the present disclosure;
FIGs. 9A and 9B are illustrations for describing the shapes of screens;
FIGs. 10A, 10B, and 10C are illustrations for describing a light receiver;

FIG. 11 is an illustration of an augmented reality (AR) overlaid image displayed;
FIGs. 12A and 12B are illustrations for describing a drive voltage and a deflection angle sensitivity of the light deflector;
FIG. 13 is an illustration of a configuration for correcting an image according to the first embodiment.
FIG. 14 is a front view of a holder of a screen;
FIG. 15 is a perspective view of the holder in FIG. 14;
FIGs. 16A, 16B, and 16C are illustrations for describing detection of a scanning position;
FIG. 17 is a block diagram of a functional configuration of a controller according to the first embodiment;
FIG. 18 is a flowchart of image position adjustment processing and image size adjustment processing;
FIGs. 19A, 19B, and 19C are illustrations for describing a method of detecting an initial value;
FIGs. 20A, 20B, and 20C are illustrations for describing a method of detecting the amount of misalignment;
FIGs. 21A, 21B, 21C, and 21D each is a graph of a detection signal of irradiation light received by the light receiver;
FIG. 22 is a graph of scanning angles and drive voltage in the sub-scanning direction according to an embodiment of the present disclosure;
FIG. 23 is a diagram illustrating a configuration according to a variation of the embodiment in FIG. 13;
FIG. 24 is a graph of scanning angles and drive voltage in the sub-scanning angle according to the variation in FIG. 23;
FIGs. 25A, 25B, and 25C each is a diagram illustrating a method of detecting an initial value according to a variation of the embodiment illustrated in FIG. 19A, 19B, and 19C;
FIGs. 26A, 26B, and 26C each is a diagram illustrating a method of detecting the amount of misalignment according to a variation of the embodiment illustrated in FIG. 20A, 20B, and 20C;
FIGs. 27A, 27B, and 27C each is a diagram illustrating a method of detecting an initial value according to a second variation of the embodiment illustrated in FIG. 19A, 19B, and 19C;
FIGs. 28A, 28B, and 28C each is a diagram illustrating a method for detecting the amount of misalignment according to a second variation of the embodiment illustrated in FIG. 20A, 20B, and 20C;
FIG. 29 is a graph of the relation between the position and amount of shift in the sub-scanning direction according to the second variations illustrated in FIGs. 27A to 27C and 28A to 28C;
FIG. 30 is an illustration of a configuration for correcting an image according to a second embodiment;
FIGs. 31A and 31B are illustrations for describing a correction of an image size;
FIGs. 32A and 32B are illustrations for describing a correction of an image position;
FIG. 33 is a graph indicating the relation of a parameter K and a position of the edge of the light receiver in the sub-scanning direction;
FIG. 34 is an illustration of the position of the light receiver according to a first variation of the second embodiment;
FIG. 35 is an illustration of the position of the light receiver according to a second variation of the second embodiment;
FIG. 36 is a flowchart for describing an example of a control of correction of an image size;
FIG. 37 is an illustration of a configuration for correcting an image according to a third embodiment;
FIG. 38 is an illustration of examples of a display image according to a calculation formula of an image position shift amount;
FIGs. 39A and 39B are illustrations of a configuration for correcting an image according to a fourth embodiment;
FIG. 40 is an illustration of a display image area according to the second embodiment; and
FIG. 41 is an illustration of a display image area according to the third embodiment; and
FIG. 42 is an illustration of a display image area according to the fourth embodiment; and
FIG. 43 is a table for comparing the display image areas according to the second to fourth embodiments.

The accompanying drawings are intended to depict embodiments of the present invention and should not be interpreted to limit the scope thereof. The accompanying drawings are not to be considered as drawn to scale unless explicitly noted.

DETAILED DESCRIPTION

The terminology used herein is for the purpose of describing particular embodiments only and is not intended to be limiting of the present invention. As used herein, the singular forms "a", "an" and "the" are intended to include the plural forms as well, unless the context clearly indicates otherwise.
In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.
Embodiments of the present disclosure are described with reference to the drawings. In the description of the drawings, the same elements are denoted by the same reference numerals, and redundant description is omitted.
FIG. 1 is an illustration of an example configuration of a display system according to a first embodiment of the present disclosure. In the display system 1, the viewer 3 can visually identify a display image as the projection light PL that is projected from a display device 100 is projected onto a transmissive reflector. The display image is an image that is superimposed and displayed as a virtual image 45 on the field of view of the viewer 3. For example, the display system 1 is provided for a mobile object such as a vehicle, an aircraft, and a ship, or an immobile object such as a maneuvering simulation system, and a home-theater system. In the present embodiment, cases in which the display system 1 is provided on a vehicle as an example of a mobile object is described. However, no limitation is intended thereby, and the type of usage of the display system 1 is not limited to the present embodiment.

For example, the display system 1 is mounted in a vehicle, and makes navigation information visible to the viewer 3 (i.e., the driver) through a windshield 50 of the vehicle. The navigation information includes, for example, the information about the speed of the vehicle, the course information, the distance to a destination, the name of the current place, the presence or position of an object ahead of the vehicle, a traffic sign indicating, for example, speed limit, and traffic congestion, and aids the driving of the vehicle. In such cases, the windshield 50 serves as a transmissive reflector that transmits a portion of the incident light and reflects at least some of the remaining incident light. The distance between the location of the eyepoint of the viewer 3 and the windshield 50 is about several tens of centimeters (cm) to one meter (m).

The display system 1 includes the display device 100, an extraneous light sensor 20, and a windshield 50. For example, the display device 100 is a heads-up display (HUD) provided for a vehicle as an example of the mobile object. The display device 100 may be arranged at any desired position in conformity with the interior design of the vehicle. For example, the display device 100 according to the present embodiment may be disposed under a dashboard 200 of the vehicle or built into the dashboard of the vehicle.

Moreover, the display device 100 includes an image forming unit 10, a free-form surface mirror 30, and a housing 90. The image forming unit 10, which is an example of an optical scanner, includes a light-source device 11, a unit housing 12, a light deflector 13, a mirror 14, and a screen 15. The extraneous light sensor 20 is a sensing device that is disposed to detect, for example, the illuminance as the intensity of extraneous light of the display system 1. As illustrated in FIG. 1, for example, the extraneous light sensor 20 is arranged near the windshield 50.

The light-source device 11 that is an example of a light source is a device that emits the laser beams emitted from a light source to an area outside the device. For example, the light-source device 11 may emit laser beams in which three-color laser beams of red, green, and blue (RGB) are combined. The laser beams that are emitted from the light-source device 11 are guided to the reflection plane of the light deflector 13. For example, the light-source device 11 has a semiconductor light-emitting element such as a laser diode (LD) that serves as a light source. However, no limitation is intended thereby, and the light source may be a semiconductor light-emitting element such as a light-emitting diode (LED).

The light deflector 13 as an example of a light deflector uses, for example, a micro-electromechanical systems (MEMS) to change the directions of travel of the laser beams. For example, the light deflector 13 is configured by a scanner such as a mirror system composed of one minute MEMS mirror that pivots around two axes orthogonal to each other or two MEMS mirrors that pivot or rotates around one axis. The laser beams that are emitted from the light deflector 13 scans the mirror 14. The light deflector 13 is not limited to a MEMS mirror, but may be configured by a polygon mirror or the like.

For example, the mirror 14 is a concave mirror, and reflects the laser beams, which are deflected by the light deflector 13 and scan the reflection plane of the mirror 14, towards the screen 15.

A two-dimensional intermediate image (image light) is formed on the screen 15, which serves as an image forming unit, as the laser beams reflected by the reflection plane of the mirror 14 scan the surface of the screen 15. Note also that the screen 15 serves as a divergent part through which the scanned laser beams diverge at a predetermined divergence angle. For example, the screen 15 may consist of an exit pupil expander (EPE), and may be configured by a transmissive optical element such as a microlens array (MLA) or diffuser panel that diffuses light. Alternatively, the screen 15 may be configured by a reflective optical element such as a micromirror array that diffuses light.

The light-source device 11, the light deflector 13, the mirror 14, and the screen 15 are stored in the unit housing 12, and serve as a part of the image forming unit 10. The screen 15 is not covered by the unit housing 12 in its entirety such that the diverging light diverging through the screen 15 can be emitted outside the image forming unit 10, but is partially held by the unit housing 12. The unit housing 12 may be a single unit of three-dimensional object, or may be configured by a combination of a plurality of members. As an example configuration or structure in which a combination of a plurality of members are combined, the unit housing 12 may be configured by a combination of a plurality of members including the light-source device 11, the light deflector 13, the mirror 14, a three-dimensional object that covers the optical path in its entirety, and a holder or the like that holds the screen 15.

The virtual image 45 is a magnified view of the intermediate image that is formed on the screen 15, and such a virtual image is achieved as the laser beams (light flux) that are the light diverging through the screen 15 are projected onto the free-form surface mirror 30 and the windshield 50. The free-form surface mirror 30 is designed and arranged so as to cancel, for example, the inclination of the image, the distortion of the image, and the displacements of the image, which are caused by the bent shape of the windshield 50. The free-form surface mirror 30 may be arranged in a pivotable manner around a rotation axis 301. For example, the rotation axis 301 passes through the center of gravity of the free-form surface mirror 30, and the free-form surface mirror 30 is rotated on a straight line parallel to the direction orthogonal to the sheet of FIG. 1 to change the position at which the virtual image 45 is displayed in the up-and-down directions on the sheet of FIG. 1. Due to such a configuration, the free-form surface mirror 30 can adjust the reflection direction of the laser beams (light flux) emitted from the screen 15 to change the position at which the virtual image 45 is displayed according to the positions of the eyes of the viewer (driver) 3.

The free-form surface mirror 30, which is an example of an imaging optical system, reflects the diverging light to project the projection light PL in order to form a virtual image with the light diverging through the screen 15. Due to this configuration, the free-form surface mirror 30 is designed using, for example, a commercially available optical design simulation software, such that the free-form surface mirror 30 has a certain level of light-gathering power to achieve a desired image-forming position of the virtual image 45. In the display device 100, the light-gathering power of the free-form surface mirror 30 is designed such that the virtual image 45 is displayed at a position away from the location of the eyepoint of the viewer 3 in the depth direction by, for example, at least 1 m and equal to or shorter than 30 m (preferably, equal to or shorter than 10 m).

The imaging optical system is satisfactory as long as it includes at least one light-concentrating element that has a light-concentrating function. Such a light-concentrating element that has a light-concentrating function is not limited to a free-form surface mirror like the free-form surface mirror 30, and may be, for example, a concave mirror, a curved-surface mirror, and a Fresnel reflector element. For example, such a light-concentrating element is formed by performing sputtering or vapor deposition on a thin metal film such as of aluminum (Al) and silver (Ag) with high reflectivity. Due to such a configuration, the utilization efficiency of the light incident on a light-concentrating element as the projection light PL can be maximized, and a virtual image with high brightness can be obtained.

The projection light PL that is reflected by the free-form surface mirror 30 is projected outside the display device 100 from a slit formed on the housing 90, and is incident on the windshield 50. As illustrated in FIG. 1, a hole H is formed on the housing 90 by a hole surrounding area 901. The hole surrounding area 901 is a part of the housing 90 around the hole H. The position and size of the hole H is determined depending on the size of the hole surrounding area 901 and the position at which the hole surrounding area 901 is arranged. In order to prevent a foreign substance from entering the housing 90 through the hole H, a dustproof window 40 is arranged so as to close the hole H. In particular, it is desired that the dustproof window 40 be made of a material through which the projection light PL can pass through.

The windshield 50 is an example of a reflector and serves as a transmissive reflector that transmits some of the laser beams (bundle of laser beams) and reflects at least some of the remaining laser beams (partial reflection). The windshield 50 may serve as a semitransparent mirror through which the observer 3 visually recognizes the virtual image 45 and the scenery ahead of the mobile object (vehicle). The virtual image 45 is an image to be displayed that is visually recognized by the viewer 3, including vehicle-related information (e.g., speed and travel distance), navigation information (e.g., route guidance and traffic information), and warning information (e.g., collision warning). For example, the transmissive reflector may be another windshield arranged in addition to the windshield 50.

The virtual image 45 may be displayed so as to be superimposed on the scenery ahead of the windshield 50. The windshield 50 is not flat but is curved. For this reason, the position at which the virtual image 45 is formed is determined by the curved surface of the free-form surface mirror 30 and the windshield 50. In some embodiments, the windshield 50 may be a semitransparent mirror (combiner) that serves as a separate transmissive reflector having a partial reflection function.

The plane of the free-form surface mirror 30 is designed and shaped so as to reduce the optical distortion that occurs on the windshield 50. The light beams that are incident on the free-form surface mirror 30 are reflected by the free-form surface mirror 30 according to the shape of the plane of the free-form surface mirror 30. The reflected bundles of laser beams (light flux) are then incident on the windshield 50, and reach at least one eyepoint within an eye-lip area including at least the eye-lip center (i.e., the reference eyepoint). The bundles of laser beams that are incident on the windshield 50 are reflected according to the shape of the surface of the windshield 50.

Due to such a configuration as above, the laser beams (light flux) that are emitted from the screen 15 are projected towards the free-form surface mirror 30. The projection light that is concentrated by the free-form surface mirror 30 passes through the hole H of the housing 90 and is projected towards the windshield 50, and is reflected by the windshield 50. Accordingly, the observer 3 can visually recognize the virtual image 45, i.e., the magnified image of the intermediate image formed on the screen 15, due to the light reflected by the windshield 50.

A method of projecting an image using the display device 100 may be implemented by a panel system or a laser scanning system. In the panel system, an intermediate image is formed by an imaging device such as a liquid crystal panel, a digital micromirror device (DMD) panel (digital mirror device panel), or a vacuum fluorescent display (VFD). In the laser scanning system, an intermediate image is formed by scanning the laser beams emitted from the light-source device 11, using an optical scanner.

The display device 100 according to the first embodiment of the present disclosure adopts the laser scanning system. In particular, in the laser scanning system, since emitting/non-emitting can be assigned to each pixel, in general, a high-contrast image can be formed. In some alternative embodiments, the panel system may be adopted as the projection system in the display device 100.

FIG. 2 is a block diagram of a hardware configuration of the display device according to the first embodiment. The hardware configuration illustrated in FIG. 2 may be adopted in common among the embodiments of the present disclosure. Alternatively, some components or elements may be added to or deleted from the hardware configuration of FIG. 2.

The display device 100 includes a controller 17 that controls the operation of the display device 100. For example, the controller 17 is a circuit board or integrated circuit (IC) chip mounted inside the display device 100. The controller 17 includes a field-programmable gate array (FPGA) 1001, a central processing unit (CPU) 1002, a read only memory (ROM) 1003, a random access memory (RAM) 1004, an interface (I/F) 1005, a data bus line 1006, a laser diode (LD) driver 1008, a micro-electromechanical systems (MEMS) controller 1010, and a motor driver 1012. The controller 17 is an example of a control unit.

The FPGA 1001 is an integrated circuit whose setting can be changed by a designer of the display device 100. The LD driver 1008, the MEMS controller 1010, and the motor driver 1012 generate a drive signal according to the control signal output from the FPGA 1001. The CPU 1002 is an integrated circuit that controls the entirety of the display device 100. The ROM 1003 is a storage device that stores a computer executable program for controlling the CPU 1002. The RAM 1004 is a storage device that serves as a work area of the CPU 1002.

The interface 1005 communicates with an external device. For example, the interface 1005 is coupled to the controller area network (CAN) of a vehicle Moreover, the interface 1005 is coupled to, for example, the extraneous light sensor 20. The extraneous light sensor 20 sends the sensing data (i.e., the intensity of the extraneous light) to the controller 17 through the interface 1005. Note also that the sensor that is coupled to the interface 1005 is not limited to the extraneous light sensor 20, and other various kinds of sensors for acquiring the internal and external information of the vehicle may be coupled to the interface 1005.

The LD driver 1008 is a circuit that generates a drive signal for driving the light-source device 11. For example, the LD driver 1008 generates a drive signal for a semiconductor light-emitting element LD that configures a part of the light-source device 11. The MEMS controller 1010 is a circuit that generates a drive signal for driving the light deflector 13. For example, the MEMS controller 1010 generates a drive signal for driving the MEMS that is a device for moving a scanning mirror that configures a part of the light deflector 13. The motor driver 1012 is a circuit that generates a drive signal for driving various kinds of motors. For example, the motor driver 1012 generates a drive signal for driving the motor 1011 that rotates the rotation axis 301 of the free-form surface mirror 30.

FIG. 3 is a diagram illustrating a specific configuration of the light-source device 11 according to the first embodiment of the present disclosure. The light-source device 11 includes light-source elements 111R, 111G, and 111B (these light-source elements may be referred to simply as a light-source element 111 in the following description when it is not necessary to distinguish each of the light-source elements), coupling lenses (collimators) 112R, 112G, and 112B, apertures 113R, 113G, and 113B, combiners 114, 115, and 116, an optical branching element 117, a lens, and a photosensor.

For example, each of the light-source elements 111R, 111G, and 111B of three colors (red, green, and blue (RGB)) is a laser diode (LD) having a single or a plurality of light-emitting points. Each of the light-source elements 111R, 111G, and 111B emits laser beams whose light intensity depends on the amount of changes in the drive current that is supplied to each of the light-source elements. The light-source elements 111R, 111G, and 111B emit bundles of laser beams (light flux) having different wavelengths $\lambda R$, $\lambda G$, and $\lambda B$, respectively. For example, $\lambda P=640$ nanometers (nm), $\lambda G=530$ nm, and $\lambda B=445$ nm.

The emitted bundles of laser beams (light flux) are coupled by the coupling lenses 112R, 112G, and 112B, respectively. The coupled bundles of laser beams (light flux) are shaped by the apertures 113R, 113G, and 113B, respectively. The shape of the apertures 113R, 113G, and 113B may be various kinds of shape such as a circle, an ellipse, a rectangle, and a square depending on, for example, certain predetermined conditions such as the divergence angle of the bundles of laser beams (light flux).

The laser beams (light flux) that are shaped by the apertures 113R, 113G, and 113B are combined by the three combiners 114, 115, and 116, respectively. The combiners 114, 115, and 116 are plate-like or prismatic dichroic mirrors, and reflect or transmit the laser beams (light flux) therethrough according to the wavelength of the laser beams to combine the laser beams into one bundle of laser beams (light flux) that travels along one optical path. Then, the combined light flux enters the optical branching element 117.

Some of the light that has entered the optical branching element 117 passes through the optical branching element 117, and different some of the light that has entered the optical branching element 117 is reflected by the optical branching element 117. In other words, the combined laser beams (light flux) are branched into transmitted light and reflected light by the optical branching element 117.

The transmitted light passes through the lens, and the light deflector 13 is irradiated with the transmitted light.

As a result, the transmitted light is used to draw an image or display a virtual image on the screen 15. In other words, the transmitted light is used as light for projecting an image.

On the other hand, the photosensor is irradiated with the reflected light. The photosensor outputs an electrical signal according to the light intensity of the received laser beams. For example, the output electrical signal is output to the FPGA 1001, and may be used to control the display system 1. As described above, according to the present embodiment, the reflected light is used as monitoring light that adjusts the intensity of the laser beams or monitoring light that adjusts the color or brightness of the resultant virtual image.

FIG. 4 is a diagram illustrating a specific configuration of the light deflector 13 according to the first embodiment of the present disclosure. The light deflector 13 is a MEMS mirror produced by semiconductor processing, and includes a mirror 130, a serpentine beam 132, a frame 134, and a piezoelectric member 136. The light deflector 13 is an example of a light deflector.

The mirror 130 has a reflection plane that reflects the laser beams emitted from the light-source device 11 towards the screen 15 side. In the light deflector 13, a pair of serpentine beams 132 are formed across the mirror 130. Each of the pair of serpentine beams 132 has a plurality of turning portions. Each of these turning portions is configured by a first beam 132a and a second beam 132b that are arranged alternately. Each of the pair of serpentine beams 132 is supported by the frame 134. The piezoelectric member 136 is disposed such that the first beam 132a and the second beam 132b, which are adjacent to each other, are coupled to each other. The piezoelectric member 136 applies different levels of voltage to the first beam 132a and the second beam 132b to bend each of the first beam 132a and the second beam 132b differently.

As a result, the first beam 132a and the second beam 132b, which are adjacent to each other, bend in different directions. As the bending force is accumulated, the mirror 130 rotates in the vertical direction around the horizontal axis. Due to such a configuration as above, the light deflector 13 can perform optical scanning in the vertical direction at a low voltage. An optical scanning in the horizontal direction around the axis in the vertical direction is implemented by the resonance produced by a torsion bar or the like coupled to the mirror 130.

FIG. 5 is an illustration of an example of a specific configuration of a screen according to the first embodiment. The screen 15 forms an image of the laser light emitted from the LD 1007 that forms a part of the light-source device 11. The screen 15 serves as a divergent part that diverges the laser beams at a predetermined divergence angle. The screen 15 as illustrated in FIG. 5 has a microlens-array structure in which a plurality of hexagonal-shaped microlenses 150 are arranged with no gap therebetween. For example, the width of each of the microlenses 150 (the distance between two sides that face each other) is optimized to a ranged from 50 micrometers ($\mu$m) to 300 $\mu$m. In the present embodiment, the width of each of the microlenses 150 is approximately 200 $\mu$m. As the microlenses 150 of the screen 15 have a hexagonal shape, the multiple microlenses 150 can be arrayed with high density.

Note that the shape of each microlens 150 is not limited to the hexagon shape. Thus, alternatively, in some embodiments, each microlens 150 has, for example, a rectangular shape, or a triangle shape. In the present embodiment, structure in which the multiple microlenses 150 are arrayed in a regularized manner is described. However, no limitation is intended thereby, and the arrangement of the microlenses 150 is not limited to this structure. For example, the centers of the multiple microlenses 150 may be decentered from each other, and the microlenses 150 may be arranged in an irregular manner. When adopting such an eccentric arrangement, each microlens 150 has a different shape.

Alternatively, the height of the vertex in the optical-axis direction may be changed. When the decentering in the direction in which microlenses are arrayed or the shifting in the optical-axis direction is determined on a random basis, for example, the speckles that are caused by the interference of the laser beams that have passed through the boundary between each pair of neighboring microlenses and the moire that is caused by the cyclic array can be reduced.

The laser beams that have reached the screen 15 scan the inside of the microlenses 150, and multiple dots are marked as the laser beams are switched on and off during the scanning. For example, the levels of gradation can be expressed by a combination of on-off control of light. Alternatively, the levels of gradation may be expressed by adjusting the radiation intensity of the laser beams.

FIGs. 6A and 6B are illustrations for describing a difference in action due to the difference in incident-light-beam diameter and lens diameter in a microlens array. As illustrated in FIG. 6A, the screen 15 is configured by an optical plate 151 in which the multiple microlenses 150 are neatly arranged. When an incident light 152 is scanned on the optical plate 151, the incident light 152 diverges as passing through the microlenses 150, and the incident light 152 becomes a diverging light 153. Due to the structure of the microlenses 150, the screen 15 can diverge the incident light 152 at a desired divergence angle 154. The intervals 155 at which the microlenses 150 are arranged is designed to be wider than the diameter 156a of the incident light 152. Accordingly, the screen 15 does not cause interference among the lenses, and does not cause speckles (speckle noise).

FIG. 6B is a diagram illustrating the optical paths of diverging light beams when the diameter 156b of the incident light 152 is twice wider than the intervals 155 at which the microlenses 150 are arranged. The incident light 152 is incident on two microlenses 150a and 150b, and these two microlenses 150a and 150b produce two diverging light beams 157 and 158, respectively. In such cases, a light interference might occur because two diverging light beams exist in an area 159. Such an interference between two diverging light beams (coherent light) is visually recognized as a speckle by an observer.

In view of the above circumstances, the intervals 155 at which the microlenses 150 are arranged is designed to be wider than the diameter 156 of the incident light 152 in order to reduce the speckles. A configuration with convex lenses is described above with reference to FIGs. 6A and 6B. However, no limitation is indicated thereby, and advantageous effects can be expected in a similar manner in a configuration with concave lenses.

As described above with reference to FIG. 5, FIG. 6A, and FIG. 6B, the screen 15 that is an example of an image forming unit serves as a divergent part through which the scanned laser beams diverge at a predetermined divergence angle. Due to this functionality, the driver (viewer) 3 can recognize an image in the range of the eye box. Thus, even when the driver (viewer) 3 who is seated on the driver's seat changes the positions of his/her eyes to some extent, his/her visually-recognizable range can be secured.

As described above, it is desired that the shape of each one of the microlenses 150 has a certain level of precision such that the light appropriately diverges through the screen 15 provided with the microlenses 150. Further, preferably, the screen 15 can be mass-produced. For this reason, for example, the screen 15 is molded by resin material. A concrete example of resin that satisfies the reflection property or optical property required for the microlenses 150 may include methacrylic resin, polyolefin resin, polycarbonate, and cyclic polyolefin resin. However, no limitation is intended thereby.

FIG. 7 is an illustration for describing the relation of a mirror and a scanning range of the light deflector 13. The FPGA 1001 of the controller 17 controls the light-emission intensity, the timing of light emission, and the light waveform of the multiple light-source elements in the light-source device 11. The LD driver 1008 drives the multiple light-source elements of the light-source device 11 to emit laser beams. As illustrated in FIG. 7, the laser beams that are emitted from the multiple light-source elements and whose optical paths are combined are two-dimensionally deflected about the $\alpha$ axis and the $\beta$ axis by the mirror 130 of the light deflector 13, and the screen 15 is irradiated with the laser beams deflected by the mirror 130, which serve as scanning beams. In other words, the screen 15 is two-dimensionally scanned by main scanning and sub-scanning by the light deflector 13.

As described with reference to FIG. 1, in the present embodiment, the mirror 14 is provided on the optical path between the light deflector 13 and the screen 15. That is, the scanning light from the light deflector 13 two-dimensionally scans the mirror 14 and the reflected light from the mirror 14 scans the two-dimensionally on the screen 15 as the scanning light.

In the present embodiment, the entire area to be scanned by the light deflector 13 may be referred to as a scanning range. The scanning beams scan (two-way scans) the scanning range of the screen 15 in an oscillating manner in the main scanning direction (X-axis direction) at a high frequency of about 20,000 to 40,000 hertz (Hz) while one-way scanning the scanning range of the screen 15 in the sub-scanning direction (Y-axis direction) by a predetermined amount. The scanning in the sub-scanning direction is performed at a frequency of about a few tens of Hz, which is lower than the frequency in the main scanning direction. In other words, the light deflector 13 performs raster scanning on the screen 15. In this configuration, the display device 100 controls the light emission of the multiple light-source elements according to the scanning position (the position of the scanning beam). Accordingly, an image can be drawn on a pixel-by-pixel basis and a virtual image can be displayed.

As described above, a two-dimensional scanning area is formed on the plane including the surface of the screen 15 every time raster scanning is performed one time. In other words, a two-dimensional scanning area is formed on the plane including the surface of the screen 15 for every sub-scanning cycle that is a predetermined cycle. The scanning area that is formed every time raster scanning is performed one time may be referred to as a scanning frame. As described above, the sub-scanning frequency is about a few tens of hertz (Hz). Accordingly, the length of time it takes for a scanning area to be formed on the screen 15 every sub-scanning cycle, i.e., the length of time to scan one scanning frame (one cycle of two-dimensional scanning), is a few tens of millisecond (msec). For example, assuming that the main-scanning cycle and the sub-scanning cycle are 20,000 Hz and 50 Hz, respectively, the length of time to scan one frame in one cycle of two-dimensional scanning is 20 msec with reference to the sub-scanning frequency.

FIG. 8 is an illustration of an example of a trajectory of a scanning line when two-dimensional scanning is performed, according to an embodiment of the present disclosure. As illustrated in FIG. 8, the screen 15 includes a display image area 15R1 and a non-image area 15R2. The display image area 15R1 is irradiated with the light that is modulated according to the image information, and an intermediate image is drawn on the display image area 15R1. The non-image area 15R2 is a frame-shaped area that surrounds the display image area 15R1.

The scanning area 15R3 is a combined range of the display image area 15R1 and the non-image area 15R2 on the screen 15. In FIG. 8, the track of the scanning in the scanning range and a plurality of main scanning lines, which is a linear track of scanning in the main scanning direction, are drawn in the sub-scanning direction, and form a zigzag line. For the sake of explanatory convenience, the number of main-scanning lines in FIG. 8 is less than the actual number of main-scanning lines. In FIG. 8, the track of the scanning is a zigzag line where the ends of the main scanning lines are contiguous to each other. However, no limitation is intended therein. In other words, the main scanning lines may be parallel to each other, and the ends of the main scanning lines may be not continuous. The main scanning lines may be formed by the two-way scanning as illustrated in FIG. 8, or may be formed by repeated one-way scanning.

Further, the screen 15 includes a detection image field G that includes a light receiver disposed at the edges of the display image area 15R1 (a part of the non-image area 15R2) in the scanning range. In FIG. 8, the detection image area G is disposed on the -X and +Y side of the display image area 15R1. More specifically, the detection image area G is disposed at a corner on the +Y side. The light detection sensor 60 is disposed at a position where the scanning light incident on the detection image area G is detected. When the scanning light is detected by the light detection sensor 60, the light detection sensor 60 outputs a light signal to the FPGA 1001. The light detection sensor 60 has a light receiver, such as a photodiode, and is fixed and disposed on a part of the screen 15 or a part of the unit housing 12, for example. The FPGA 1001 detects the operation of the light deflector 13 based on the timing at which the signal is received. Accordingly, the start timing of scanning or the end timing of scanning can be determined.

In other words, the track of scanning line where a plurality of main scanning lines are drawn in the sub-scanning direction, which is linear track of scanning in the main scanning direction, is formed in the scanning range. In the display image area 15R1 of the scanning range, a display image to be presented to a user is formed by the track of scanning line where a plurality of main scanning lines, which are linear track of scanning in the main scanning direction, are drawn in the sub-scanning direction. For example, the display image is a still image (frame) that makes up the input moving images (video data). In the following description, the area within the display image area 15R1 in a scanning frame may be referred to as a scanning-frame image.

All the cycles in which a scanning frame and a scanning-frame image are formed corresponds to the sub-scanning cycle. A scanning-frame image is sequentially formed based on the image data for every sub-scanning cycle, and the virtual image 45 is drawn. Due to such a configuration, the viewer 3 who observes the virtual image 45 that is sequentially displayed can visually recognize the virtual image 45 as moving images.

As described above, the screen 15 is configured by a transmissive optical element such as the microlens array that diffuses light. However, no limitation is intended therein. In some embodiments, the screen 15 may be a reflective element such as a micromirror array that diffuses light, depending on the design or layout of the display device 100. Alternatively, in some embodiments, the screen 15 may be a flat plate or curved plate that does not diffuse light.

In the embodiments of the present disclosure as described above, the formation of the scanning area 15R3 is described on condition that the scanning light that is emitted from the light deflector 13 scans the plane that includes a surface of the screen 15. However, no limitation is intended therein. For example, when a mirror 14 is disposed on the optical path between the light deflector 13 and the screen 15, the scanning area 15R3 is formed on the mirror 14. Further, when another type of reflecting mirror is disposed on the optical path between the light deflector 13 and the screen 15, the scanning area 15R3 is formed also on the reflecting mirror or the plane that is scanned by the scanning light reflected by the reflecting mirror.

At least, the display image area 15R1 is formed on the screen 15 in the end, but it is not necessary for all the scanning area 15R3 to reach the plane that includes the surface of the screen 15. For example, the detection image area G may be designed to be detected by the light detection sensor 60 provided before reaching the plane including the screen 15. Alternatively, the optical path may be changed before reaching the plane including the screen 15, and the detection image area G is detected by the light detection sensor 60 disposed in the changed optical path.

The shape of the screen 15 and the shape of the display image area 15R1 are not limited to the shape as illustrated in FIG. 8. The display image area 15R1 does not need to be a flat rectangular shape as illustrated in FIG. 8. The display image area 15R1 may have a curved surface. Alternatively, the display image area 15R1 may have a rectangular or polygonal shape different from the rectangular shape of the screen 15.

For example, the shape of the display image area 15R1 may be determined by the shape of a portion (i.e., a holder or the like) of the unit housing 12 that holds the screen 15. In other words, when the screen 15 is held by the unit housing 12 or a holder of the screen 15, which is a part of the unit housing 12, so as to cover the non-image area 15R2, the light incident on the held portion is blocked by the unit housing 12 and the free-form surface mirror 30 is not irradiated with the light. Accordingly, the free-form surface mirror 30 is irradiated with the diverging light from the intermediate image of the display image area 15R1. As described above, the virtual image 45 of a desired shape is formed by determining the shape of the display image area 15R1.

FIGs. 9A and 9B are illustrations for describing the shapes of the screen 15. The following describes the effect of the difference in the distance between the arrival positions of the light deflector 13 and the screen 15 due to the shape of the screen 15 on the image, with reference to FIGs. 9A and 9B.

FIG. 9A is an illustration of the case in which the screen 15 is flat. FIG. 9B is an illustration of the case in which the screen 15 is curved. More specifically, the screen 15 in FIG. 9B has a concave surface facing the mirror 130.

In the case of the flat-screen in FIG. 9A, the intermediate image 25 is distorted due to the difference in the distance between the arrival positions of the light deflector 13 and the screen 15. In addition, the beam spot diameter varies depending on the arrival position. When such light beams are formed as the virtual image 45 through the observation optical system constituted by the free-form surface mirror 30, the windshield 50, and the like, the image quality might decrease. An optical element for correcting such distortion of images and variation in spot diameter might be disposed between the light deflector 13 and the to-be-scanned surface 22, but this leads to an increase in HUD size and cost.

By contrast, curving the screen 15 as illustrated in FIG. 9B can reduce the difference in the above-described distance. Accordingly, the distortion of the intermediate image 25 and the variation of the beam spot diameter can be reduced as compared with the case of the flat screen. Thus, the image quality of the virtual image 45 can be improved without increasing the size of the HUD or increasing the cost.

As described with reference to FIG. 1, in the present embodiment, the mirror 14 is provided on the optical path between the light deflector 13 and the screen 15. That is, the scanning light from the light deflector 13 two-dimensionally scans the mirror 14 and the reflected light from the mirror 14 scans the two-dimensionally on the screen 15 as the scanning light.

The configuration of the light detection sensor 60 will be described with reference to FIGs. 10A, 10B, and 10C. As described above, the light detection sensor 60 includes a light receiver 61 (an example of a photosensor) and a signal line 62. The light receiver 61 is, for example, a photodiode that converts an optical signal into an electric signal. When the laser beam scans the light receiving surface of the light receiver 61, a pulse signal waveform is obtained. A detection field in which the light receiver 61 detects the irradiation light (the light emitted from the light-source device) is equal to an area of the light receiver 61, and such a detection field may be smaller than the area of the light receiver 61.

FIG. 10A is an illustration of the configuration of the light detection sensor 60. As described above, the light detection sensor 60 includes the light receiver 61 and the signal line 62. The light receiver 61 is, for example, a photodiode that converts an optical signal into an electric signal. The light receiver 61 has two divided surfaces to receive light, which are light-receiving surfaces 611 and 612. The light-receiving surface 611 has a smaller width in the main scanning direction than the light-receiving surface 612 does. The signal line 62 has a signal line 621 for outputting a signal from the light-receiving surface 611 and a signal line 622 for outputting a signal from the light-receiving surface 612.

FIG. 10B is a graph of a signal output when scanning laser light moves in a direction from the light-receiving surface 611 to the light-receiving surface 612. More specifically, FIG. 10B indicates two types of signals output from the light-receiving surfaces 611 and 612 when the scanning is performed in a direction from the light-receiving surface 611 to the light-receiving surface 612 having a larger width in the scanning direction. As illustrated in FIG. 10B, when the scanning of the laser beam is performed, a pulse signal having a width corresponding to the time it takes for the laser light to pass through each light-receiving surface. Thus, the timing at which light has passed through the light-receiving surface can be detected using the pulse signal.

FIG. 10C is an illustration of a pulse signal waveform obtained based on the intersecting timing of the two signals in FIG. 10B. More specifically, a signal as illustrated in FIG. 10C is output based on the intersecting timing so as to obtain a pulse signal waveform when the laser light scans on the photodiode.

The absolute value of an output signal value of the pulse signal changes with the amount of light incident on one photodiode varies. Accordingly, the timing at which the light passes through the light-receiving surface might be shifted at the time of detection even if the light receiver is scanned at the same timing. In view of such a situation, when the fluctuation of the amount of incident light is significant, the intersecting timing of the two signals as illustrated in FIG. 10C is used so as to achieve high-accuracy detection.

In the above-described embodiment, the case where the light detection sensor provided with two divided light-receiving surfaces is used is described. However, no limitation is intended thereby. In some examples, the light-receiving surface may not be divided. In this case, as illustrated in FIG. 10B, the point in time at which the output signal value exceeds a predetermined threshold value is detected as the timing at which light has passed through the light-receiving surface.

The following describes an example in which the two-dimensional scanning device described above is mounted on a vehicle. FIG. 11 is an example of a displayed image when the display device 100 is mounted on a vehicle as a HUD. A typical example case where the display device 100 is used is to display navigation information such as the speed, mileage, and destination of a vehicle in the field of view of the viewer 3. In recent years, for the purpose of enhancing driving safety, there has been a demand for the HUD to superimpose a display image over a real object, that is, provide the AR superimposition.

For example, as illustrated in FIG. 11, the display AR1 or AR2 such as a highlighted display is AR superimposed on the vehicle D1 and the boundary line D2, which are objects to be recognized by the viewer 3 during the driving, by the HUD. This induces the visual recognition of the viewer 3. For example, when such an AR superimposition is provided, it is more desired that an image be displayed at a proper position with a larger image size in the future. However, during the formation of an image by the two-dimensional scanning of the light deflector 13, an image size and an image-forming position might fluctuate with the environmental temperature or over time, and thus a desired image cannot be obtained.

FIGs. 12A and 12B are illustrations of the change in the sensitivity of the mirror 130 with respect to the drive voltage over time.

When an MEMS mirror is used as the mirror 130 as an example, the deflection angle of the mirror 130 with respect to the drive voltage for driving the MEMS mirror (deflection angle sensitivity with respect to the drive voltage of the MEMS mirror) changes with the environmental temperature and over time.

In other words, as illustrated in FIG. 12A, when the drive voltage for driving the MEMS mirror is constant, the deflection angle sensitivity of the mirror 130 decreases with time t2 with respect to the initial state t1. Accordingly, the size w2 of the virtual image 45 at time t2 is smaller than the size w1 of the virtual image 45 at the initial state t1 as illustrated in FIG. 12B. In the present embodiment, the case where the image size in the sub-scanning direction changes is described. However, no limitation is intended therein. The image size in the main scanning direction may change as well.

When the fixed state of each light source in the light deflector 13 and the light-source device 11 fluctuates within the two-dimensional scanning plane with the environmental temperature and over time, the image forming position of the intermediate image 25 formed on the screen 15 varies, and the image forming position of the virtual image 45 that is visually recognized by the viewer 3 in the end varies. Further, when the image forming positions of the red, blue, and green colors are independently changed, the images drawn in the respective colors are spatially shifted, so that the colored images are visually recognized.

FIG. 13 is an illustration of the configuration for correcting an image according to the first embodiment. FIG. 13 illustrates a display image area 15R1, non-image areas 15R51 and 15R52, the two-dimensional scanning area 15R3, an area 15R4 that is optically effective on the screen 15, the light receivers 61A and 61B (an example of first and second photosensors), the first detection image area G1, and the second detection image area G2. The symbol "L1" denotes the center of the main scanning amplitude of the two-dimensional scanning on the screen 15 by the light deflector 13, and the symbol "L2" denotes the center of the sub-scanning amplitude of the two-dimensional scanning on the screen 15 by the light deflector 13. The first and second detection fields in which the light receivers 61A and 61B detect the irradiation light are equal to the areas of the first and light receivers 61A and 61B, respectively, and such detection fields may be smaller than the areas of the light receivers 61A and 61B, respectively.

As illustrated in FIG. 13, the two-dimensional scanning area (the scanning area) 15R3 is extended to the outside of the display image area 15R1, and the light receivers 61A and 61B are disposed in the non-image areas 15R51 and 15R52, which are scanning ranges outside the display image area 15R1. The light receivers 61A and 61B are separated from each other in the main scanning direction.

The non-image areas 15R51 and 15R52 does not overlap with the display image area 15R1, but are arranged so as to overlap with the display image area 15R1 along the main scanning direction and the sub-scanning direction. Such an arrangement increases the display image area 15R1 as much as possible.

Further, the first detection image area G1 to be illuminated with laser light is provided as a certain area including the lower end of the light receiver 61A, and the second detection image area G2 to be illuminated with laser light is provided as a certain area including the lower end of the light receiver 61B in the sub-scanning direction.

The light receivers 61A and 61B are arranged at the same position in the sub-scanning direction, and the detection image areas G1 and G2 are also arranged at the same position in the sub-scanning direction.

Each of the first and second detection image areas G1 and G2 has a wider width in the main scanning direction than the width of each of the light receivers 61A and 61B in the main scanning direction. Scanning the light-receiving surface of the light receiver 61 in the main scanning direction by the laser light that scans the detection image area G enables the light receiver 61 to detect the scanning timing of the scanning light. Note that the first detection image area G1 is an example of a first irradiation area, and the second detection image area G2 is an example of a second irradiation area.

As the area on the light receiver 61 is illuminated with laser light, a light signal relating to the scanning state is obtained from the light receiver 61. Using such a signal regarding the scanning state, the controller 17 controls the driving of the light deflector 13 and the light-emission timing of the light-source device 11 so as to adjust the image forming position and the image size. The signal relating to the scanning state is, for example, a time interval to pass through the light receiver 61 or the number of scanning lines that has passed through the light receiver 61.

At this time, it is desirable that the display image area 15R1 be apart from the first and the second detection image areas G1 and G2 by a predetermined interval so as to prevent leakage of light from the first and second detection image areas G1 and G2 to the display image area 15R1. Further, it is also desirable that the size of the display image area 15R1 be smaller than or equal to the size of an optical effective area 15R4 of the screen 15. When there is no need to distinguish the first detection image area G1 and the second detection image area G2, the first detection image area G1 and the second detection image area G2 are sometimes collectively referred to as the detection image area G.

Note that the detection image (an image to be used for detection) formed in the detection image area G may be changed according to what is to be controlled. Further, the detection image may be formed at a predetermined scanning frame interval, or may be formed when a specific condition is satisfied. Further, the detection image may be formed with all of the light sources turned on, or with a specific light source turned on. Alternatively, any light source may be selected to be turned on for each scanning frame.

FIGs. 14 and 15 are illustrations of an example of a screen holder. FIG. 14 is a plan view of a holder 121 as a part of the unit housing 12, and FIG. 15 is a perspective view as seen from the opposite side of FIG. 14.

As illustrated in FIG. 14, the holder 121 is a holder for holding the screen 15 indicated by the dotted line. The light detection sensors 60A and 60B are provided in a part of the holder. The light detection sensors 60A and 60B includes light receivers 61A and 61B, and the light receivers 61A and 61B are provided at positions of the detection images G1 and G2. In FIG. 15, scanning light is emitted through an opening 122 in a direction from the rear side to the front side of the drawing sheet in which FIG. 15 is drawn. Thus, the shape of the display image area 15R1 is determined according to, for example, the shape of the opening 122.

FIG. 16A is an illustration of raster scan being performed on the light receiver 61. FIG. 16B is an illustration for describing the changes in the scanning position in the sub-scanning direction over time during the two-dimensionally scanning. FIG. 16C is an illustration of light signals obtained from the light receiver 61 through the second detection image area G2.

As illustrated in FIG. 16A, the raster scan is performed on the light receiver 61, and light signals are obtained as illustrated in FIG. 16C every time the scanning light passes through the light receiver 61. Accordingly, by counting the number of light signals obtained during the time period between the times to scan the detection image area G, the number of scanning lines that has passed through the light receiver 61 is counted. Adjustment of an image in the sub-scanning direction is performed based on the number of scanning lines (of light received by the light receiver) detected from the illuminated areas of the first and second detection image areas G1 and G2.

Although not described in detail herein, since the timing at which the laser light passes through the light receiver 61 can be detected, the image size and image position in the main scanning direction are controlled, and the drive parameter of the two-dimensional deflection element involved in driving in the main scanning direction is controlled.

FIG. 17 is a block diagram of a functional configuration of the controller 17 according to an embodiment. The controller 17 as a control unit includes an image adjuster 171, an image input unit 172, an image processor 173, and a detection image generation unit 174. For example, each functional configuration of the controller 17 is implemented by some of the elements illustrated in FIG. 2. In particular, the controller 17 may be implemented by the processing performed by the CPU 1002, the ROM 1003, the FPGA 1001, the LD driver 1008, the MEMS controller 1010, and the motor driver 1012, as well as a computer executable program stored in the ROM 1003.

The image adjuster 171 calculates a change in the image forming position and a change in the image size from the initial state based on the light signal output from the light receiver 61.

When the amount of change in the image forming position exceeds a predetermined value (amount), the adjustment signal generation unit 1711 sends an adjustment signal to a light source control unit 1712 so as to adjust the light emission timing of the light-source device 11 thus to adjust the image formation position.

Further, when the amount of change in the image size exceeds a predetermined value (amount), the adjustment signal generation unit 1711 sends an adjustment signal to a light deflector control unit 1713 so as to adjust a deflection angle of the light deflector 13 thus to adjust the image size.

The light source control unit 1712 controls the driving of the light-source device 11 based on the drive signal. Then, the light deflector control unit 1713 periodically controls the driving of the light deflector 13 based on the drive signal.

The image input unit 172 outputs image data for forming an image to the image processor 173. The image input unit 172 outputs image data for forming a display image that is to be displayed for the user, to the image processor 173. When the display device 100 is provided for a vehicle as a HUD, an image to be presented to a user includes, for example, the vehicle-related information (e.g., speed and travel distance) and external information (for example, position information from the global positioning system (GPS), routing information from a navigation system, or traffic information) of the vehicle received from an external network. However, no limitation is intended thereby, and an image to be presented to a user may be, for example, an image based on an image regenerative signal read from the television (TV), the Internet, or a recording medium.

The image processor 173 generates driving data for the light-source device 11 such as the timing at which laser beams are to be emitted and light-emission intensity (power of light emission), based on the generated image data. The generated driving data is output to the light source control unit 1712. Then, the image processor 173 generates driving data for the light-source device 11 such as the timing at which laser beams are to be emitted and light-emission intensity (power of light emission), based on the image data for forming an image to be presented to the user. The generated driving data is output to the light source control unit 1712.

When the image data output from the image input unit 172 is, for example, moving-image data, the image processor 173 generates driving data for forming a scanning frame image based on each of the frames constituting the moving image, that is, each image corresponding to one screen included in the moving image, so as to sequentially display virtual images 45. For example, one frame of the moving images may be displayed using the scanning-frame images in two continuous cycles of two-dimensional scanning.

The light source control unit 1712 controls the light emission (illumination control) of the light-source device 11 based on the driving data and the adjustment signal from the adjustment signal generation unit 1711.

The detection image generation unit 174 outputs the image data of a detection image to be received by the light receiver 61 to the image processor 173.

FIG. 18 is a flowchart for describing the image position adjustment processing and image size adjustment processing.

When the display device 10 is powered on, the controller 17 executes a startup mode to detect the amount of misalignment of an image relative to an initial value obtained in advance before shipment of the product, in step S101 (S101). The startup mode is a process performed before the regular operation mode. In the regular operation mode, the controller 17 controls the light-source device 11 to emit light based on the image information to form an image within the display image area 15R1 on the screen 15 at predetermined frame intervals. In the startup mode, the controller 17 does not form an image on the screen 15 by controlling the light-source device 11 to emit light based on image information.

The controller 17 determines whether the amount of misalignment of image detected in step S101 is greater than or equal to a certain value (S102). When it is determined that the amount of misalignment is greater than or equal to the certain value (Yes, in S102), the controller 17 adjusts the image position (S103).

When it is determined that the amount of misalignment is not greater than or equal to the certain value (No, in S102), the controller 17 determines that adjustment of the image position is needed. Then, the process proceeds to the regular operation mode. In the regular operation mode, the controller 17 executes the regular operation at predetermined frame intervals while displaying navigation information such as vehicle speed, mileage, and destination. Such an operation is repeated until the display device 10 is turned off. In the regular operation mode, the processes of steps S101 to S103 are not performed.

In the regular operation mode, the controller 17 detects the amount of variation in image size relative to the initial value obtained in advance before the shipping of the product (S104). Specifically, the controller 17 detects the amount of fluctuations in the number of scanning lines (light beams) received by the first illuminated area ($\Delta$NA), the amount of fluctuations in the number of scanning lines (light beams) received by the second illuminated area ($\Delta$NB), or the sum of $\Delta$NA and $\Delta$NB.

The controller 17 determines whether the amount of variation in the image size detected in step S104 is greater than or equal to a certain value (S105). When it is determined that the amount of variation in the image size is greater than or equal to the certain value (Yes in S105), the controller 17 adjusts the drive voltage of the mirror 130 of the light deflector 13 so as to adjust the image size (S106).

The adjustment of the image size is performed by the controller 17's control to maintain the detection value constant, so that the variation in the image size relative to the initial state can be reduced. The image size can be controlled by adjusting the drive voltage applied to the mirror 130. By arranging the detection image areas G1 and G2 as illustrated in FIG. 13, the size of the project image can be adjusted with high accuracy regardless of the position conditions of the light receivers.

When it is determined that the amount of variation in the image size is not greater than or equal to the certain value (No in S105), the controller 17 determines that adjustment of the image size is not needed. Then, the process proceeds to a next process.

The controller 17 checks whether the display device 10 is in use (S107). When it is determined that the display device 10 is in use (Yes in step S107), the process return to step S104 to perform the process at the predetermined frame intervals.

In the present embodiment, since the misalignment of image is detected and corrected at start-up of the device, the adjustment (control) of the image size may be prioritized at the regular operation. In the typical control operation, a process is performed to eliminate those caused by the misalignment of image. However, such a process is not performed in the operation of the present embodiments. For this reason, a higher resolution for the detection of the image size and and higher accuracy of the detection are obtained in the present embodiment than those in the typical operation.

Further, in the present embodiment, the image size is adjusted in the regular operation mode, and the image position is adjusted in the startup mode that is a timing different from the regular operation mode the image position is adjusted. With this configuration, the size and the position of the projection image can be adjusted with higher accuracy irrespective of the conditions for the position of the light receiver.

The adjustment of the image position may be performed in the inactive mode. The inactive mode is a mode in which a process is performed after the regular operation mode, and the controller 17 ceases to control the light-source device 11 to emit light based on image information to form an image on the screen 15.

FIGs. 19A, 19B, and 19C are illustrations for describing the method of detecting an initial value, which is performed in step S101 in FIG. 18.

As illustrated in FIG. 19A, the controller 17 first controls the light-source device 11 to emit light so that the amplitude of the scanning line 630 of the scanning light deflected by the light deflector 13 in the sub-scanning direction (Y direction in FIG. 19A) occurs only near the sub-scanning amplitude center L2. Since the controller 17 controls the light-source device 11 to emit light to illuminate the scanning area 15R3 as a whole of the scanning line 630, the detection image area G (irradiation area) to be irradiated with the light from the light-source device 11 is equal to the scanning area 15R3.

In this case, the scanning area 15R3 is sufficiently small in the sub-scanning direction, to not overlap with the detection field of the light receiver 61.

As illustrated in FIG. 19B, the controller 17 controls the light-source device 11 to emit light so that the amplitude of the scanning line 630 of the scanning light deflected by the light deflector 13 becomes larger. Since the controller 17 controls the light-source device 11 to emit light to illuminate the scanning area 15R3 as a whole of the scanning line 630, the detection image area G (irradiation area) to be irradiated with the light from the light-source device 11 is equal to the scanning area 15R3.

In FIG. 19B, the scanning area 15R3 reaches and overlap with the lower end 611 (an example of a first detection position) of the light receiver 61 (detection field) in the sub-scanning direction at the scanning angle θ1 in the sub-scanning direction. The controller 17 stores the drive voltage G1 for the mirror 130 of the light deflector 13 at this state, in the ROM 1003 or the like.

As illustrated in FIG. 19C, the controller 17 controls the light-source device 11 to emit light so that the amplitude of the scanning line 630 deflected by the light deflector 13 in the sub-scanning direction becomes larger. Since the controller 17 controls the light-source device 11 to emit light to illuminate the scanning area 15R3 as a whole of the scanning line 630, the detection image area G (irradiation area) to be irradiated with the light from the light-source device 11 is equal to the scanning area 15R3.

In FIG. 19C, the scanning area 15R3 reaches and overlap with the upper end 61u (an example of a second detection position) of the light receiver 61 (detection field) in the sub-scanning direction at the scanning angle θu in the sub-scanning direction. The controller 17 stores the drive voltage Gu for the mirror 130 of the light deflector 13 at this state, in the ROM 1003 or the like.

In the above-described case, the controller 17 may move or sweep the scanning area 15R3 in plural times to change the state in FIG. 19A to the state in FIG. 19B and to the state FIG. 19C.

The processing sequence is not limited to that order of FIGs. 19A, 19B, and 19C. The controller 17 may execute the processes illustrated in FIGs. 19A, 19B, and 19C in any suitable order. Further, any other processes other than the processes illustrated in 19A, 19B, and 19C may be included in step S101 in FIG. 18.

FIGs. 20A, 20B, and 20C are illustrations for describing a method of detecting the amount of misalignment, which is performed in step S101 of FIG. 18.

As illustrated in FIG. 20A, the controller 17 first controls the light-source device 11 to emit light so that the amplitude of the scanning line 630 of the scanning light deflected by the light deflector 13 in the sub-scanning direction (Y direction in FIG. 20A) occurs only near the sub-scanning amplitude center L2.

In this case, the misalignment ΔY occurs in the sub-scanning direction. That is, the sub-scanning amplitude center L2 is misaligned by ΔY from the original sub-sub-scanning amplitude center L20 at the initial state.

Since the controller 17 controls the light-source device 11 to emit light to illuminate the scanning area 15R3 as a whole of the scanning line 630, the detection image area G (irradiation area) to be irradiated with the light from the light-source device 11 is equal to the scanning area 15R3.

In this case, the scanning area 15R3 is sufficiently small in the sub-scanning direction, to not overlap with the detection field of the light receiver 61.

As illustrated in FIG. 20B, the controller 17 controls the light-source device 11 to emit light so that the amplitude of the scanning line 630 of the scanning light deflected by the light deflector 13 in the sub-scanning direction becomes larger. Since the controller 17 controls the light-source device 11 to emit light to illuminate the scanning area 15R3 as a whole of the scanning line 630, the detection image area G (irradiation area) to be irradiated with the light from the light-source device 11 is equal to the scanning area 15R3.

In FIG. 20B, the scanning area 15R3 reaches and overlap with the lower end 611 (an example of a first detection position) of the light receiver 61 (detection field) in the sub-scanning direction at the scanning angle θl in the sub-scanning direction. The controller 17 stores the drive voltage G1' for the mirror 130 of the light deflector 13 at this state, in the ROM 1003 or the like.

As illustrated in FIG. 20C, the controller 17 controls the light-source device 11 to emit light so that the amplitude of the scanning line 630 of the scanning light deflected by the light deflector 13 in the sub-scanning direction becomes larger. Since the controller 17 controls the light-source device 11 to emit light to illuminate the scanning area 15R3 as a whole of the scanning line 630, the detection image area G (irradiation area) to be irradiated with the light from the light-source device 11 is equal to the scanning area 15R3.

In FIG. 20C, the scanning area 15R3 reaches and overlap with the upper end 61u (an example of the second detection position) of the light receiver 61 (detection area) in the sub-scanning direction at the scanning angle θu in the sub-scanning direction. The controller 17 stores the drive voltage Gu' for the mirror 130 of the light deflector 13 at this state, in the ROM 1003 or the like.

In the above-described case, the controller 17 may move or sweep the scanning area 15R3 in plural times to change the state in FIG. 20A to the state in FIG. 20B and to the state FIG. 20C.

The processing sequence is not limited to that order of FIGs. 20A, 20B, and 20C. The controller 17 may execute the processes illustrated in FIGs. 20A, 20B, and 20C in any suitable order in step S101. Further, any other processes other than the processes illustrated in 20A, 20B, and 20C may be included in step S101 in FIG. 18.

FIGs. 21A, 21B, 21C, and 21D each is a graph of a detection signal of the irradiation light received by the light receiver 61.

FIG. 21A corresponds to the states of FIGs. 19A and 20A, in which the amplitude of the scanning line 630 in the sub-scanning direction is sufficiently small, and the light receiver 61 fails to receive the irradiation light. For this reason, as illustrated in the graph of FIG. 21A, the light receiver 61 does not output any detection signal.

FIG. 21B corresponds to the states of FIGs. 19B and 20B, in which the amplitude of the scanning line 630 in the sub-scanning direction is greater than the cases of FIG. 19A and FIG. 20A, and the irradiation light is received by the lower end 611 of the detection field of the light receiver 61 in the sub-scanning direction. In this case, the light receiver 61 outputs a detection signal for one scanning line 630. By receiving the detection signal for the one scanning line 630, the controller 17 determines that the scanning area 15R3 has reached the lower end 611 of the light receiver 61.

FIG. 21C corresponds to the states of FIGS. 19C and 20C. The amplitude of the scanning line 630 in the sub-scanning direction is further increased, and the irradiation light is received by the upper end 61μ of the detection field of the light receiver 61 in the sub-scanning direction. In this case, the light receiver 61 outputs detection signals for all the scanning lines 630 that have scanned the entire detection area. Since the scanning line 630 of the scanning light is moved back and forth (round trip) in the sub-scanning direction, the detection signals F received in the first leg of a round trip and the detection signals B received in the second leg of the round trip are chronologically indicated in FIG. 21C.

FIG. 21D indicates the state in which the amplitude of the scanning line 630 in the sub-scanning direction is further increased, and the irradiation light reaches a portion above the upper end 61μ of the detection field of the light receiver 61 in the sub-scanning direction. Compared to FIG. 21C, a time with no detection signals occurs between the detection signals F received in the first leg of the round trip and the detection signals B received in the second leg of the round trip in FIG. 21D because the irradiation light reaches the portion above the upper end 61μ of the detection field of the light receiver 61. Based on the difference in the state between FIG. 21C and FIG. 21D and the time with no detection signals, the controller 17 determines that the scanning area 15R3 reaches the upper end 61μ of the light receiver 61.

In the above-described embodiments, the method that determines whether the scanning area reaches the lower end 611 or the upper end 61u of the light receiver 61 based on the number of scanning lines 630 output by the light receiver 61 is described. In some examples, such a determination may be made based on the intensity of the detection signal integrated with a predetermined time. In this case, the intensity of the detection signal increases as the time of scanning the light receiver 61 increases. Accordingly, the controller 17 determines that the scanning area reaches the lower end 611 of the light receiver 61 in response to a start of outputting of the intensity of the detection signal, and determines that the scanning area reaches the upper end 61u of the light receiver 61 when the intensity of the detection signal reaches a level of saturation to remain at a constant value with no increase in the intensity.

FIG. 22 is a diagram for describing the relation of the scanning angle and the drive voltage in the sub-scanning direction.

In the graph of FIG. 22, an approximate line A indicates the relation of the original scanning angles and the original values of the drive voltage at the initial state as illustrated in FIGs. 19A, 19B, and 19C, and an approximate line B indicates the relation of the scanning angles and the drive voltage when the misalignment $\Delta Y$ occurs in the sub-scanning direction as illustrated in FIGs. 20A, 20B, and 20C.

In the approximate line A, as illustrated in FIGs. 19A to 19C, the drive voltage G1 of the mirror 130 with respect to the scanning angle θl in the sub-scanning direction and the drive voltage Gu of the mirror 130 with respect to the scanning angle θu in the sub-scanning direction are plotted. In the approximate line B, as illustrated in FIGs. 20A to 20C, the drive voltage Gl' of the mirror 130 with respect to the scanning angle θl in the sub-scanning direction and the drive voltage Gu' of the mirror 130 with respect to the scanning angle θu in the sub-scanning direction are plotted.

The image formed within the display image area 15R1 on the screen 15 with the light emitted from the light-source device 11 based on the image information is misaligned in the sub-scanning direction due to the misalignment with an amount of misalignment $\Delta Y$ in the sub-scanning direction between the approximate line A and the approximate line B.

The amount of misalignment $\Delta Y$ in the sub-scanning direction is obtained by the following equations:

$$\theta l = a \times Gl' + \Delta Y$$

$$\theta u = a \times Gu' + \Delta Y$$

Accordingly, the following equation is derived from the above equations:

$$\Delta Y = (Gl' \times \theta u - Gu' \times \theta l) / (Gl' - Gu')$$

As described above, in the present embodiment, by changing the amplitude of the scanning line 630 in the sub-scanning direction to move the irradiation area between a first position overlapping with the detection field and a second position not overlapping with the detection field (the second position being a position other than the first position overlapping with the detection field), the misalignment with an amount of ΔY of an image due to the changes in the environment or over time can be detected with higher accuracy.

Note that the tilt of the approximate line A and the approximate line B, and the symbol "a" in the above-described equations denote the sensitivity of the scanning angle with respect to the drive voltage.

In the present embodiment, the controller 17 shifts the image formed within the display image area 15R1 on the screen 15 with the light emitted from light-source device 11 based on the image information, back in the opposite direction of the detected misalignment ΔY in the sub-scanning direction, by the amount of misalignment ΔY. This enables a higher accuracy of the misalignment ΔY of an image.

In the above description, the detection positions are the lower end 611 and the upper end 61u of the light receiver 61. However, no limitation is intended thereby. In some embodiments, the detection position may be, for example, the end of a light shield that partially shields the light receiver 61.

In the present embodiment, with two detection positions of the lower end 611 and the upper end 61u of the light receiver provided, the misalignment ΔY can be accurately detected and corrected irrespective of a great change in the sensitivity of the scanning angle with respect to the drive voltage of the mirror 130 between the initial state and the state of the misalignment in the sub-scanning direction.

Note that if the change in the sensitivity of the scanning angle with respect to the drive voltage of the mirror 130 is sufficiently small, the detection position may be one of the lower end 611 and the upper end 61u of the light receiver 61.

FIG. 23 is a diagram illustrating a configuration according to a variation of the embodiment in FIG. 13.

In the variation in FIG. 23, the light receivers 61A and 61B are separated from each other in the main scanning direction as in FIG. 13. However, FIG. 23 differs from FIG. 13 in that the light receivers 61A and 61B are misaligned along the sub-scanning direction (Y direction in FIG. 23).

Specifically, the upper end of light receiver 61A is located above the upper end of light receiver 61B in FIG. 23. The upper end of the light receiver 61B is located above the lower end of the light receiver 61A in FIG. 23. The lower end of the light receiver 61A is located above the lower end of the light receiver 61B in FIG. 23.

FIG. 24 is a graph of scanning angles and drive voltage in the sub-scanning angle according to the variation in FIG. 23.

In the graph of FIG. 24, an approximate line A indicates the relation of the original scanning angles and the original values of the drive voltage at the initial state, and an approximate line B indicates the relation of the scanning angles and the drive voltage when the misalignment ΔY occurs in the sub-scanning direction.

In FIG. 24, θl1 denotes a scanning angle when the scanning area 15R3 reaches and overlaps with the lower end of the light receiver 61B in the sub-scanning direction, and θl2 denotes a scanning angle when the scanning area 15R3 reaches and overlaps with the lower end of the light receiver 61A in the sub-scanning direction. Further, θu1 denotes a scanning angle when the scanning area 15R3 reaches and overlaps with the upper end of the light receiver 61B in the sub-scanning direction, and θu2 denotes a scanning angle when the scanning area 15R3 reaches and overlaps with the upper end of the light receiver 61A in the sub-scanning direction.

In the approximate line A, the drive voltage G11 of the mirror 130 with respect to the scanning angle θl1 in the sub-scanning direction, the drive voltage Gl2 of the mirror 130 with respect to the scanning angle θl2 in the sub-scanning direction, the drive voltage Gu1 of the mirror 130 with respect to the scanning angle θu1 in the sub-scanning direction, and the drive voltage Gu2 of the mirror 130 with respect to the scanning angle θu2 in the sub-scanning direction are plotted.

In the approximate line B, the drive voltage Gl1' of the mirror 130 with respect to the scanning angle θl1 in the sub-scanning direction, the drive voltage Gl2' of the mirror 130 with respect to the scanning angle θl2 in the sub-scanning direction, the drive voltage Gu1' of the mirror 130 with respect to the scanning angle θu1 in the sub-scanning direction, and the drive voltage Gu2' of the mirror 130 with respect to the scanning angle θu2 in the sub-scanning direction are plotted.

In the present variation, four detection positions are used: the lower end and the upper end of the light receiver 61A, and the lower end and the upper end of the light receiver 61B. Accordingly, the linear approximate lines are obtained based on the detection data from the four detection positions, and based on the approximate lines, the misalignment of an image can be more accurately detected, for example, because even if data from one location is erroneous, other data from the other three locations can cover the error.

FIGs. 25A, 25B, and 25C each is a diagram illustrating a method of detecting an initial value according to a variation of the embodiment illustrated in FIG. 19A, 19B, and 19C.

In the method of detecting the initial value illustrated in FIGs. 19A to 19C, the amplitude of the scanning line 630 of scanning light deflected by the light deflector 13 in the sub-scanning direction (Y direction in the drawing) is changed. In the variation illustrated in 25A to 25C, the tilt of the reflecting surface of the mirror 130 of the light deflector 13 is changed.

As illustrated in FIG. 25A, the controller 17 first initializes the tilt of the reflecting surface of the mirror 130 so that the normal direction of the reflecting surface of the mirror 130 is along the horizontal direction (Z direction in FIG. 25A). In that state, the controller 17 controls the light-source device 11 to emit light so that the amplitude of the scanning line 630 of the scanning light deflected by the light deflector 13 in the sub-scanning direction (the Y direction in FIG. 25A) occurs only near the sub-scanning amplitude center L2. The amplitude in the sub-scanning direction is set to zero. Since the controller 17 controls the light-source device 11 to emit light to illuminate the scanning area 15R3 as a whole of the scanning line 630, the irradiation area to be irradiated with the light from the light-source device 11 is equal to the scanning area 15R3.

In this case, the scanning area 15R3 is sufficiently small in the sub-scanning direction, to not overlap with the detection field of the light receiver 61.

As illustrated in FIG. 25B, the controller 17 controls the light-source device 11 to emit light with the reflecting surface of the mirror 130 tilted upward (Y direction in FIG. 25B) without an increase in the amplitude of the scanning line 630 in the sub-scanning direction. Since the controller 17 controls the light-source device 11 to emit light to illuminate the scanning area 15R3 as a whole of the scanning line 630, the irradiation area to be irradiated with the light from the light-source device 11 is equal to the scanning area 15R3.

In FIG. 25B, the scanning area 15R3 reaches and overlaps with the lower end 611 (an example of a first detection position) of the light receiver 61 (detection field) in the sub-scanning direction at the scanning angle θl in the sub-scanning direction. The controller 17 stores the drive voltage G1 for the mirror 130 of the light deflector 13 at this state, in the ROM 1003 or the like.

As illustrated in FIG. 25C, the controller 17 controls the light-source device 11 to emit light with the reflecting surface of the mirror 130 tilted further upward (Y direction in FIG. 25C) without an increase in the amplitude of the scanning line 630 in the sub-scanning direction. Since the controller 17 controls the light-source device 11 to emit light to illuminate the scanning area 15R3 as a whole of the scanning line 630, the irradiation area to be irradiated with the light from the light-source device 11 is equal to the scanning area 15R3.

In FIG. 25C, the scanning area 15R3 reaches and overlaps with the upper end 61u (an example of a second detection position) of the light receiver 61 (detection field) in the sub-scanning direction at the scanning angle θu in the sub-scanning direction. The controller 17 stores the drive voltage Gu for the mirror 130 of the light deflector 13 at this state, in the ROM 1003 or the like.

In the above-described case, the controller 17 may move or sweep the scanning area 15R3 in plural times to change the state in FIG. 25A to the state in FIG. 25B and to the state FIG. 25C.

The processing sequence is not limited to that order of FIGs. 25A, 25B, and 25C. The controller 17 may execute the processes illustrated in FIGs. 25A, 25B, and 25C in any suitable order. Further, any other processes other than the processes illustrated in 25A, 25B, and 25C may be included in step S101 in FIG. 18.

FIGs. 26A, 26B, and 26C each is a diagram illustrating a method of detecting the amount of misalignment according to a variation of the embodiment illustrated in FIG. 20A, 20B, and 20C.

In the method of detecting the initial value illustrated in FIGs. 20A to 20C, the amplitude of the scanning line 630 of scanning light deflected by the light deflector 13 in the sub-scanning direction (Y direction in the drawing) is changed. In the variation illustrated in 26A to 26C, the tilt of the reflecting surface of the mirror 130 of the light deflector 13 is changed.

As illustrated in FIG. 26A, the controller 17 first initializes the tilt of the reflecting surface of the mirror 130 so that the normal direction of the reflecting surface of the mirror 130 is along the horizontal direction (Z direction in FIG. 26A). In that state, the controller 17 controls the light-source device 11 to emit light so that the amplitude of the scanning line 630 of the scanning light deflected by the light deflector 13 in the sub-scanning direction occurs only near the sub-scanning amplitude center L2.

In this case, the misalignment ΔY occurs in the sub-scanning direction. That is, the sub-scanning amplitude center L2 is misaligned by ΔY from the original sub-sub-scanning amplitude center L20 at the initial state.

Since the controller 17 controls the light-source device 11 to emit light to illuminate the scanning area 15R3 as a whole of the scanning line 630, the irradiation area to be irradiated with the light from the light-source device 11 is equal to the scanning area 15R3.

In this case, the scanning area 15R3 is sufficiently small in the sub-scanning direction, to not overlap with the detection field of the light receiver 61.

As illustrated in FIG. 26B, the controller 17 controls the light-source device 11 to emit light with the reflecting surface of the mirror 130 tilted upward (Y direction in FIG. 26B) without an increase in the amplitude of the scanning line 630 in the sub-scanning direction. Since the controller 17 controls the light-source device 11 to emit light to illuminate the scanning area 15R3 as a whole of the scanning line 630, the irradiation area to be irradiated with the light from the light-source device 11 is equal to the scanning area 15R3.

In FIG. 26B, the scanning area 15R3 reaches and overlaps with the lower end 611 (an example of a first detection position) of the light receiver 61 (detection field) in the sub-scanning direction at the scanning angle θl in the sub-scanning direction. The controller 17 stores the drive voltage G1' for the mirror 130 of the light deflector 13 at this state, in the ROM 1003 or the like.

As illustrated in FIG. 26C, the controller 17 controls the light-source device 11 to emit light with the reflecting surface of the mirror 130 tilted further upward without an increase in the amplitude of the scanning line 630 in the sub-scanning direction. Since the controller 17 controls the light-source device 11 to emit light to illuminate the scanning area 15R3 as a whole of the scanning line 630, the irradiation area to be irradiated with the light from the light-source device 11 is equal to the scanning area 15R3.

In FIG. 26C, the scanning area 15R3 reaches and overlaps with the upper end 61u (an example of a second detection position) of the light receiver 61 (detection field) in the sub-scanning direction at the scanning angle θu in the sub-scanning direction. The controller 17 stores the drive voltage Gu' for the mirror 130 of the light deflector 13 at this state, in the ROM 1003 or the like.

In the above-described case, the controller 17 may move or sweep the scanning area 15R3 in plural times to change the state in FIG. 26A to the state in FIG. 26B and to the state FIG. 26C.

The processing sequence is not limited to that order of FIGs. 26A, 26B, and 26C. The controller 17 may execute the processes illustrated in FIGs. 26A, 26B, and 26C in any suitable order. Further, any other processes other than the processes illustrated in 26A, 26B, and 26C may be included in step S101 in FIG. 18.

In the present variation, by changing the tilt of the reflecting surface of the mirror 130 of the light deflector 13 to move the irradiation area between a first position overlapping with the detection field and a second position not overlapping with the detection field, the misalignment with an amount of ΔY of an image due to the changes in the environment or over time can be detected with higher accuracy.

FIGs. 27A, 27B, and 27C each is a diagram illustrating a method of detecting an initial value according to a second variation of the embodiment illustrated in FIG. 19A, 19B, and 19C.

In the method of detecting the initial value illustrated in FIGs. 19A to 19C, the amplitude of the scanning line 630 of scanning light deflected by the light deflector 13 in the sub-scanning direction (Y direction in the drawing) is changed. Further, in the variation illustrated in 25A to 25C, the tilt of the reflecting surface of the mirror 130 of the light deflector 13 is changed. In the present variation illustrated in FIGs. 27A, 27B, and 27C, the position of the irradiation area to be irradiated with light from the light-source device 11 is changed without any particular control of the scanning line 630.

The controller 17 mechanically controls the position of the mirror 130 of the light deflector 13 to change the position of the irradiation area. In some examples, the position of the light-source device 11 or the position of a component, such as a collimator lens 112, may be mechanically controlled so as to change the position of the irradiation area.

As illustrated in FIG. 27A, the controller 17 first initializes the tilt of the reflecting surface of the mirror 130 so that the normal direction of the reflecting surface of the mirror 130 is along the horizontal direction (Z direction in FIG. 27A). In that state, the controller 17 controls the light-source device 11 to emit light so that the amplitude of the scanning line 630 of the scanning light deflected by the light deflector 13 in the sub-scanning direction (the Y direction in FIG. 27A) occurs only near the sub-scanning amplitude center L2. The amplitude in the sub-scanning direction is set to zero. Since the controller 17 controls the light-source device 11 to emit light to illuminate the scanning area 15R3 as a whole of the scanning line 630, the irradiation area to be irradiated with the light from the light-source device 11 is equal to the scanning area 15R3.

In this case, the scanning area 15R3 is sufficiently small in the sub-scanning direction, to not overlap with the detection field of the light receiver 61.

As illustrated in FIG. 27B, the controller 17 controls the light-source device 11 to emit light with the mirror 130 of the light deflector shifted upward (Y direction in FIG. 27B) in the sub-scanning direction, without the changes in the amplitude of the scanning line 630 in the sub-scanning direction and the tilt of the reflecting surface of the mirror 130. Since the controller 17 controls the light-source device 11 to emit light to illuminate the scanning area 15R3 as a whole of the scanning line 630, the irradiation area to be irradiated with the light from the light-source device 11 is equal to the scanning area 15R3.

In FIG. 27B, the scanning area 15R3 reaches and overlaps with the lower end 611 (an example of a first detection position) of the light receiver 61 (detection field) in the sub-scanning direction at the position Yl in the sub-scanning direction. The controller 17 stores the amount of shift G1 of the mirror 130 of the light deflector 13 at this state, in the ROM 1003 or the like.

As illustrated in FIG. 27C, the controller 17 controls the light-source device 11 to emit light with the mirror 130 of the light deflector shifted further upward in the sub-scanning direction, without the changes in the amplitude of the scanning line 630 in the sub-scanning direction and the tilt of the reflecting surface of the mirror 130. Since the controller 17 controls the light-source device 11 to emit light to illuminate the scanning area 15R3 as a whole of the scanning line 630, the irradiation area to be irradiated with the light from the light-source device 11 is equal to the scanning area 15R3.

In FIG. 27C, the scanning area 15R3 reaches and overlaps with the upper end 61u (an example of a second detection position) of the light receiver 61 (detection field) in the sub-scanning direction at the position Yu in the sub-scanning direction. The controller 17 stores the amount of shift Gu of the mirror 130 of the light deflector 13 at this state, in the ROM 1003 or the like.

In the above-described case, the controller 17 may move or sweep the scanning area 15R3 in plural times to change the state in FIG. 27A to the state in FIG. 27B and to the state FIG. 27C.

The processing sequence is not limited to that order of FIGs. 27A, 27B, and 27C. The controller 17 may execute the processes illustrated in FIGs. 27A, 27B, and 27C in any suitable order. Further, any other processes other than the processes illustrated in 27A, 27B, and 27C may be included in step S101 in FIG. 18.

FIGs. 28A, 28B, and 28C each is a diagram illustrating a method of detecting the amount of misalignment according to a second variation of the embodiment illustrated in FIG. 20A, 20B, and 20C.

In the method of detecting the amount of misalignment illustrated in FIGs. 20A to 20C, the amplitude of the scanning line 630 of scanning light deflected by the light deflector 13 in the sub-scanning direction (Y direction in the drawing) is changed. Further, in the variation illustrated in 26A to 26C, the tilt of the reflecting surface of the mirror 130 of the light deflector 13 is changed. In the present variation illustrated in FIGs. 28A, 28B, and 28C, the position of the irradiation area to be irradiated with light from the light-source device 11 is changed without any particular control of the scanning line 630.

The controller 17 mechanically controls the position of the mirror 130 of the light deflector 13 to change the position of the irradiation area. In some examples, the position of the light-source device 11 or the position of a component, such as a collimator lens 112, may be mechanically controlled so as to change the position of the irradiation area.

As illustrated in FIG. 28A, the controller 17 first initializes the tilt of the reflecting surface of the mirror 130 so that the normal direction of the reflecting surface of the mirror 130 is along the horizontal direction (Z direction in FIG. 28A). In that state, the controller 17 controls the light-source device 11 to emit light so that the amplitude of the scanning line 630 of the scanning light deflected by the light deflector 13 in the sub-scanning direction occurs only near the sub-scanning amplitude center L2.

In this case, the misalignment ΔY occurs in the sub-scanning direction. That is, the sub-scanning amplitude center L2 is misaligned by ΔY from the original sub-sub-scanning amplitude center L2 at the initial state.

Since the controller 17 controls the light-source device 11 to emit light to illuminate the scanning area 15R3 as a whole of the scanning line 630, the irradiation area to be irradiated with the light from the light-source device 11 is equal to the scanning area 15R3.

In this case, the scanning area 15R3 is sufficiently small in the sub-scanning direction, to not overlap with the detection field of the light receiver 61.

As illustrated in FIG. 28B, the controller 17 controls the light-source device 11 to emit light with the mirror 130 of the light deflector shifted upward (Y direction in FIG. 28B) in the sub-scanning direction, without the changes in the amplitude of the scanning line 630 in the sub-scanning direction and the tilt of the reflecting surface of the mirror 130. Since the controller 17 controls the light-source device 11 to emit light to illuminate the scanning area 15R3 as a whole of the scanning line 630, the irradiation area to be irradiated with the light from the light-source device 11 is equal to the scanning area 15R3.

In FIG. 28B, the scanning area 15R3 reaches and overlaps with the lower end 611 (an example of a first detection position) of the light receiver 61 (detection field) in the sub-scanning direction at the position Y1 in the sub-scanning direction. The controller 17 stores the amount of shift G1' of the mirror 130 at this state, in the ROM 1003 or the like.

As illustrated in FIG. 28C, the controller 17 controls the light-source device 11 to emit light with the reflecting surface of the mirror 130 tilted further upward without an increase in the amplitude of the scanning line 630 in the sub-scanning direction. Since the controller 17 controls the light-source device 11 to emit light to illuminate the scanning area 15R3 as a whole of the scanning line 630, the irradiation area to be irradiated with the light from the light-source device 11 is equal to the scanning area 15R3.

In FIG. 28C, the scanning area 15R3 reaches and overlaps with the upper end 61u (an example of a second detection position) of the light receiver 61 (detection field) in the sub-scanning direction at the position Yu in the sub-scanning direction. The controller 17 stores the amount of shift Gu' of the mirror 130 of the light deflector 13 at this state, in the ROM 1003 or the like.

In the above-described case, the controller 17 may move or sweep the scanning area 15R3 in plural times to change the state in FIG. 28A to the state in FIG. 28B and to the state FIG. 28C.

The processing sequence is not limited to that order of FIGs. 28A, 28B, and 28C. The controller 17 may execute the processes illustrated in FIGs. 28A, 28B, and 28C in any suitable order. Further, any other processes other than the processes illustrated in 28A, 28B, and 28C may be included in step S101 in FIG. 18.

FIG. 29 is a graph of the relation between the position and amount of shift in the sub-scanning direction according to the second variation illustrated in FIGs. 27 and 28.

In the graph of FIG. 29, an approximate line A indicates the relation of the original position and the original amount of shift in the sub-scanning direction at the initial state as illustrated in FIGs. 27A, 27B, and 27C, and an approximate line B indicates the relation of the position and the amount of shift in the sub-scanning direction when the misalignment ΔY occurs in the sub-scanning direction as illustrated in FIGs. 28A, 28B, and 28C.

In the approximate line A, as illustrated in FIGs. 27A to 27C, the amount of shift G1 of the mirror 130 with respect to the position Yl in the sub-scanning direction and the amount of shift Gu of the mirror 130 with respect to the position Yu in the sub-scanning direction are plotted. In the approximate line B, as illustrated in FIGs. 28A to 28C, the amount of shift G1' of the mirror 130 with respect to the position Y1 in the sub-scanning direction and the amount of shift Gu' of the mirror 130 with respect to the position Yu in the sub-scanning direction are plotted.

The image formed within the display image area 15R1 on the screen 15 with the light emitted from the light-source device 11 based on the image information is misaligned in the sub-scanning direction due to the misalignment ΔY in the sub-scanning direction between the approximate line A and the approximate line B.

The amount of misalignment ΔY in the sub-scanning direction is obtained by the following equations:

$$Yl = a \times Gl' + \Delta Y$$

$$Yu = a \times Gu' + \Delta Y$$

Accordingly, the following equation is derived from the above equations:

$$\Delta Y = (Gl' \times Yu - Gu' \times Yl) / (Gl' - Gu')$$

Note that the tilt of the approximate line A and the approximate line B, and the symbol "a" in the above-described equations denote the sensitivity of the position in the sub-scanning direction with respect to the amount of shift of the mirror 130.

In the present embodiment, the controller 17 shifts the image formed within the display image area 15R1 on the screen 15 with the light emitted from light-source device 11 based on the image information, back in the opposite direction of the detected misalignment ΔY in the sub-scanning direction, by the amount of misalignment ΔY. This enables a higher accuracy of the misalignment ΔY of an image.

In the above description, the detection positions are the lower end 611 and the upper end 61u of the light receiver 61. However, no limitation is intended thereby. In some embodiments, the detection position may be, for example, the end of a light shield that partially shields the light receiver 61.

In the present embodiment, two detection positions, the lower end 611 and the upper end 61u, of the light receiver are used. When the sensitivity of the position of the mirror 130 in the sub-scanning direction with respect to the amount of shift of the mirror 130 is absent or sufficiently small between the initial state and the state of the misalignment in the sub-scanning direction, the detection position may be one of the lower end 611 and the upper end 61u of the light receiver 61.

FIG. 30 is an illustration of a configuration for correcting an image according to the second embodiment. Specifically, FIG. 30 indicates a display image area 15R1, a non-image area 15R2, light receivers 61A and 61B, a first detection image area G1, and a second detection image area G2, which are in an initial state. The symbol "L1" denotes the center of the main scanning amplitude of the two-dimensional scanning on the screen 15 by the light deflector 13, and the symbol "L2" denotes the center of the sub-scanning amplitude of the two-dimensional scanning on the screen 15 by the light deflector 13.

As illustrated in FIG. 30, the two-dimensional scanning area (the scanning area) 15R3 is extended to the outside of the display image area 15R1, and the light receiver 61 (the light receivers 61A and 61B) are disposed in the non-image area 15R2 that is a scanning area outside the display image area 15R1. Further, the first detection image area G1 to be illuminated with laser light is provided as a certain area including the lower end of the light receiver 61 (one light receiver, for example, 61A), and the second detection image area G2 to be illuminated with laser light is provided as a certain area including the upper end of the light receiver 61 (the other light receiver, for example, 61B) in the sub-scanning direction. The first and second detection image areas G1 and G2 include different positions in the sub-scanning direction.

Each of the first and second detection image areas G1 and G2 has a wider width in the main scanning direction than the width of the light receiver 61 in the main scanning direction. Scanning the light-receiving surface of the light receiver 61 in the main scanning direction by the laser light that scans the detection image area G enables the light receiver 61 to detect the scanning timing of the scanning light. Note that the first detection image area G1 is an example of a first area, and the second detection image area G2 is an example of a second area.

As the area on the light receiver 61 is illuminated with laser light, a light signal relating to the scanning state is obtained from the light receiver 61. Using such a signal regarding the scanning state, the controller 17 controls the driving of the light deflector 13 and the light-emission timing of the light-source device 11 so as to adjust the image forming position and the image size. The signal relating to the scanning state is, for example, a time interval to pass through the light receiver 61 or the number of scanning lines that has passed through the light receiver 61.

At this time, it is desirable that the display image area 15R1 be apart from the first and the second detection image areas G1 and G2 by a predetermined interval so as to prevent leakage of light from the first and second detection image areas G1 and G2 to the display image area 15R1. Further, it is also desirable that the size of the display image area 15R1 be smaller than or equal to the size of an optical effective area 15R4 of the screen 15. When there is no need to distinguish the first detection image area G1 and the second detection image area G2, the first detection image area G1 and the second detection image area G2 are sometimes collectively referred to as the detection image area G.

Note that the detection image (an image to be used for detection) formed in the detection image area G may be changed according to what is to be controlled. Further, the detection image may be formed at a predetermined scanning frame interval, or may be formed when a specific condition is satisfied. Further, the detection image may be formed with all of the light sources turned on, or with a specific light source turned on. Alternatively, any light source may be selected to be turned on for each scanning frame.

FIGs. 31A and 31B are illustrations for describing a change in the number of scanning lines of received light due to a change in the image size in the sub-scanning direction.

FIG. 31A illustrates the display image area 15R1, the two-dimensional scanning area 15R3, the first detection image area G1 on the light receiving element, and the second detection image area G2 in the initial state. The initial state refers to a state in which an adjustment is made to obtain a desired image size and a desired image position before shipping the product. Two light receivers 61A and 61B are disposed substantially diagonally in one of areas obtained by dividing the two-dimensional scanning area 15R3 by the sub-scanning amplitude center L2.

FIG. 31B is an illustration of an image size that has been reduced from the initial state in the sub-scanning direction. The image size is reduced in the sub-scanning direction, for example, due to the changes in the sensitivity with respect to the drive voltage of the MEMS mirror over time as described with reference to FIG. 12A. Similar phenomena can also occur due to the change in sensitivity with temperature or the change in the property of the optical system.

As described with reference to FIG. 31B, the adjustment of an image in the sub-scanning direction is performed based on the number of scanning lines (of received light) detected from the first and second detection image areas G1 and G2 illuminated with the light from the light-source device. As the overlapping areas of the light receiver and each of the first detection image area G1 and the second detection image area G2 increase, the number of scanning lines of received light increases. FIGs. 31A and 31B indicate an overlapping area A of the first detection image area G1 and the light receiver, an overlapping area B of the second detection image area G2 and the light receiver, an overlapping area A' of the first detection image area G1 and the light receiver when the image size is changed, and an overlapping area B' of the second detection image area G2 and the light receiver when the image size is changed. The value obtained by dividing the overlapping area of the illuminated area and the light receiver by the sub-scanning interval of the raster scan on the light receiver is the number of scanning lines received by the light receiver, which are referred to as NA, NB, NA', NB', respectively. NA is an example of a predetermined number of scanning lines in the first area. NB is an example of a predetermined number of scanning lines in the second area.

For the scanning line obtained from the first detection image area G1, $\Delta$NA that is the amount of fluctuations (increase-decrease) in the number of scanning lines from the initial state in FIG. 31A to the changed image size in FIG. 31B is obtained by subtracting the value of NA from the value of NA' ($\Delta NA = NA' - NA$). Similarly for the scanning line obtained from the second detection image area G2, $\Delta$NB that is the amount of fluctuations (increase-decrease amount) in the number of scanning lines from the initial state in FIG. 31A to the changed image size in FIG. 31B is obtained by subtracting the value of NB from the value of NB' ($\Delta NB = NB' - NB$). The adjustment control is performed to maintain the sum of $\Delta$NA and $\Delta$NB ($\Delta NA + \Delta NB$) constant, so that the change in the image size from the initial state can be reduced or prevented. The image size can be controlled by adjusting the drive voltage applied to the mirror 130. $\Delta$NA is an example of the amount of change from a predetermined value (predetermined number) in the first area. $\Delta$NB is an example of the amount of change from a predetermined value (predetermined number) in the second area.

The change in the number of scanning lines from the initial state is caused not only by the change in the image size described above but also by the change in the image position described later. However, by performing the adjustment control to maintain a constant total value of $\Delta$NA and $\Delta$NB ($\Delta NA + \Delta NB$), which are the amount of fluctuations in the number of scanning lines received within the two illuminated areas, respectively, the adverse effect due to the change in the image position can be eliminated, and the change in the image size can be independently detected. For example, it is possible to figure out the occurrence of a shift in the sub-scanning direction based on the change in the number of scanning lines of light received by one illuminated area. However, it is impossible to determine whether such a shift is due to the change in image size or the change in image position, and thus a proper adjustment is difficult to perform. In the present embodiment, the shift in the sub-scanning direction is detected based on the number of scanning lines of light received by each of the two illuminated areas, which are at different locations in the sub-scanning direction. Accordingly, the shift in the sub-scanning direction can be detected at high accuracy and the change from the initial state can be reduced or prevented without using, for example, a detector provided with a high-cost area sensor or a special V-shaped slit.

FIGs. 32A and 32B are illustrations for describing a change in the number of scanning lines of received light due to a change in the image position in the sub-scanning direction.

Specifically, FIG. 32A indicates a display image area 15R1, a scanning area 15R3, a first detection image area G1, and a second detection image area G2 on the light receivers 61A and 61B, which are in an initial state.

FIG. 32B is an illustration of an image position in the sub-scanning direction that has been shifted (changed) in -Y' direction from the initial state by $\Delta$Y. The cause of the change in the image position in the sub-scanning direction is, for example, a change in the position of a component of the optical system.

Same as in FIGs. 31A and 31B, FIGs. 32A and 32B also indicate an overlapping area A of the first detection image area G1 and an overlapping area B of the second detection image area G2, which are in the initial state. FIGs. 32A and 32B also indicate the overlapping area A" of the first detection image area G1 and the light receiver and the overlapping area B" of the second detection image area G2 and the light receiver, which are at the time at which the image position has been changed.

As can be seen from FIGs. 31A, 31B, 32A, and 32B, the number of scanning lines detected by the first detection image area G1 being illuminated with the light decreases from the number in the initial state when the image size is reduced, and also decreases from the number in the initial state when the image position is shifted in the -Y' direction. Similarly, the number of scanning lines that is detected by the second detection image area G2 being illuminated with the light increases from the number in the initial state when the image size is reduced, and also increases from the number in the initial state when the image position is shifted in the -Y' direction. Under actual use conditions, the change in image size and the change in image position occur at the same timing. Accordingly, the change in image size and the change in mage position need to be detected independently so as to control them with high accuracy.

In the following description, the amount of fluctuations (increase-decrease amount) in the number of the scanning lines with the image position changed (shifted) is considered. When the image position is shifted, the display image area 15R1, the scanning area 15R3, and the first detection image area G1 and the second detection image area G2 on the light receiver are each shifted in parallel in the -Y' direction by $\Delta$Y. Since the positions of the light receivers 61A and 61B are not shifted, the following equations are established: $A - \Delta Y = A''$ and $B + \Delta Y = B''$ As a result, the following equation is induced: $A'' - A = (B'' - B) \times (-1)$. That is, the amount of fluctuations in the number of scanning lines detected from the first detection image area G1 being illuminated with the light from the light-source device is equal to the amount of fluctuations in the number of scanning lines detected from the second detection image area G2 being illuminated with the light from the light-source device. In addition, the signs are opposite to each other.

Accordingly, as described above, in controlling the change in the image size, the sum of $\Delta$NA and $\Delta$NB ($\Delta NA + \Delta NB$) is adjusted to be maintained constant so that the cause of the change in the image position is eliminated, and the change in the image size is independently detected and controlled.

The following describes the independent detection of the change in the image position. The amount of fluctuations in the number of scanning lines detected by the first detection image area G1 being illuminated with the light from the light-source device is expressed by formula 1 below when a change in image size and a change in image position occur at the same timing.

$$\Delta NA = \alpha(ha) + \Delta NY \qquad (1)$$

where $\alpha$ (ha) is the amount of fluctuations (increase-decrease amount of) in the number of scanning lines when the image size changes, which depends on the heights of the end portions of the light receivers 61A and 61B. The heights of the end portions of the light receivers 61A and 61B are indicated by symbols hA and hB in FIG. 32A. Hereinafter, the amount of fluctuations in the number of scanning lines received when the image size changes is represented by $\alpha(ha)$ for the first detection image area G1 and $\alpha(hb)$ for the second detection image area G2. In addition, the ratio of $\alpha$ (hb) with respect to $\alpha$ (ha) is equal to k ($\alpha(hb)/\alpha(ha) = k$). $\Delta$NY is the number of scanning lines received when the image position is shifted by $\Delta$Y.

As described above, those caused by the change in image position are eliminated by the sum of $\Delta$NA and $\Delta$NB ($\Delta NA + \Delta NB$), which is expressed by formula (2) below.

$$\Delta NA + \Delta NB = \alpha(ha) - \alpha(hb) \qquad (2).$$

Formulae (1) and (2) lead to Formula (3) below:

$$\Delta NY = \{NA - \{(\Delta NA + \Delta NB)/(1\text{-}k)\} \qquad (3).$$

When the equation: 1/(1-k) = K is established, formula (3) is represented by formula (4) below:

$$\Delta NY = \Delta NA \times (1-K) - \Delta NB \times K \qquad (4).$$

As described above, using formula (4), the change in the image position is independently detected and controlled based on the change in the number of scanning lines received in the first detection image area G1 and the change in the number of scanning lines received in the second detection image area G2. This enables a change in the image position from the initial state to be substantially prevented. In formulae (3) and (4), k and K are parameters based on the sub-scanning positions of the lower end of the light receiver included in the first detection image area G1 and the upper end of the light receiver included in the second detection image area G2, and these parameters are known parameters.

FIG. 33 is a graph indicating the relation of a parameter K and a position of the end portion of the light receiver in the sub-scanning direction. In FIG. 33, the horizontal axis denotes the interval in the sub-scanning direction between the lower end of the light receiver included in the first detection image area G1 and the upper end of the light receiver included in the second detection image area G2, and the vertical axis denotes the value of K. As illustrated in FIG. 33, as the interval in the sub-scanning direction increases, the value of K decreases. Note that the values of the intervals in the sub-scanning direction indicated by the horizontal axis and the parameters of the vertical axis in FIG. 33 are merely examples, and no limitation is intended thereby.

In the present embodiment, the change in the image position is calculated from the change in the number of scanning lines received in the first detection image area G1 and the change in the number of scanning lines received in the second detection image area G2, using formula (4). When an error occurs in the number of scanning lines of each area, the error in calculation of the change in image position increases with an increase in K.

For example, the value of K is 3 (K = 3) when the sub-scanning interval between the end portions of the light receivers is as indicated by the dotted line in FIG. 33. When an error of one scanning line occurs in the number of scanning lines of ΔNB, the control error is enlarged three times and calculated as the control error. That is, in order to obtain the amount of change in the image position with higher accuracy, it is preferable that the sub-scanning interval between the first detection image area G1 and the second detection image area G2 is wider, that is, the sub-scanning interval between the light receivers 61A and 61B is wider. Accordingly, the arrangement of the light receivers 61A and 61B at substantially diagonal positions on the screen 15 enables a high-accuracy detection.

FIG. 34 is a first variation of the first embodiment of the present disclosure. The layout of the light receivers 61A and 61B, the first detection image area G1, and the second detection image area G2 is not limited to that in FIG. 30, but may be a layout as illustrated in FIG. 34. In this case, the image size and the image position can be adjusted in the same way as in FIG. 30.

FIG. 35 is an illustration of a second variation of the second embodiment. Specifically, FIG. 35 is an illustration of a configuration that includes a different relative position of the light receiver 61B and the second illumination area (to be illuminated with the light from the light-source device). In the following description, the illuminated area is also referred to as an illumination area that is to be illuminated with light from the light-source device.

In the above description, the relative position of the light receivers and the illumination areas are set such that the first detection image area G1 includes the lower end of the light receiver and the second detection image area G2 includes the upper end of the light receiver. However, no limitation is intended thereby. As illustrated in FIG. 35, the first detection image area G1 may include the lower end of the light receiver and the second detection image area G2 may include the lower end of the other light receiver. In such a configuration, different formulae are used for detecting and controlling the change in image size and the image position, but the same concept may be applied.

For example, in the case of the change in image size, the adjustment control is performed to maintain a constant difference value (ΔNA - ΔNB) between the amount of fluctuations ΔNA in the number of scanning lines in the first detection image area G1 and the amount of fluctuations ΔNB in the number of scanning lines in the second detection image area G2, so that the change in the image size from the initial state can be reduced or prevented. As is clear from the above description, by using such a formula, the adverse effect due to the change in image position can be eliminated. Further, the detection control of the change in image position may be considered in the same manner as described above.

The change in the number of scanning lines from the initial state is caused not only by the change in the image size described above but also by the change in the image position described later. However, by performing the adjustment control to maintain a constant difference value between ΔNA and ΔNB (ΔNA - ΔNB), which are the amount of fluctuations in the number of scanning lines received by the two illumination areas, respectively, the adverse effect due to the change in the image position can be eliminated, and the change in the image size can be independently detected. For example, it is possible to figure out the occurrence of a shift in the sub-scanning direction based on the change in the number of scanning lines of light in one lighting area. However, it is impossible to determine whether such a shift is due to the change in image size or the change in image position, and thus a proper adjustment is difficult to perform. In the present embodiment, the shift in the sub-scanning direction is detected based on the number of scanning lines of light received by each of the two illumination areas at different locations in the sub-scanning direction. Accordingly, the shift in the sub-scanning direction can be detected at high accuracy and the change from the initial state can be reduced or prevented without using, for example, a detector provided with a high-cost area sensor or a special V-shaped slit.

In formulae (3) and (4), k and K may be determined based on the sub-scanning positions of the lower end of the light receiver 61A included in the first detection image area G1 and the lower end of the light receiver 61B included in the second detection image area G2. Further, in the present embodiment, the light receivers 61A and 61B have substantially the same shape and are arranged facing in substantially the same direction in the scanning area. However, no limitation is intended thereby.

FIG. 36 is a flowchart for describing an example of a process of adjusting image size. In the flowchart in FIG. 36, the position of the scanning light is changed so that the image size is adjusted at constant frame intervals.

The light-source device 11 emits laser light to irradiate the first detection image area G1 and the second detection image area G2 under the control of the light source control unit 1712 (in step S11) so as to form a detection image (image for detection).

Then, the light detection sensor 60 detects the irradiation in step S11 by using the light receiver 61 and outputs a detection signal. In step S12 as the detection step, the adjustment signal generation unit 1711 detects the number of scanning lines based on the signal output from the light detection sensor 60 (S12). For example, the number of light signals output from the light receivers 61A and 61B within the time during which the first detection image area G1 and the second detection image area G2 are scanned is counted, so as to obtain the number of scanning lines.

In step S13 as calculation step, the adjustment signal generation unit 1711 calculates the sum of ΔNA and ΔNB (the value of ΔNA + ΔNB) based on the number of scanning lines obtained from the first detection image area G1 and the second detection image area G2 (S13).

Further, the adjustment signal generation unit 1711 compares the calculated value of ΔNA + ΔNB with the value of ΔNA and ΔNB in the initial state whose value has been obtained in advance before shipping of product, so as to determine whether the calculated value differs from the value of the initial state by a certain value or more (whether the difference value is more than or equal to a certain value) (in step S14). When the difference value is less than the certain value (No in step S14), the adjustment process for a target frame ends because no adjustment is needed. When the difference value is more than or equal to the certain value (Yes in step S14), the process proceeds to step S15 to perform the adjustment.

Then, in step S15 as the scanning-position change step, the light deflector control unit 1713 changes the position of the scanning light in the sub-scanning direction to change the image size (S15). For example, the drive voltage is adjusted based on the difference value calculated in step S14, and the adjusted voltage is applied to the mirror 130. For such an adjustment, the relation between ΔNA + ΔNB and the drive voltage may be acquired in advance, and the voltage value may be uniquely determined based on the characteristics of the relation. Alternatively, any desired value for the adjustment step may be set as a maximum voltage value adjustment width.

By adjusting the image size at constant frame intervals in such a manner, an appropriate image display is provided.

FIG. 37 is an illustration of a configuration for correcting an image according to the third embodiment. In the second embodiment illustrated in FIG. 30, the light receiver that receives light of the first detection image area G1 and the light receiver that receives light of the second detection image area G2 are separated from each other in the sub-scanning direction. In the third embodiment as illustrated in FIG. 37, the light receiver that receives light of the first detection image area G1 and the light receiver that receives light of the second detection image area G2 are disposed in substantially horizontal positions in the sub-scanning direction.

With such an arrangement, a part of the two-dimensional scanning area 15R3, which is unavailable as the display image area 15R1 due to the presence of the light receivers 61 and the second detection image area G2 on the periphery of the display image area 15R1 in the embodiment illustrated in FIG. 35, can be used as the display image area 15R1. Thus, a larger image can be displayed in the main scanning direction.

In this case as well, the amount of change in the image position is calculated using formula (4) as described above. This calculation can be performed at a higher accuracy with a wider sub-scanning interval between the light receivers. Thus, the case, in which the amount of change in the image position is calculated with a smaller sub-scanning interval as in the third embodiment, is considered below.

That is, the calculation of the amount of change in the image position according to the third embodiment is performed using formula (5) or (6) below.

$$\Delta NY = \Delta NA \qquad (5)$$

or

$$\Delta NY = \Delta NB \times -1 \qquad (6)$$

The following describes the difference in display image due to the difference between formulae for calculating the amount of change in the image position to be used for the correction process, using FIG. 38. FIG. 38 is an illustration of a display image in which the text "50 km/h" is displayed at the sub-scanning position of the virtual reference line S within the display image area 15R1. FIG. 38A is an illustration of the result of the adjustment of the image position by using formula (4) that includes parameter K, and FIG. 38B is an illustration of the result of the adjustment of the image position by using formula (5) that does not include K.

In the display image of FIG. 38A, a display image Pb formed by the blue light source is displayed closest to the reference line S, and the display position of a display image Pr formed by the red light source and the display position of a display image Pg formed by the green light source are different from the position of the display image Pb. That is, the display image in FIG. 38A is an image in which colors are shifted from each other (a color-shift image).

Such a color-shift image might be generated by an error in calculation due to the parameter K included in formula (4). That is, when ambient light occurs and a signal noise is included in the light signal from the light detection sensor 60 during detection of scanning light emitted from a light source of a certain color, an error might occur in the number of scanning lines detected based on the light signal. For example, in the case where 21 scanning lines are erroneously detected although the actual number of scanning lines is 20, if the amount of change in the image position using formula (4), this erroneous difference by one line is multiplied by K, and accordingly the image position needs to be corrected by K scanning lines. As described above, when a detection error occurs due to, for example, ambient light, by performing the correction using formula (4) that includes parameter K, a color shift image that can be recognized by a person might be generated. FIG. 38A indicates the case where the positions of the images formed by the light beams emitted from the light sources of three colors are shifted from each other. For example, when a detection error occurs for one of a plurality of light sources, a color shift occurs only in the image formed by the light from the one light source.

By contrast, in FIG. 38B, the position of the image display is shifted upward in the sub-scanning direction with respect to the reference line S. The display images Pr, Pg, and Pb formed by the light beams from the respective light sources are displayed at the same position.

Since formula (4) is not used for the display image in FIG. 38B, the calculation of the amount of change in the image position is influenced by the amount of change in image size. That is, even if the number of scanning lines actually increases or decreases due to an increase or decrease in the image size, the image position correction is executed as a change in the image position. However, even if the image position is corrected based on such an amount of change influenced by the amount of change in the image size, the positions of the images of three colors are moved (changed) together, and a color shift is less likely to occur. In addition, in the case of FIG. 38B, a color shift due to the erroneous calculation of parameter K as in FIG. 38A is less likely to occur because formula (4) is not used.

That is, the cases of FIG. 38A and FIG. 38B differ from each other in that in FIG. 38A, a color shift occurs although the amount of change in the image position is accurately calculated with an elimination of the amount of change in the image size whereas in FIG. 38B, no color shift occurs although the calculated amount of change in the image position is an amount of change in position influenced by the change in the image size as compared to the actual amount of change in position. Accordingly, in consideration of this difference, any desired formula may be selected according to the case. For example, as a human recognition characteristic, the color shift is more likely to be recognized by person than the shift in the image position does. Accordingly, an image in which the color shift is reduced as illustrated in FIG. 38B is more prioritized, it is desirable to use formula (5) or formula (6) rather than formula (4).

The method using formula (5) or formula (6) may be used in the configuration in which two light receivers are disposed substantially diagonally as illustrated in FIG. 35.

FIGs. 39A and 39B are illustrations of a configuration for correcting an image according to the fourth embodiment. In the second embodiment and the third embodiment, two light receivers are provided such that the first illumination area is provided for one light receiver, and the second illumination area is provided for the other light receiver. In the fourth embodiment, only one light receiver 61 is provided such that either one of the first illumination area and the second illumination area is selected to be illuminated with the light at the time of each scanning, and an image adjustment control is performed using the detection result of each illumination.

FIG. 39A indicates a first illumination area including the lower end of the light receiver in the sub-scanning direction in N frame, and FIG. 39B indicates a second illumination area including the upper end of the light receiver in the N+1 frame. With this configuration, at least any one of the light receivers 61 performs an image correction, and a larger display image is obtained with a larger two-dimensional scanning area 15R3.

Note that the configuration that temporally switches between the first illumination area and the second illuminated area illuminating of the second illumination area to be illuminated with the light from the light-source device can be used in the second embodiment and the third embodiment. In the image display device having the configuration of the embodiment of the present disclosure, light other than the light for projecting a display image might unintentionally leak to the display image area 15R1 due to scattering of light on a mirror surface of the mirror 130. Accordingly, the viewer 3 might visually recognize unwanted light. Temporally switching between the first illumination area and the second illumination area to be illuminated with the light from the light-device source eliminates illumination of other locations other than the image information within one frame, and thus substantially prevents the unintentional leakage of light. Thus, an image with good visibility can be displayed.

As an example, a scan frame image may be scanned for one cycle in an image for one screen included in the image information. Alternatively, a scan frame image n and a scan frame image n + 1 may be formed from an image for one screen.

FIGs. 40 to 42 are illustrations for comparing the sizes of the display image areas according to the second to fourth embodiments.

FIGs. 40, 41, and 42 indicate maximum display image areas according to the arrangement of the light receiver 61 of second to fourth embodiments. For example, FIGs. 30 and 40 indicate the same configurations of the light receivers 61A and 61B and the detection image areas G1 and G2, and differ in that the display image area 15R1 in FIG. 30 as a whole is disposed between the light receivers 61A and 61B in the main scanning direction. By contrast, the display image area in FIG. 40, the maximum main scanning width of the display image area 15R1 ranges from the position of the light receiver 61A to the position of the light receiver 61B. That is, in the configuration of the second embodiment, the display image area 15R1 may have the maximum size as illustrated in FIG. 40, and may also be smaller than that in FIG. 40.

FIG. 43 is a table comparing the sizes of the display image areas 15R1 illustrated in FIGs. 40 to 42. The comparison of the image sizes is normalized so that each dimension width of the second embodiment is one time, and the minimum sub-scanning width can be expanded to 1.5 times larger by using that of the third embodiment. Further, by using that of the fourth embodiment, the minimum main scanning width can be expanded to 1.3 times larger. In the present disclosure, the two-dimensional scanning area 15R3 has the same size in any of the embodiments. As described above, the light receiver 61 and the detection image area G may be selected as appropriate depending on the desired accuracy of the image adjustment and the desired size of the display image area 15R1.

In the second and third embodiments, each pair of the light receiver 61A and the detection image area G1 and of the light receiver 61B and the detection image area G2 is disposed across the display image area 15R1 in the main scanning direction. However, no limitation is intended thereby. Each pair may be disposed on the same side with respect to the display image area 15R1 in the main scanning direction.

The present invention can be implemented in any convenient form, for example using dedicated hardware, or a mixture of dedicated hardware and software. The present invention may be implemented as computer software implemented by one or more networked processing apparatuses. The processing apparatuses can include any suitably programmed apparatuses such as a general purpose computer, personal digital assistant, mobile telephone (such as a WAP or 3G-compliant phone) and so on. Since the present invention can be implemented as software, each and every aspect of the present invention thus encompasses computer software implementable on a programmable device. The computer software can be provided to the programmable device using any conventional carrier medium (carrier means). The carrier medium can compromise a transient carrier medium such as an electrical, optical, microwave, acoustic or radio frequency signal carrying the computer code. An example of such a transient medium is a TCP/IP signal carrying computer code over an IP network, such as the Internet. The carrier medium can also comprise a storage medium for storing processor readable code such as a floppy disk, hard disk, CD ROM, magnetic tape device or solid state memory device

Numerous additional modifications and variations are possible in light of the above teachings. It is therefore to be understood that within the scope of the appended claims, the disclosure of the present disclosure may be practiced otherwise than as specifically described herein. For example, elements and/or features of different illustrative embodiments may be combined with each other and/or substituted for each other within the scope of this disclosure and appended claims.

## Claims

1. An optical scanner (10) comprising:

    a light source (11);
    a light deflector (13) configured to deflect light emitted from the light source (11) to scan in a main scanning direction and a sub-scanning direction perpendicular to the main scanning direction;
    a photosensor (61) having a detection field, configured to detect the light scanning the detection field; and
    a controller (17) configured to:

        control the light source (11) to emit light to scan an irradiation area; and
        shift the irradiation area between a first position overlapping with the detection field and a second position other than the first position in the sub-scanning direction.

2. The optical scanner (10) according to claim 1,
wherein the controller (17) changes in the sub-scanning direction a scanning area to be scanned with the light deflected by the light deflector (13) to shift the irradiation area between the first position and the second position in the sub-scanning direction.

3. The optical scanner (10) according to claim 1,
wherein the light deflector (13) has a reflecting surface to reflect the light emitted from the light source (11), and wherein the controller (17) changes a tilt of the reflecting surface in the sub-scanning direction to shift the irradiation area between the first position and the second position in the sub-scanning direction.

4. The optical scanner (10) according to any one of claims 1 to 3,
wherein the detection field includes a first detection position and a second detection position being separated from the first detection position in the sub-scanning direction.

5. The optical scanner (10) according to claim 4,
wherein the first detection position is disposed at one end and the second detection position is disposed at the other end of the photosensor (61) in the sub-scanning direction.

6. The optical scanner (10) according to any one of claims 1 to 5,
wherein the photosensor (61) includes a first light receiver (61A) and a second light receiver (61B) being separated from the first light receiver (61) in the main scanning direction.

7. The optical scanner (10) according to claim 6,
wherein an upper end of the first light receiver (61A) is misaligned with an upper end of the second light receiver (61B) in the sub-scanning direction, and a lower end of the first light receiver (61A) is misaligned with a lower end of the second light receiver (61B) in the sub-scanning direction.

8. The optical scanner (10) according to claim 6,
wherein an upper end of the first light receiver (61A) is aligned with an upper end of the second light receiver (61B) in the sub-scanning direction, and a lower end of the first light receiver (61A) is aligned with a lower end of the second light receiver (61B) in the sub-scanning direction.

9. The optical scanner (10) according to claim 8,
wherein the detection field includes a first detection field to be irradiated with the light to be detected by the first light receiver (61A) and a second detection field to be irradiated with the light to be detected by the second light receiver (61B), and
wherein an upper end of the first detection field is aligned with an upper of the second detection field, and a lower end of the first detection field is aligned with a lower end of the second detection field in the sub-scanning direction.

10. The optical scanner (10) according to any one of claims 1 to 9, further comprising a screen (15) having a scanning area to be scanned with the light deflected by the light deflector (13), the scanning area including an image area, wherein the controller (17) is configured to control the light source (11) to emit light based on image information to form an image within the image area on the screen (15).

**11.** The optical scanner (10) according to claim 10,
wherein the controller (17) controls the light source (11) to emit light based on the image information not to form an image within the image area during a time of shifting the irradiation area between the first position and the second position in the sub-scanning direction.

**12.** The optical scanner (10) according to claim 10 or 11,
wherein the controller (17) controls the light source (11) to emit light based on the image information to form an image within the image area, without a shift in the irradiation area between the first position and the second position in the sub-scanning direction.

**13.** The optical scanner (10) according to any one of claims 10 to 12,
wherein based on detection results of the first light receiver (62A) and the second light receiver (61B) of the photosensor (61), the controller (17) adjusts size of an image formed within the image area in the sub-scanning direction.

**14.** A display system (1) comprising:

the optical scanner (10) according to any one of claims 1 to 13;
an imaging optical system (30) configured to reflect the light that has been deflected by the light deflector (13) to scan the screen (15) and projected by the screen (15), so as to form a virtual image; and
a reflector (50) configured to reflect the light reflected from the imaging optical system (30), the light forming the virtual image.

**15.** A mobile object comprising the display system (1) according to claim 14,
wherein the reflector (50) is a windshield of the mobile object.

FIG. 1

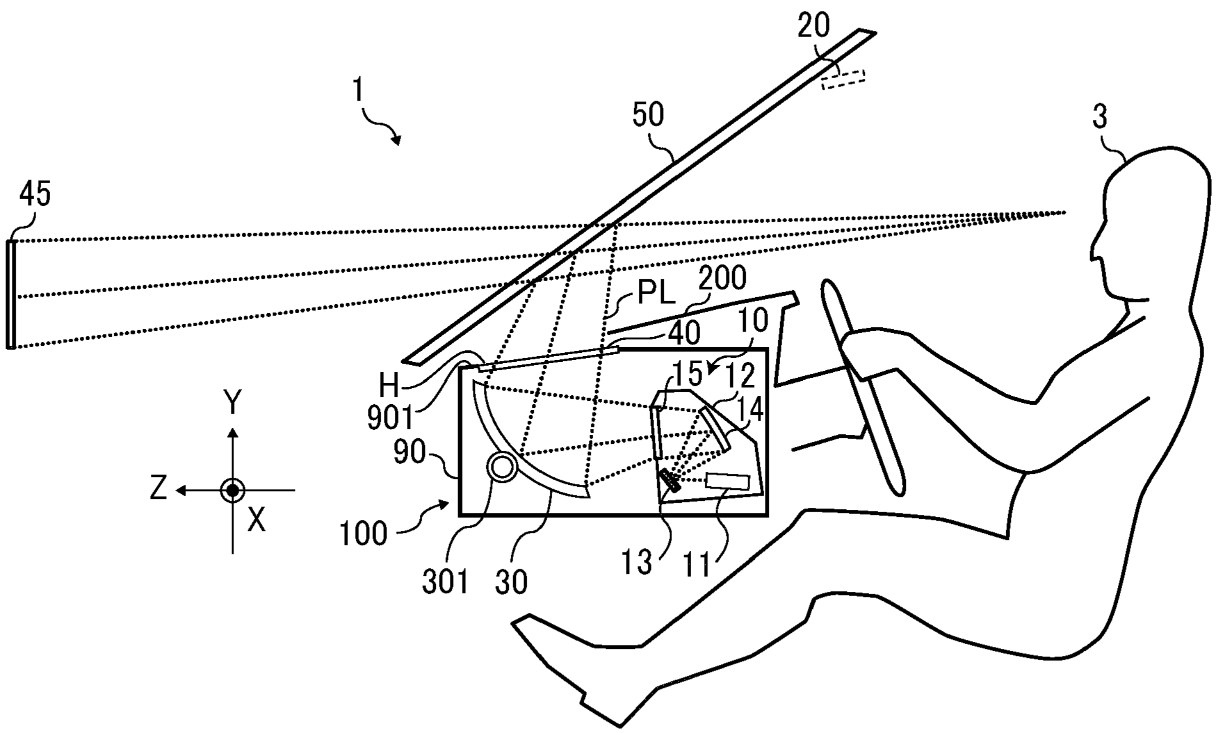

FIG. 2

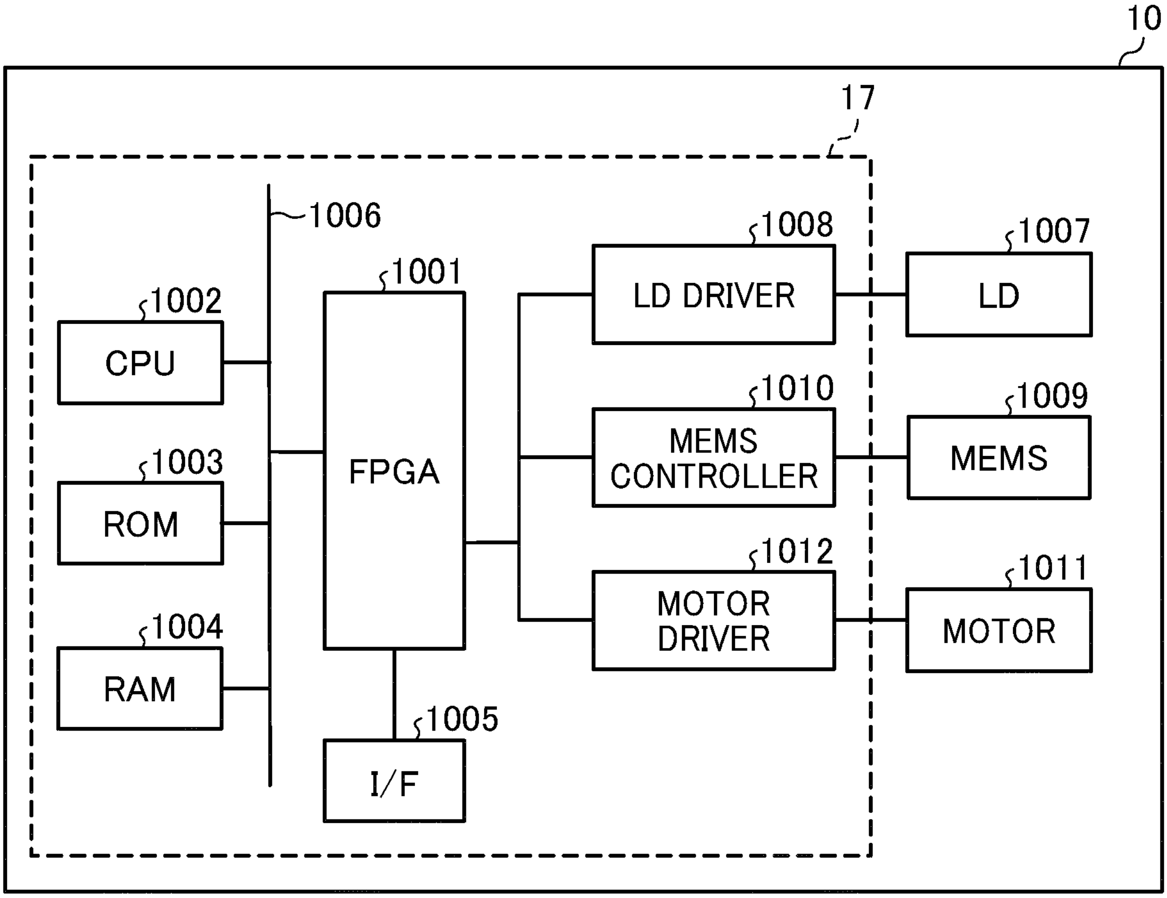
10
17
1006
1008
1007
1001
1002
LD DRIVER
LD
CPU
1010
1009
1003
MEMS
CONTROLLER
MEMS
FPGA
ROM
1012
1011
1004
MOTOR
DRIVER
MOTOR
RAM
1005
I/F

FIG. 3

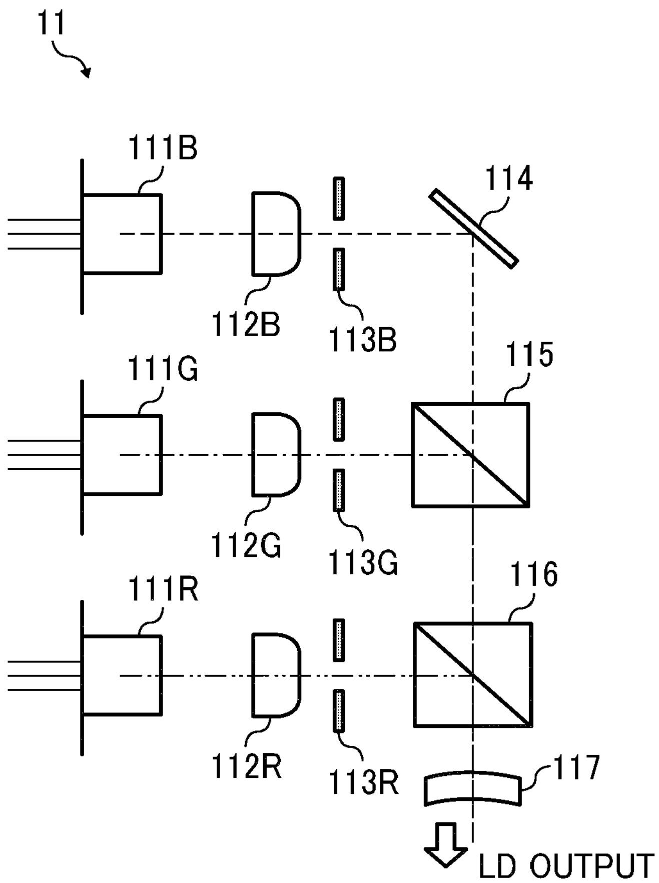
11
111B
114
112B
113B
111G
115
112G
113G
111R
116
112R
113R
117
LD OUTPUT

FIG. 4

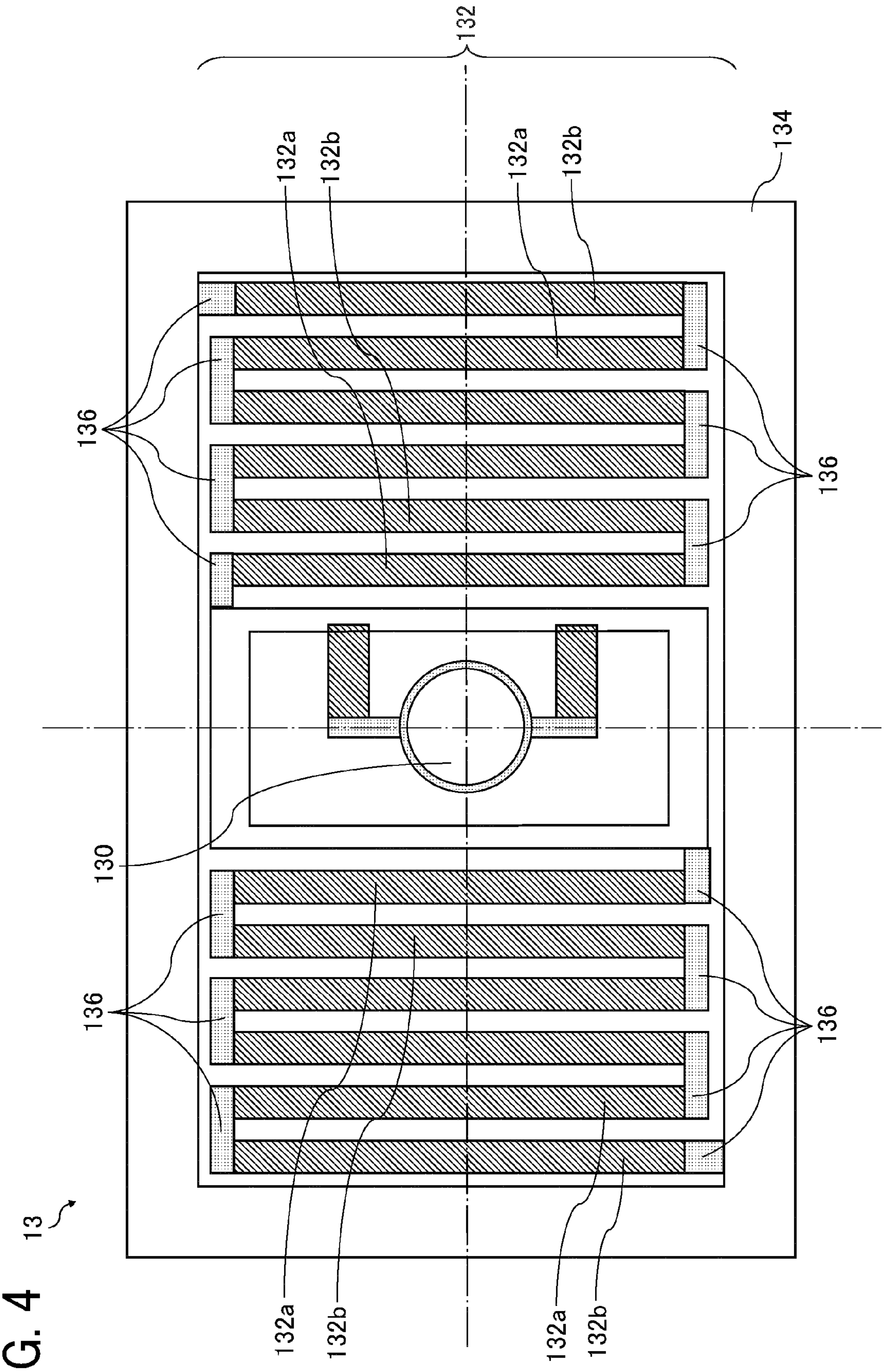
132
134
132a
132b
132a
132b
136
136
130
136
136
13
132a
132b
132a
132b

FIG. 5

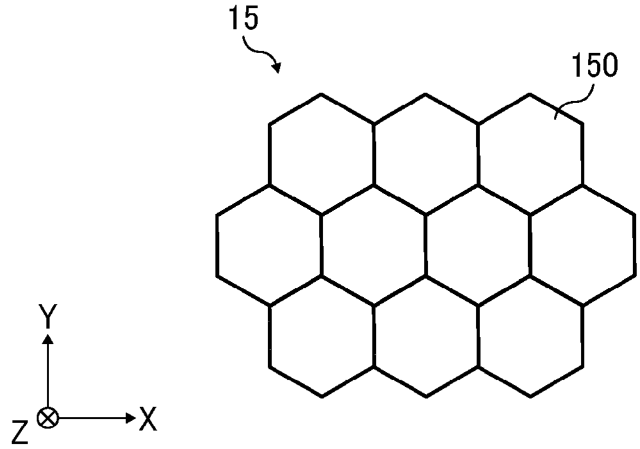


FIG. 6A

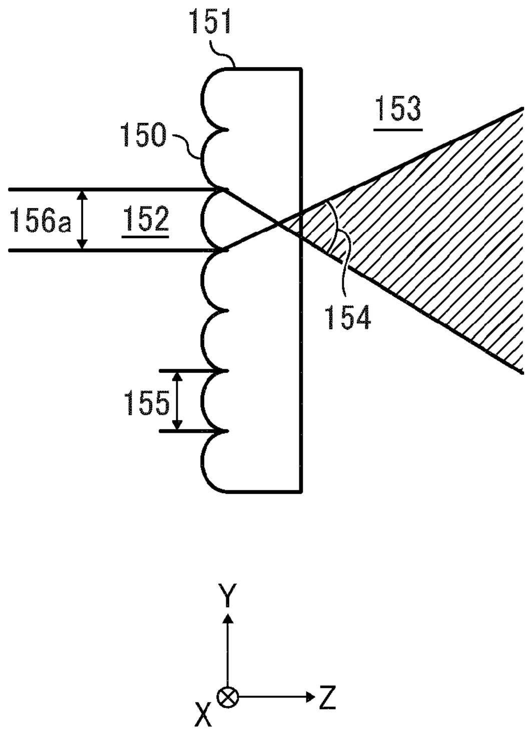


FIG. 6B

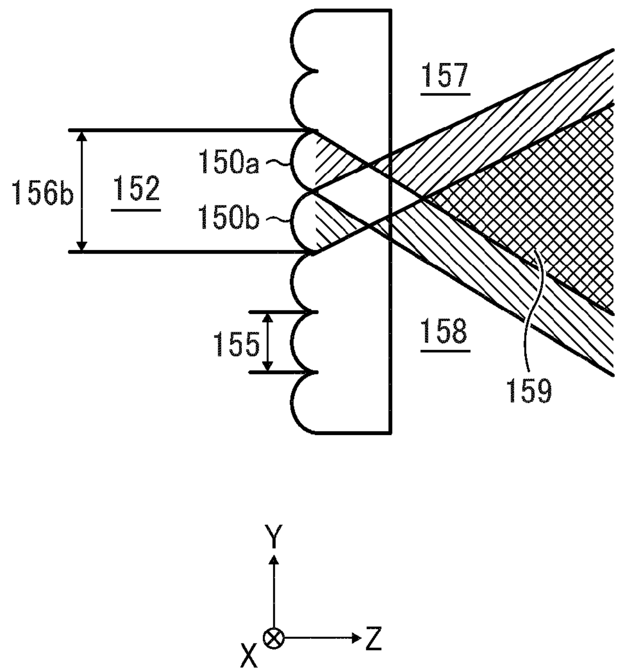

FIG. 7

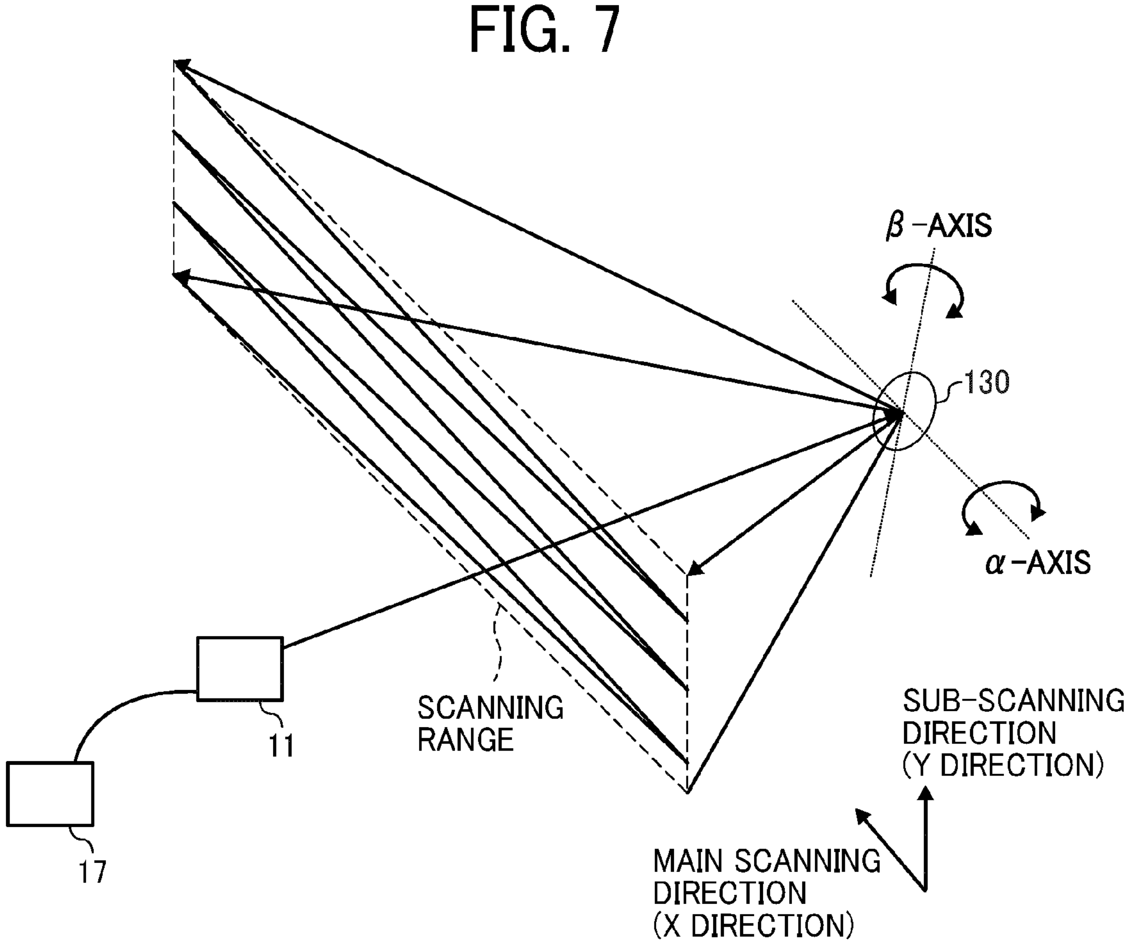
β-AXIS
130
α-AXIS
SCANNING
RANGE
11
17
SUB-SCANNING
DIRECTION
(Y DIRECTION)
MAIN SCANNING
DIRECTION
(X DIRECTION)

FIG. 8

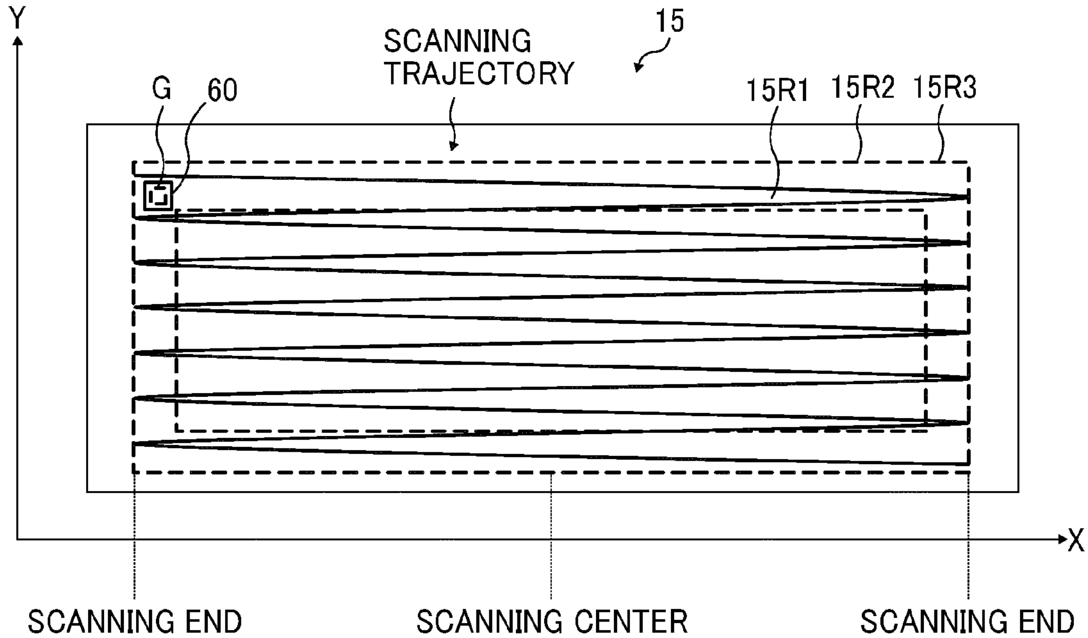
Y
SCANNING
TRAJECTORY
15
G
60
15R1
15R2
15R3
X
SCANNING END
SCANNING CENTER
SCANNING END

FIG. 9A

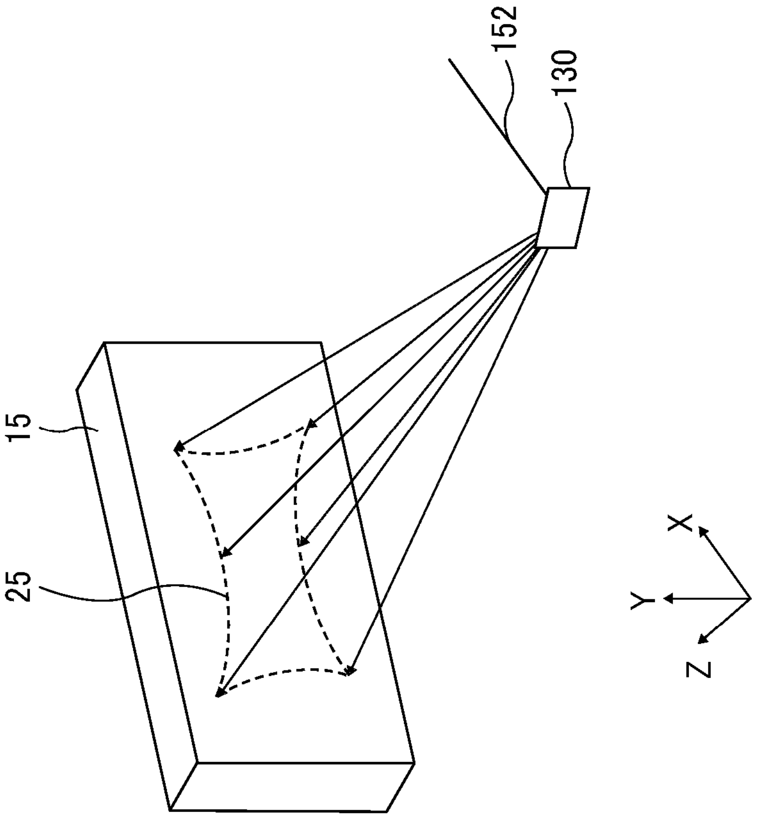


FIG. 9B

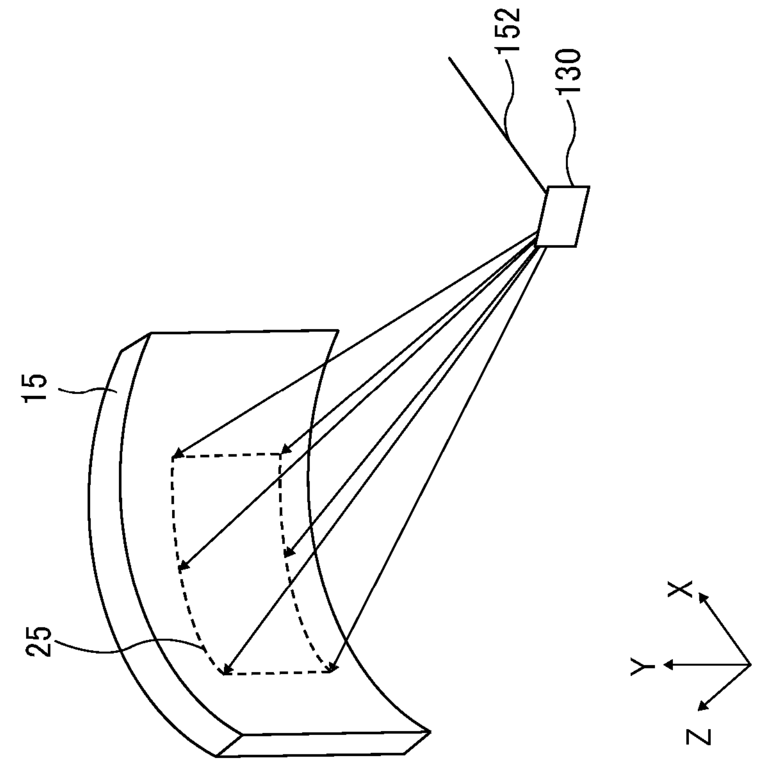

FIG. 10A

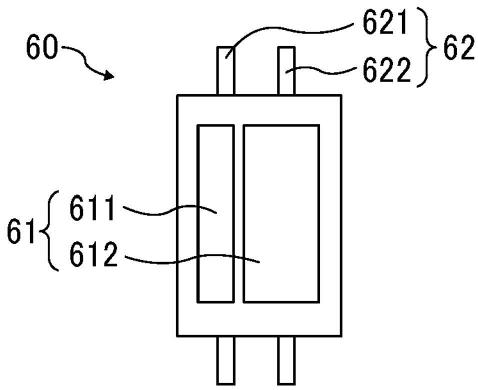


FIG. 10B

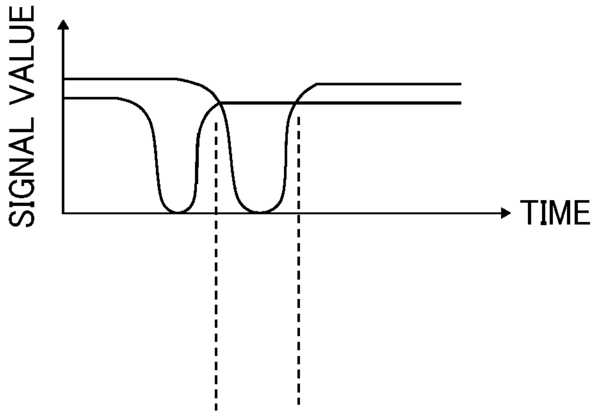


FIG. 10C

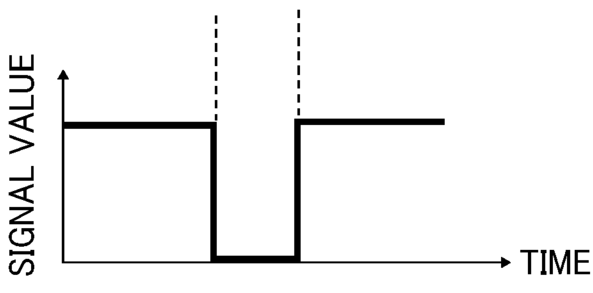

FIG. 11

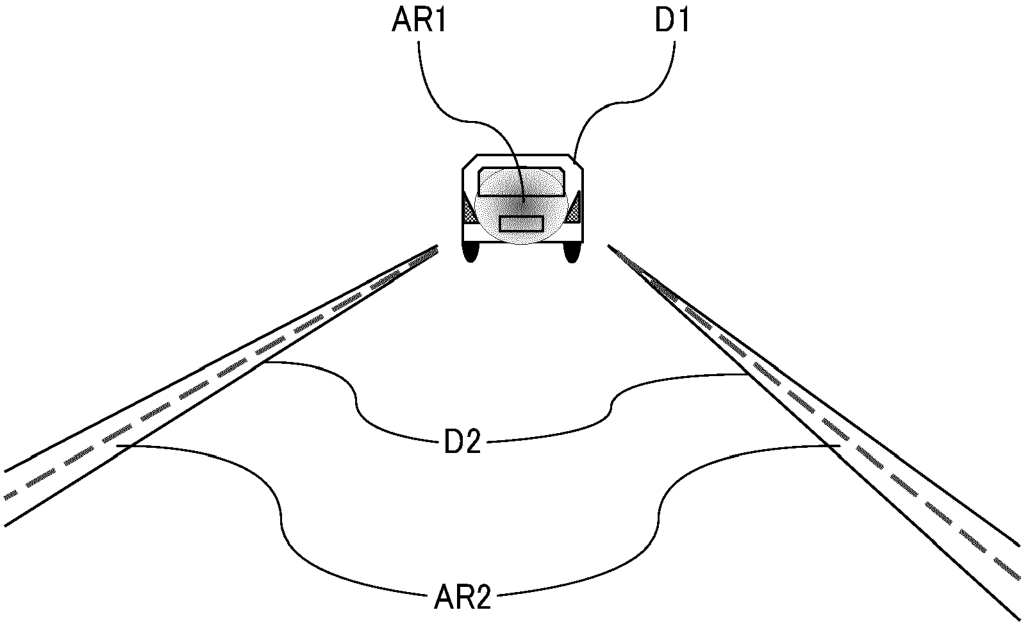

# FIG. 12A

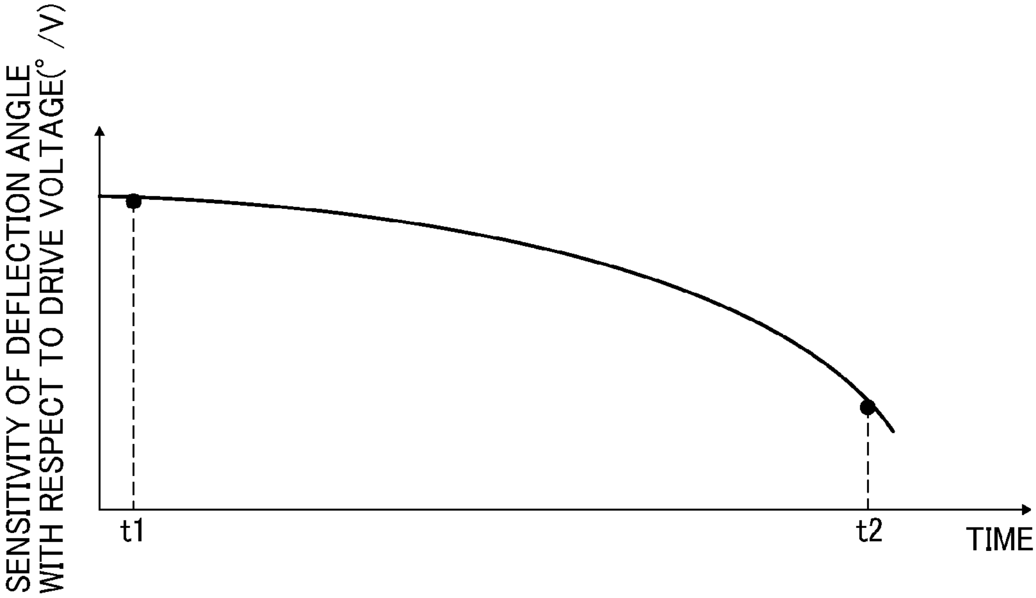


# FIG. 12B

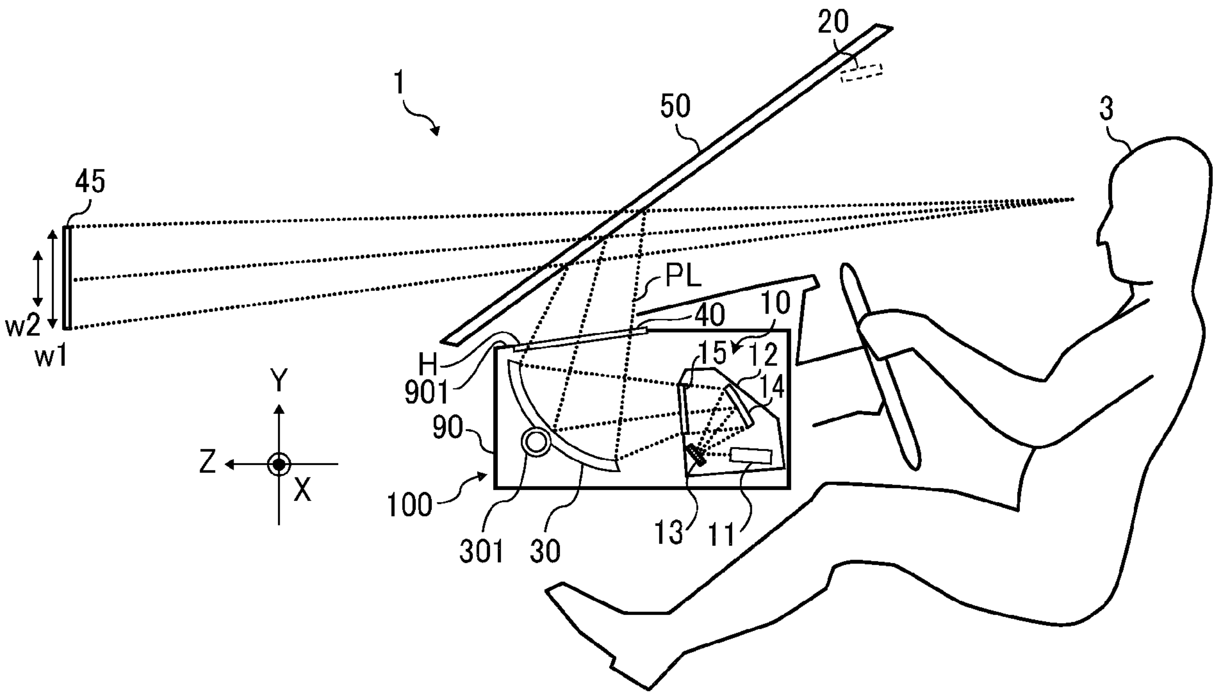

FIG. 13

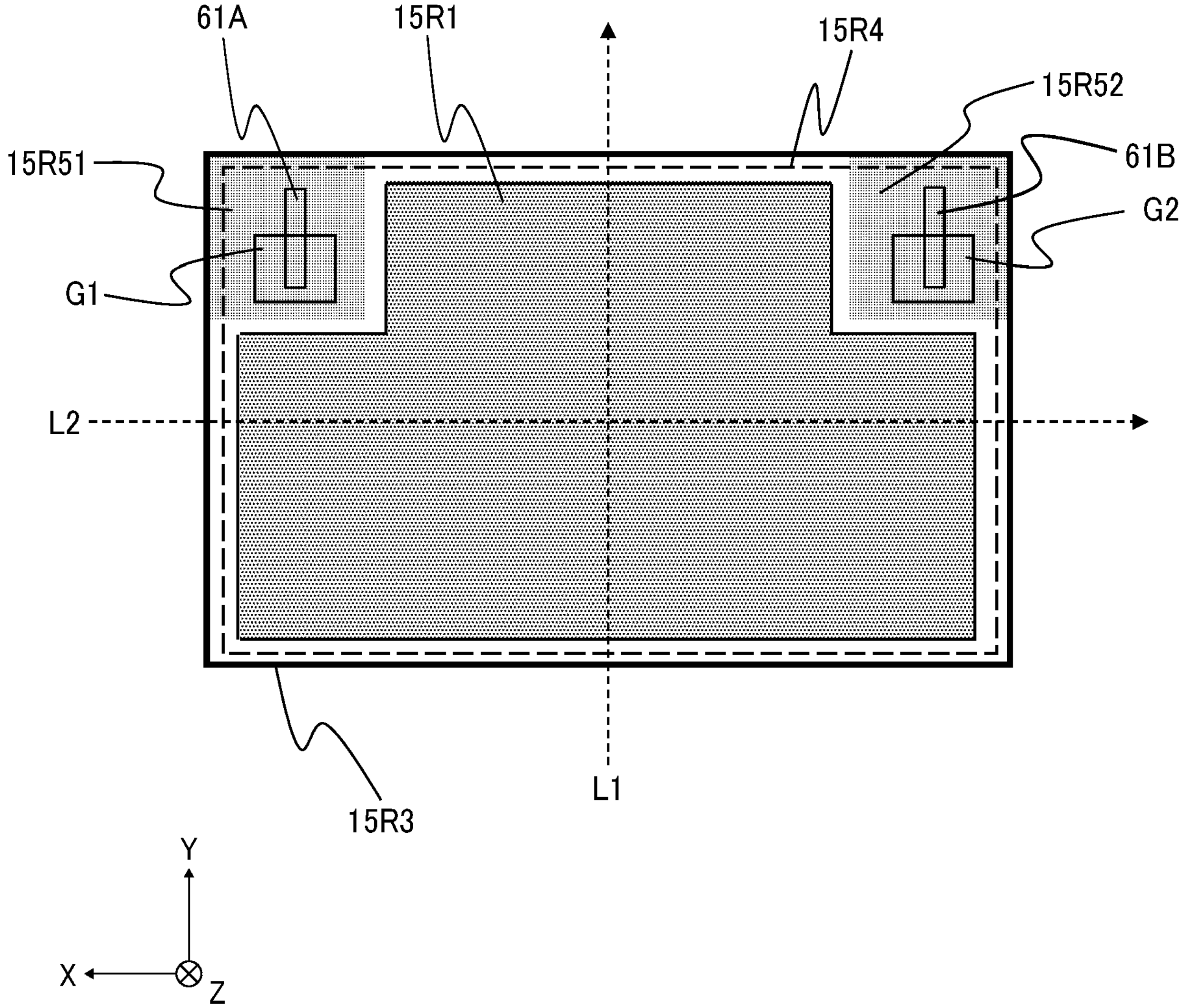

FIG. 14

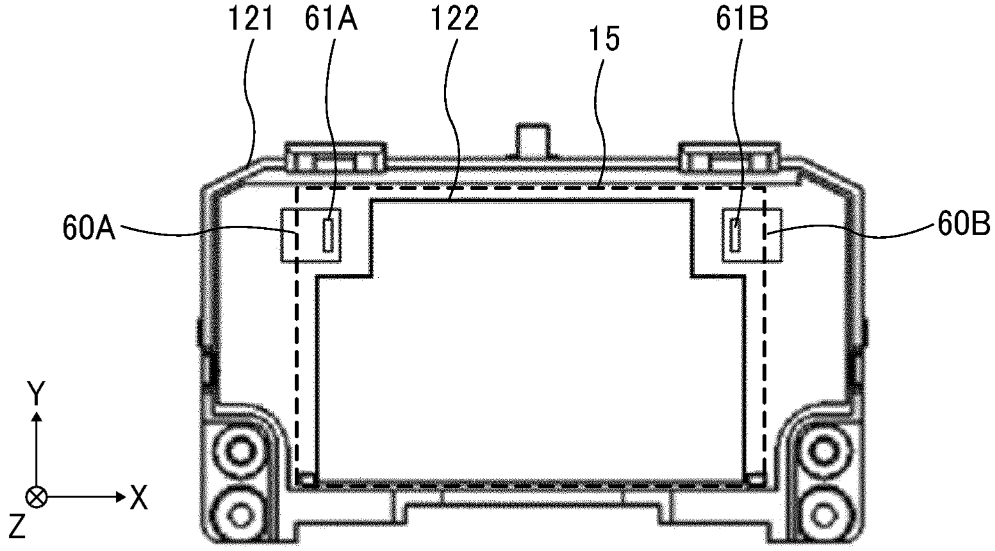


FIG. 15

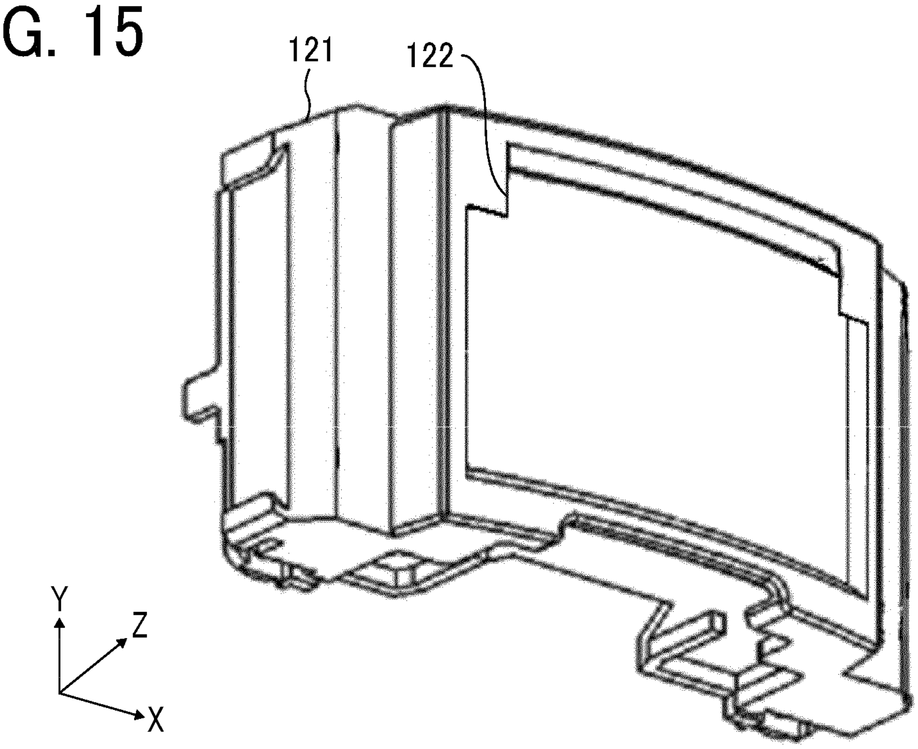

FIG. 16A

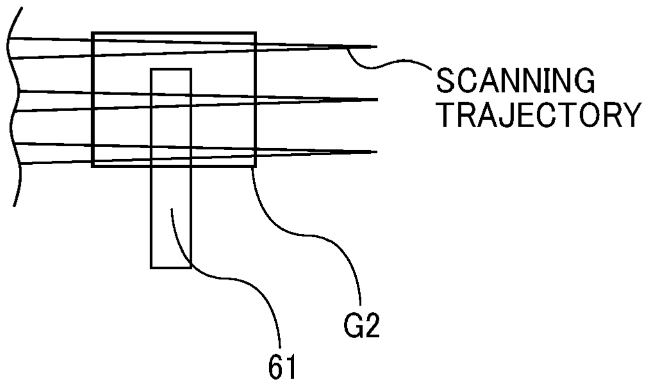


FIG. 16B

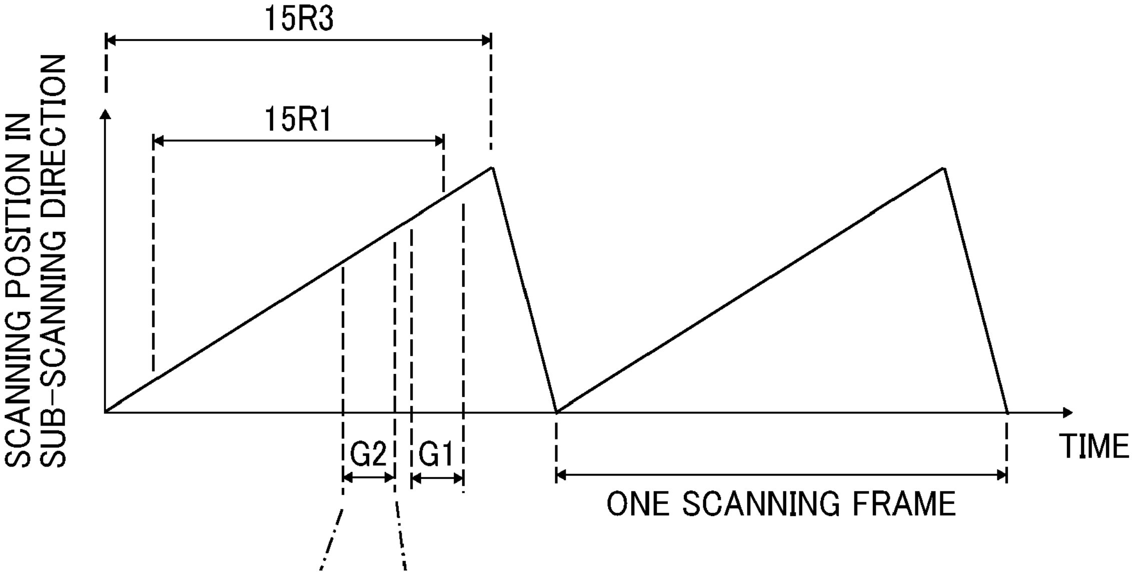


FIG. 16C

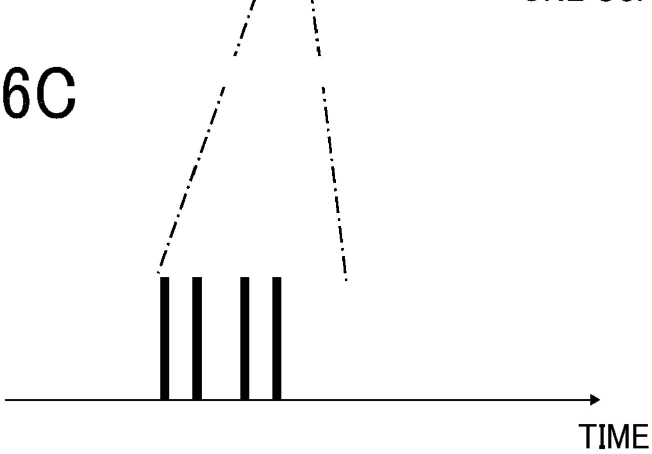

FIG. 17

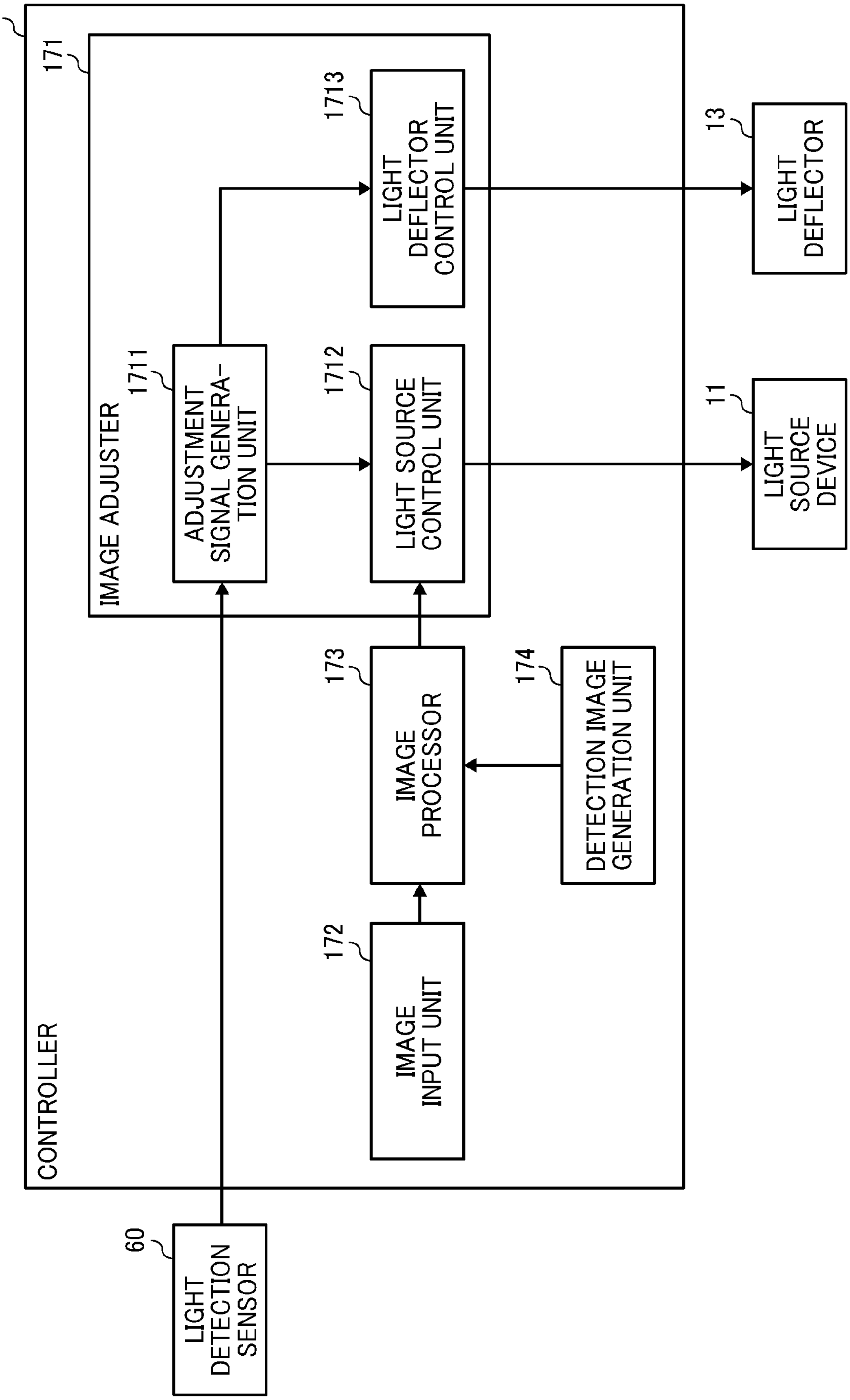
17
CONTROLLER
171
IMAGE ADJUSTER
1711
ADJUSTMENT SIGNAL GENERATION UNIT
1712
LIGHT SOURCE CONTROL UNIT
1713
LIGHT DEFLECTOR CONTROL UNIT
172
IMAGE INPUT UNIT
173
IMAGE PROCESSOR
174
DETECTION IMAGE GENERATION UNIT
60
LIGHT DETECTION SENSOR
11
LIGHT SOURCE DEVICE
13
LIGHT DEFLECTOR

FIG. 18

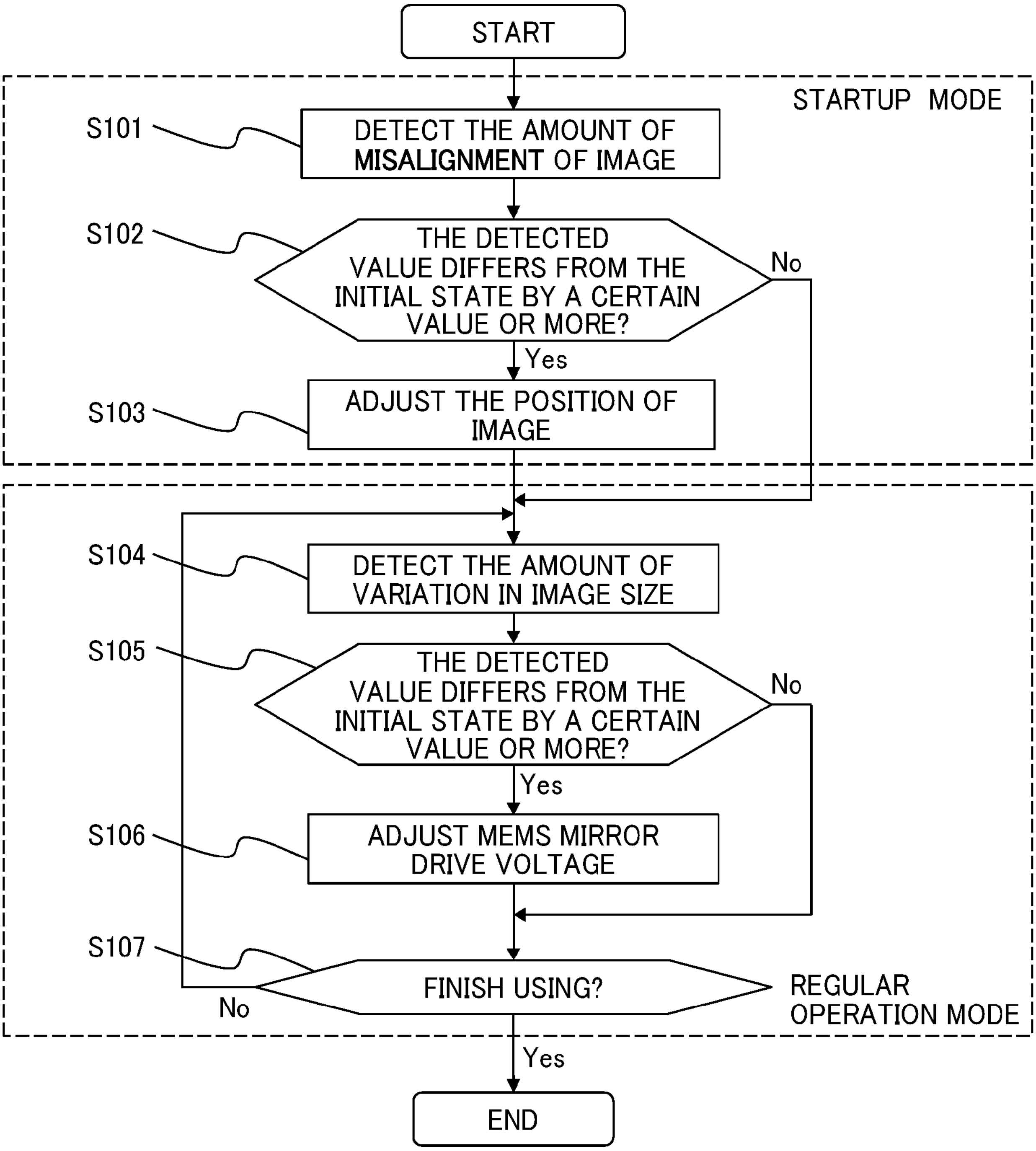
START
STARTUP MODE
S101
DETECT THE AMOUNT OF MISALIGNMENT OF IMAGE
S102
THE DETECTED VALUE DIFFERS FROM THE INITIAL STATE BY A CERTAIN VALUE OR MORE?
No
Yes
S103
ADJUST THE POSITION OF IMAGE
S104
DETECT THE AMOUNT OF VARIATION IN IMAGE SIZE
S105
THE DETECTED VALUE DIFFERS FROM THE INITIAL STATE BY A CERTAIN VALUE OR MORE?
No
Yes
S106
ADJUST MEMS MIRROR DRIVE VOLTAGE
S107
FINISH USING?
No
REGULAR OPERATION MODE
Yes
END

FIG. 19A

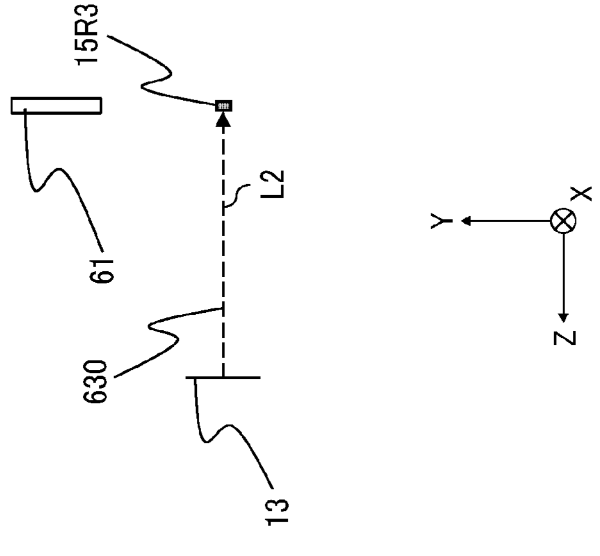


FIG. 19B

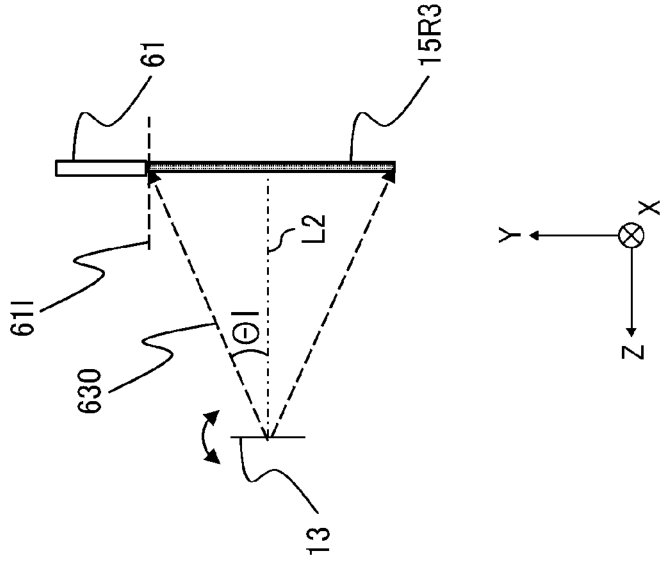


FIG. 19C

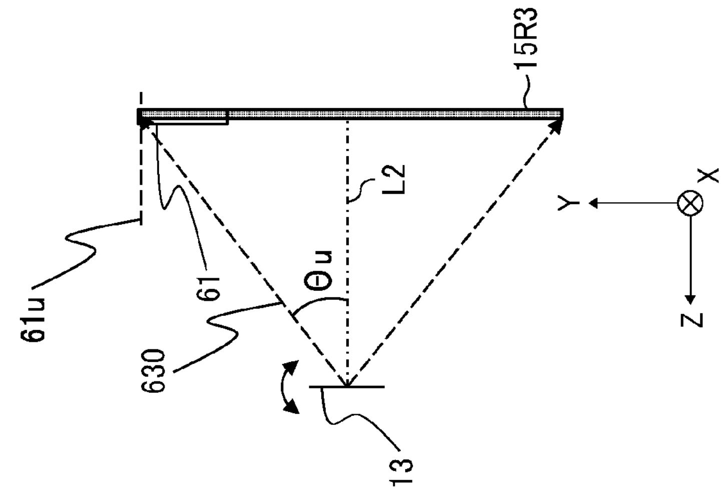

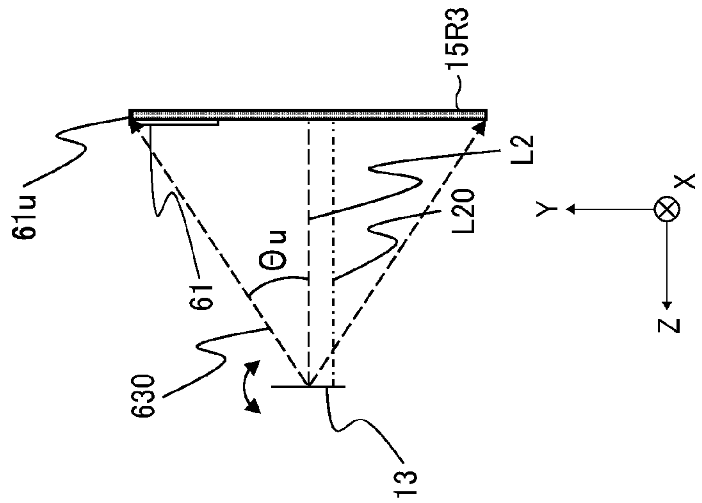


FIG. 20C

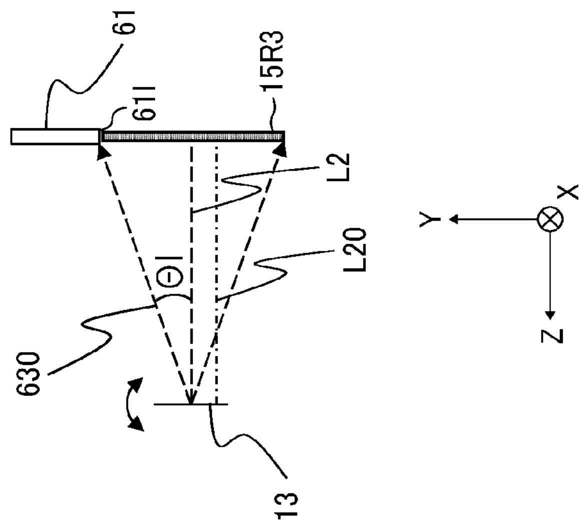


FIG. 20B

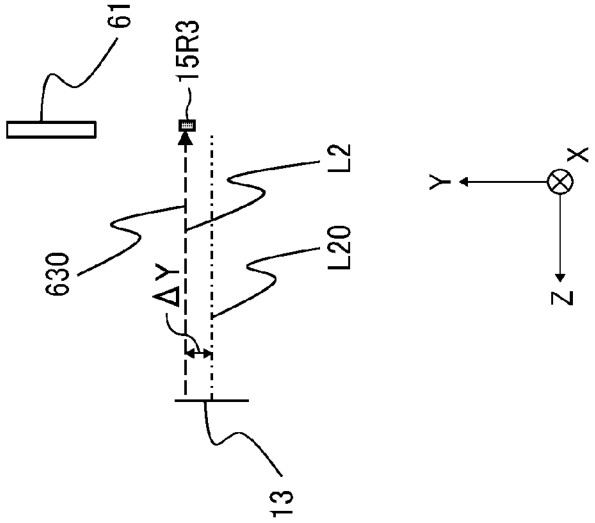


FIG. 20A

FIG. 21A

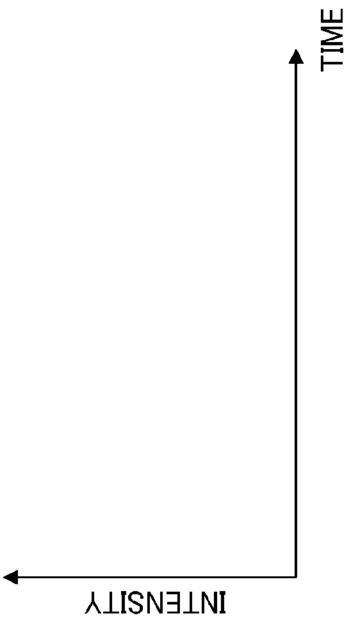


FIG. 21B

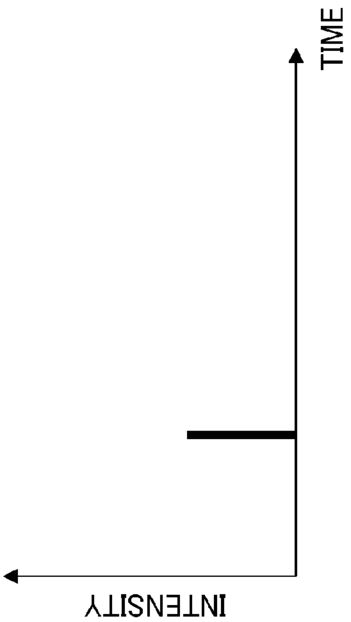


FIG. 21C

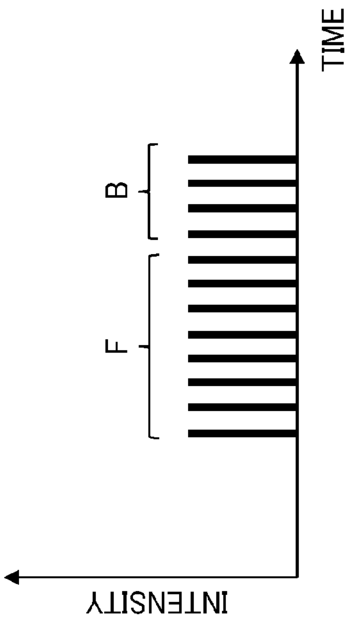


FIG. 21D

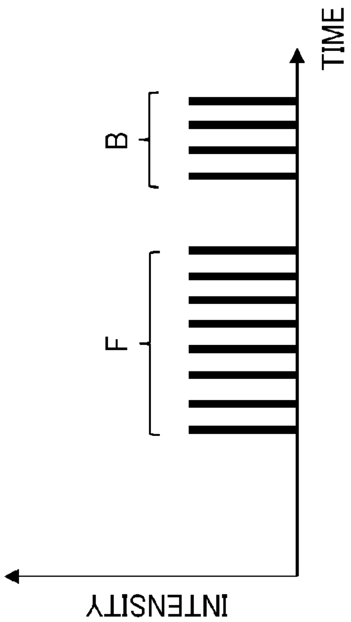

FIG. 22

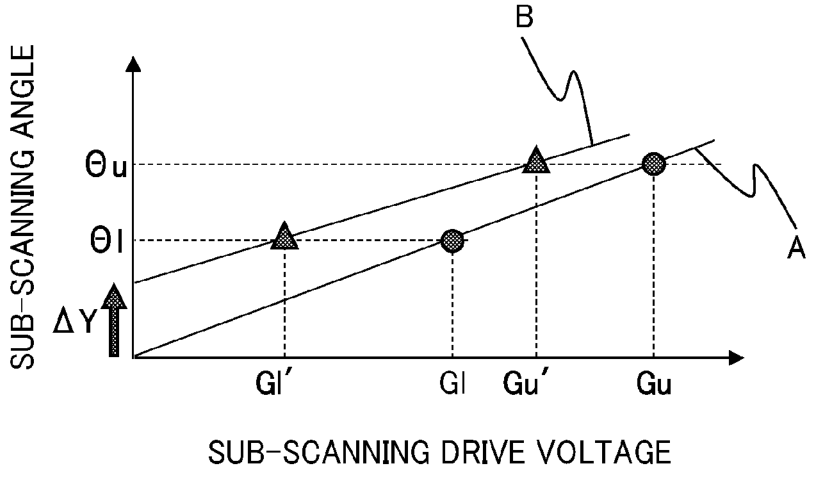
B
SUB-SCANNING ANGLE
Θu
Θl
ΔY
A
Gl′
Gl
Gu′
Gu
SUB-SCANNING DRIVE VOLTAGE

FIG. 23

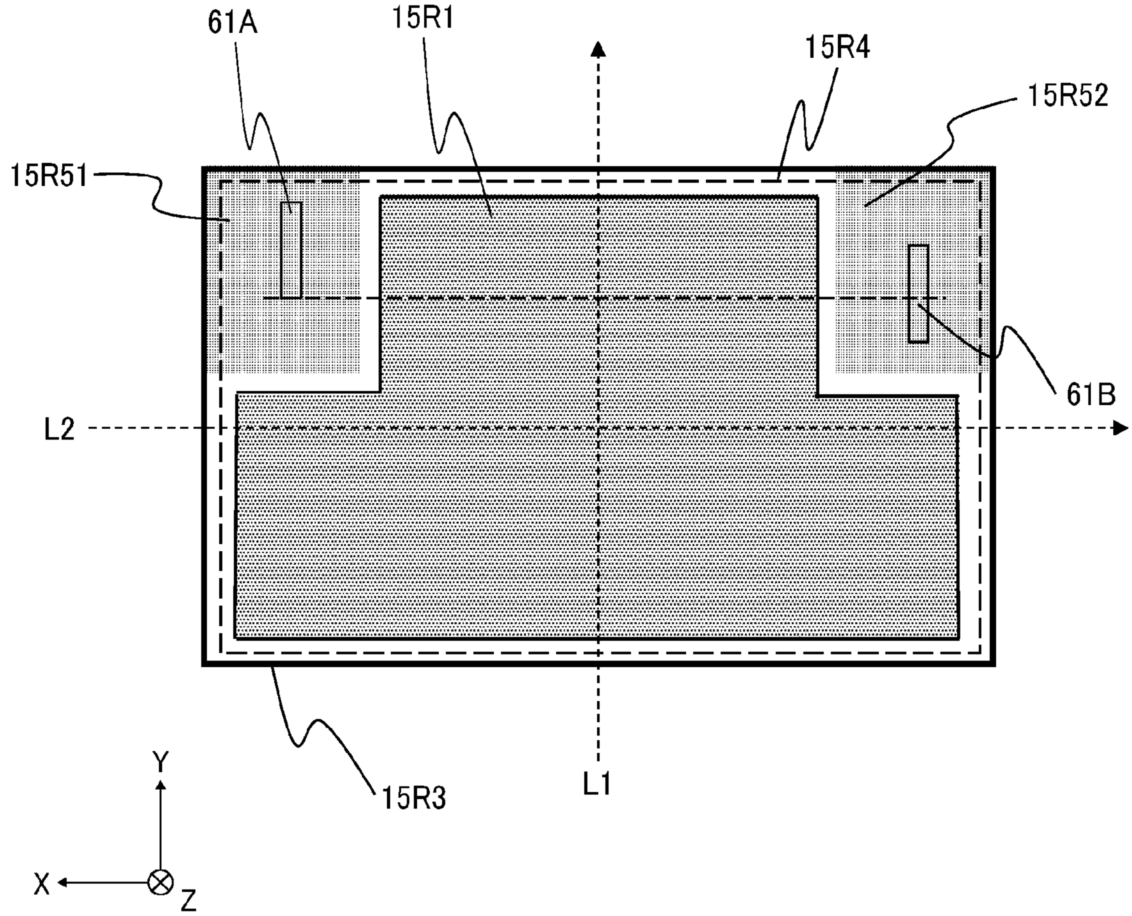
61A
15R1
15R4
15R52
15R51
61B
L2
15R3
L1
Y
X
Z

FIG. 24

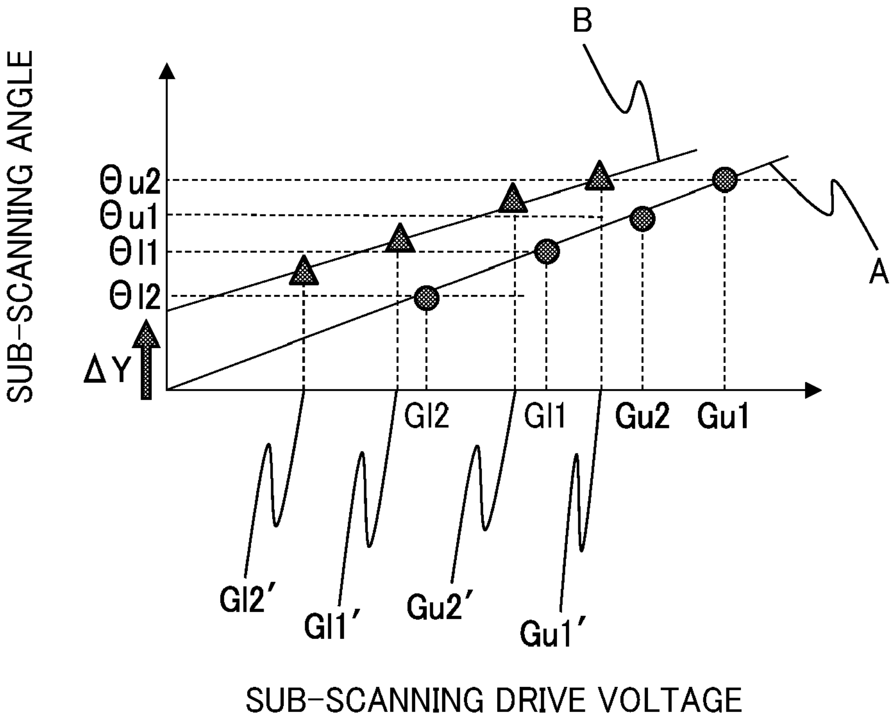
B
SUB-SCANNING ANGLE
Θu2
Θu1
Θl1
Θl2
ΔY
A
Gl2
Gl1
Gu2
Gu1
Gl2'
Gl1'
Gu2'
Gu1'
SUB-SCANNING DRIVE VOLTAGE

FIG. 25A

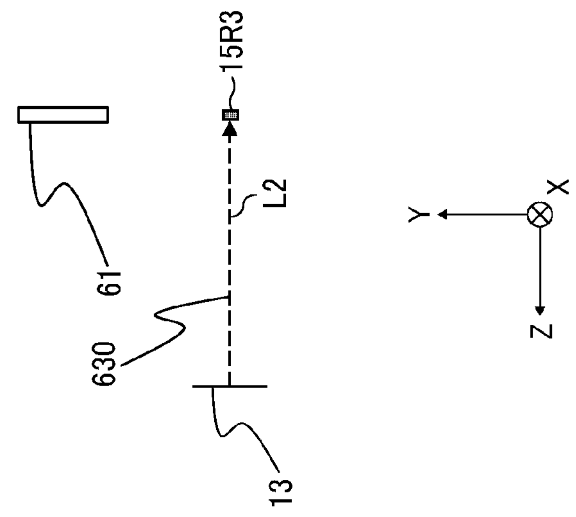


FIG. 25B

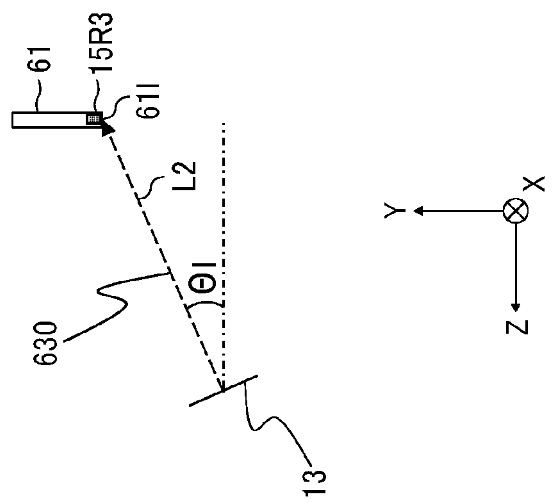


FIG. 25C

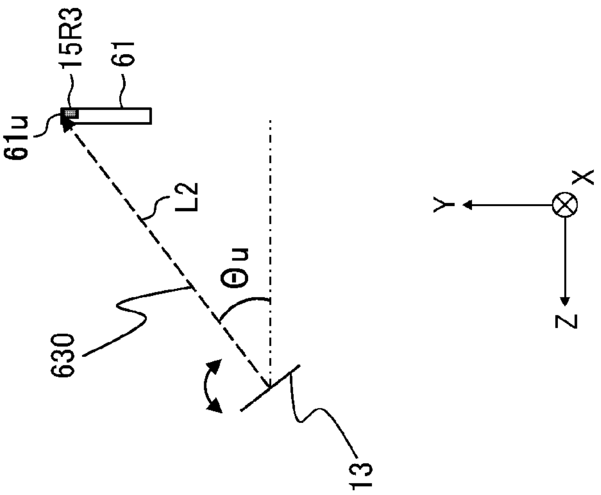

FIG. 26A

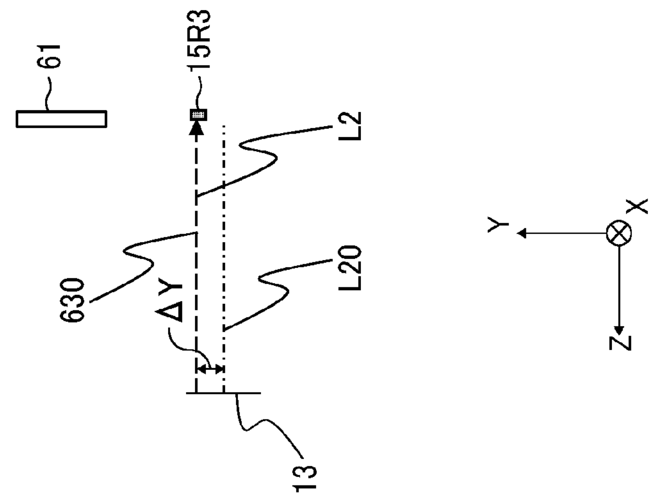


FIG. 26B

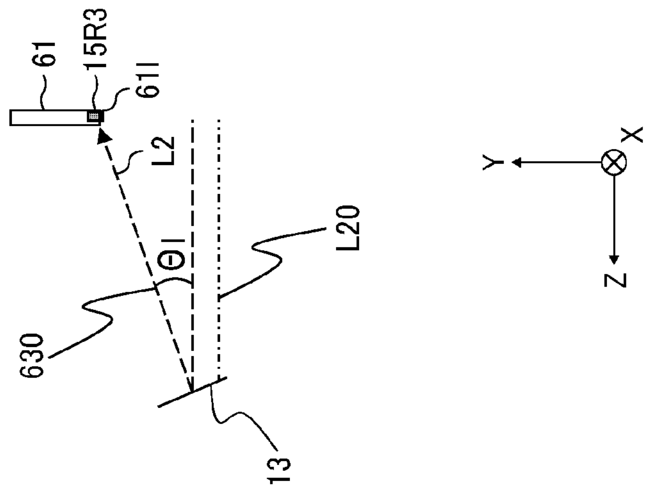


FIG. 26C

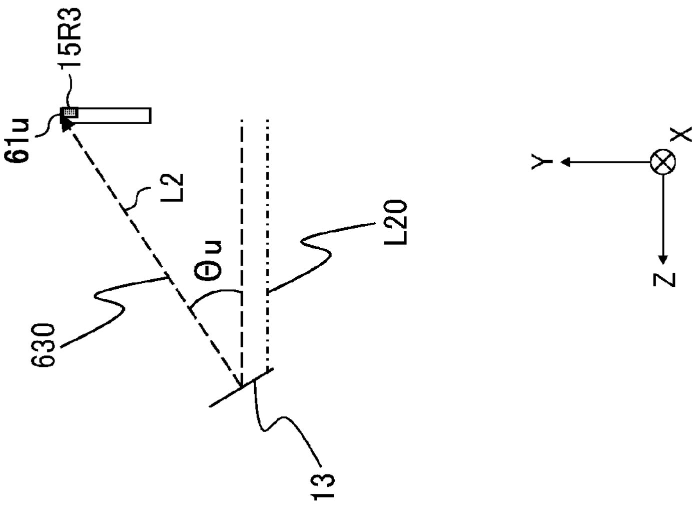

FIG. 27A

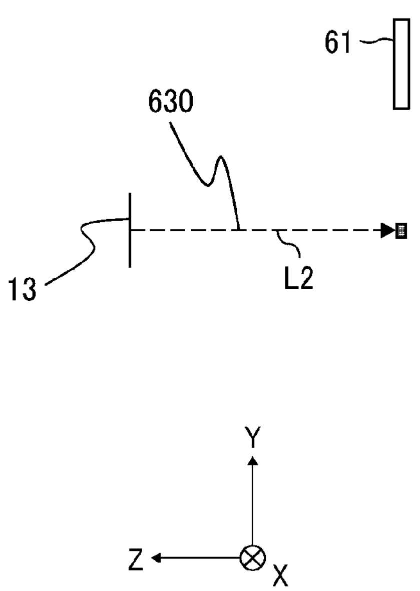


FIG. 27B

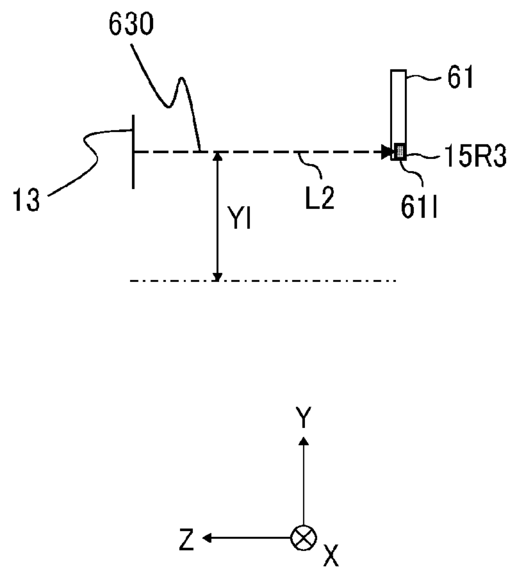


FIG. 27C

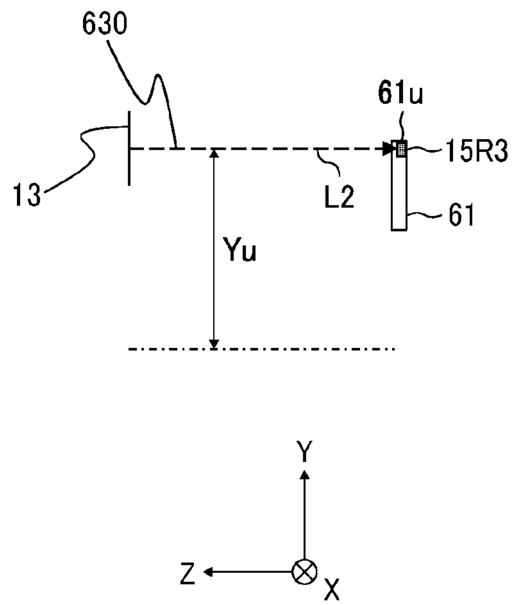

FIG. 28A

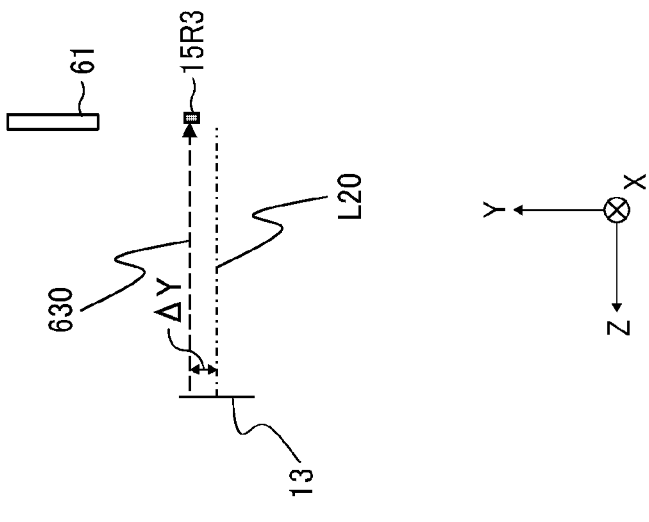


FIG. 28B

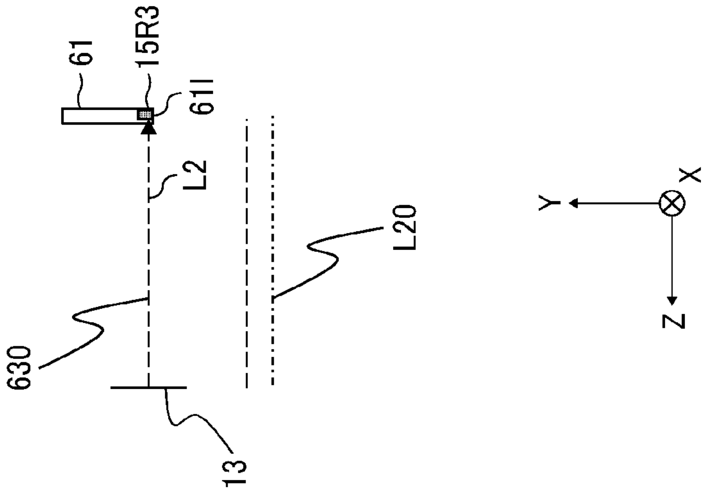


FIG. 28C

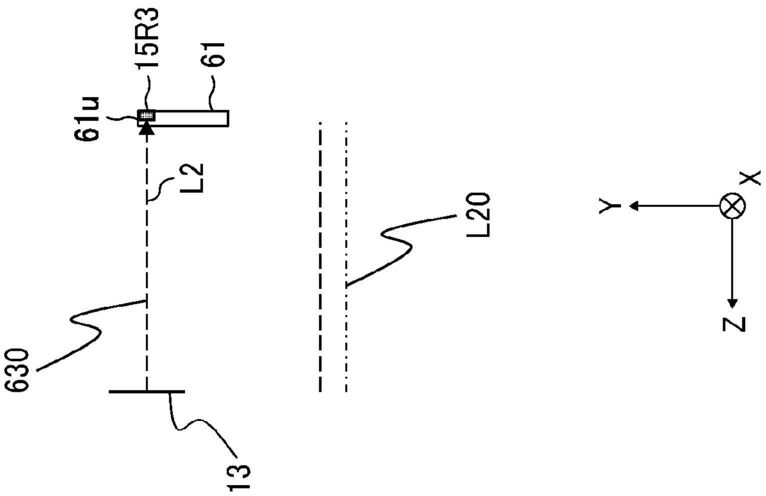

FIG. 29

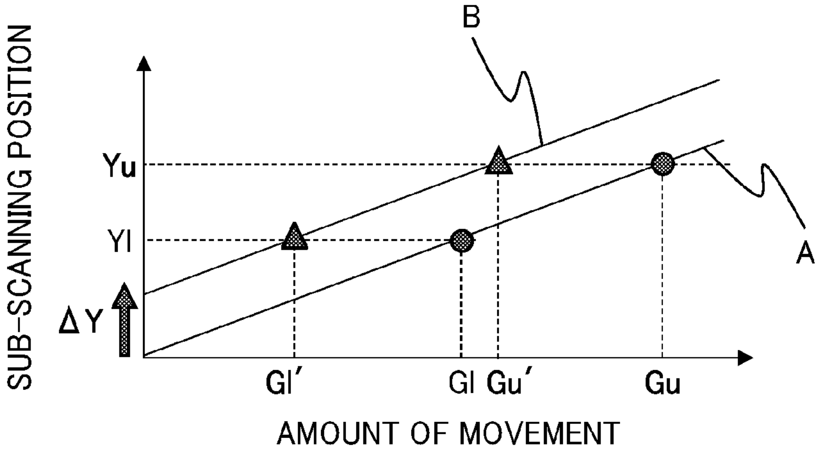
B
SUB-SCANNING POSITION
Yu
Yl
ΔY
A
Gl′
Gl
Gu′
Gu
AMOUNT OF MOVEMENT

FIG. 30

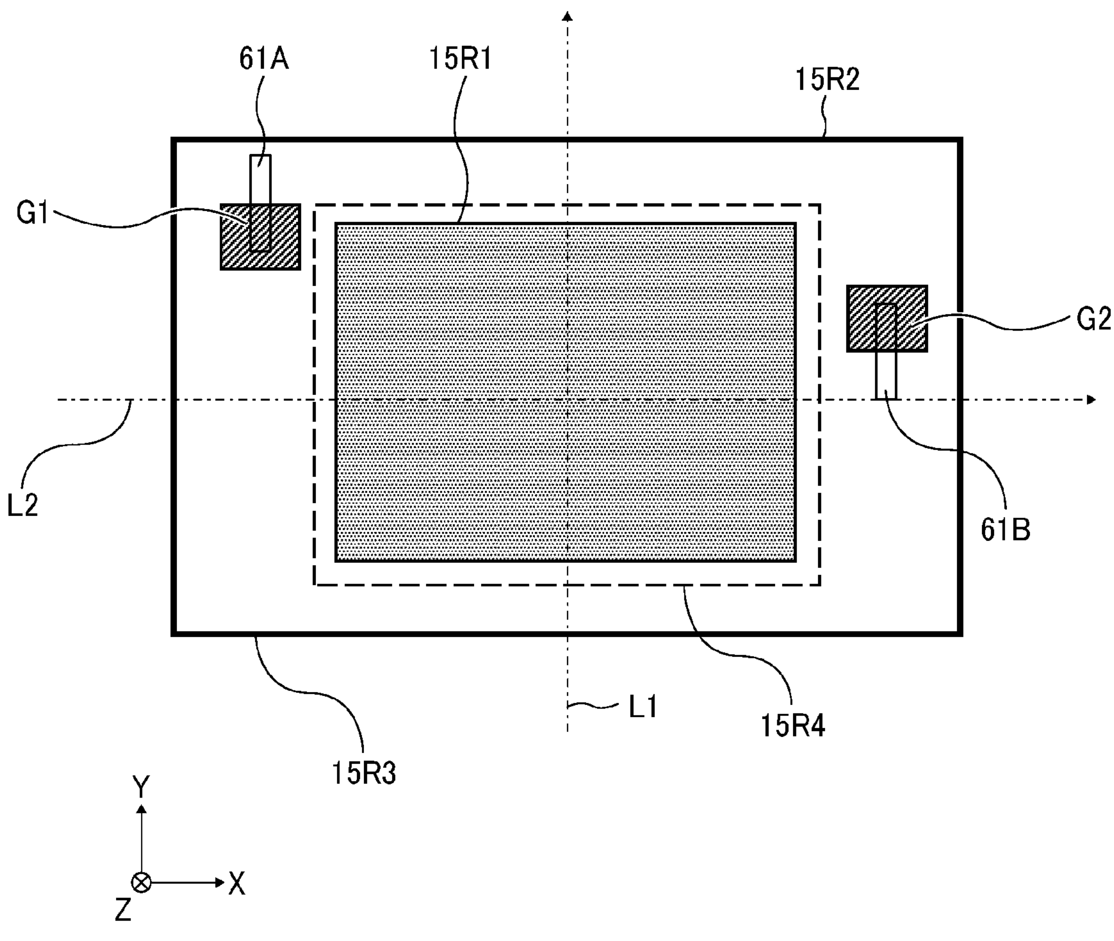
61A
15R1
15R2
G1
G2
L2
61B
L1
15R4
15R3
Y
X
Z

FIG. 31A

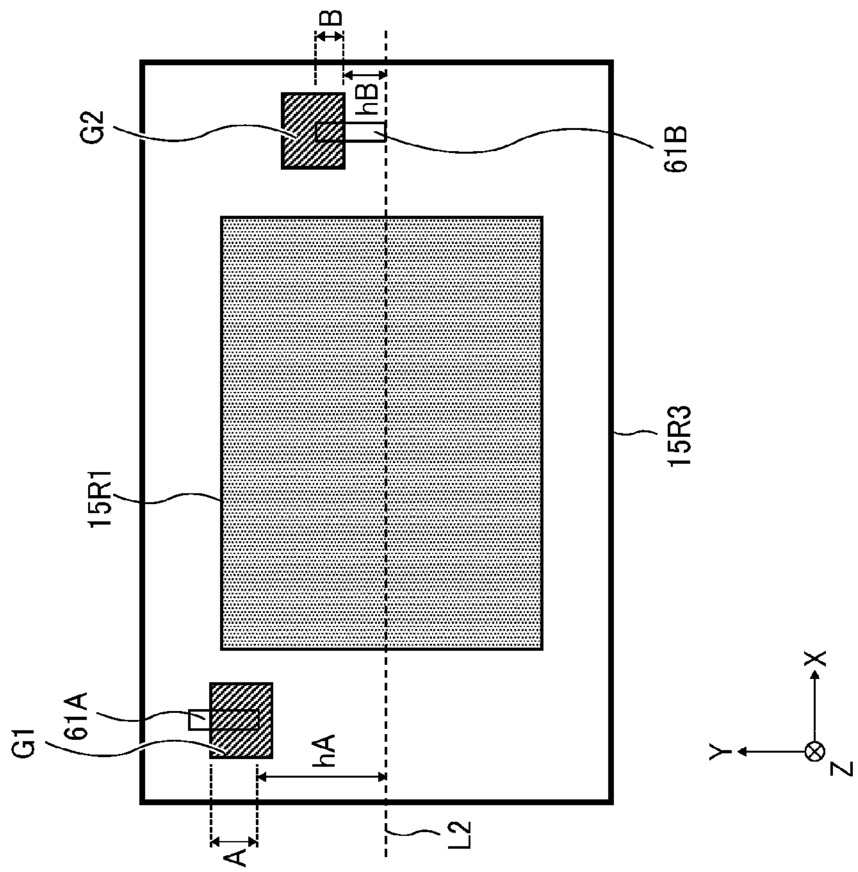


FIG. 31B

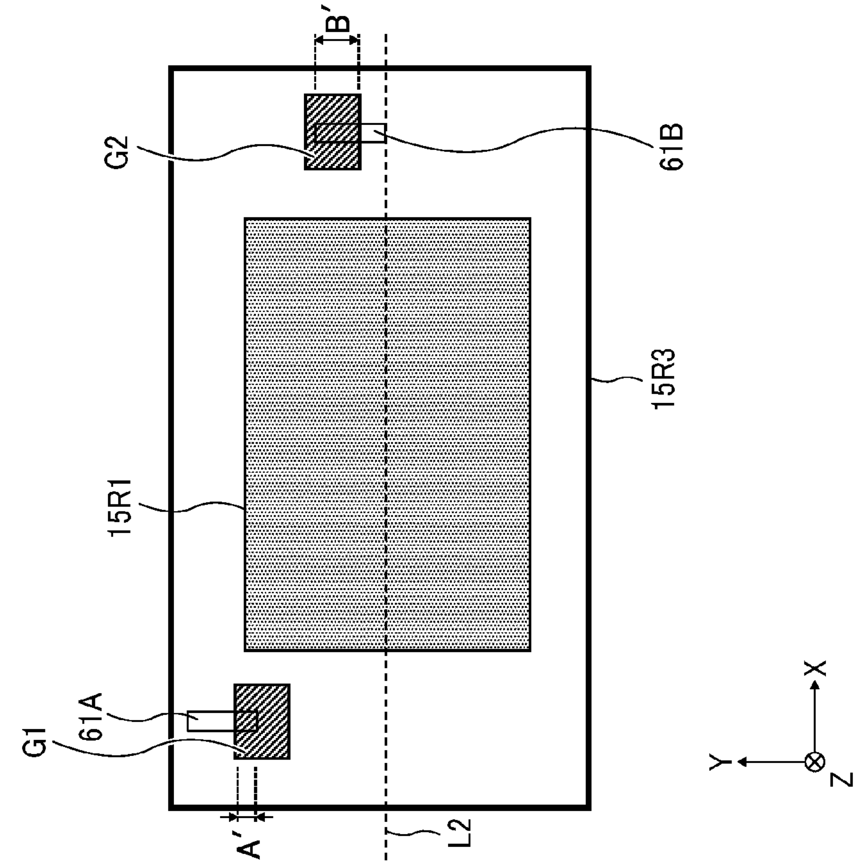

FIG. 32B

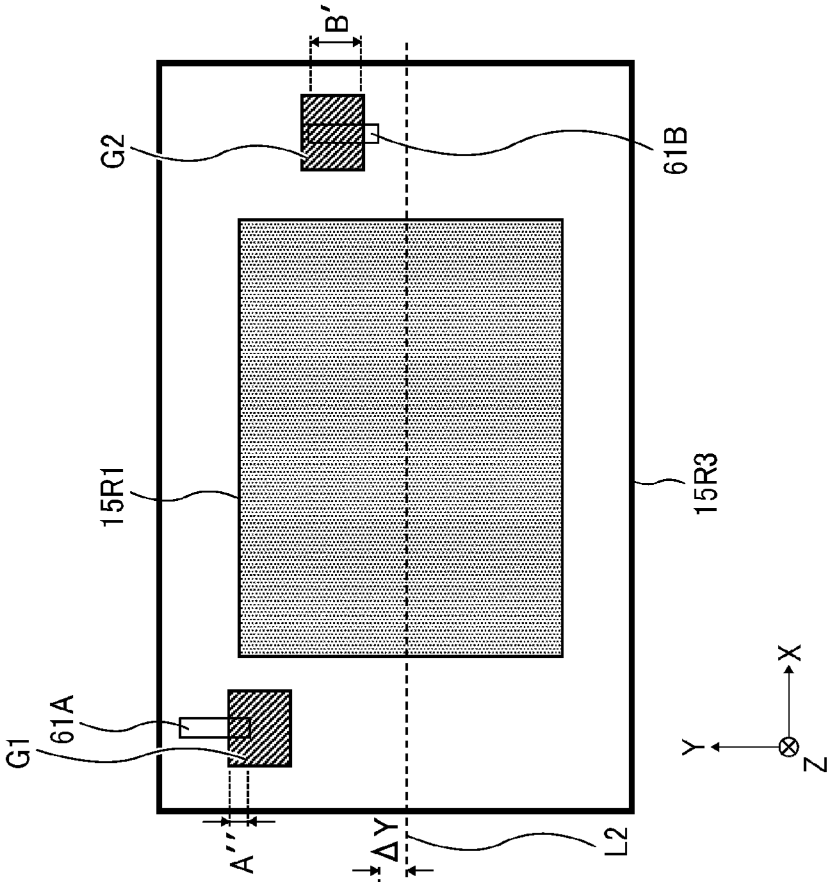


FIG. 32A

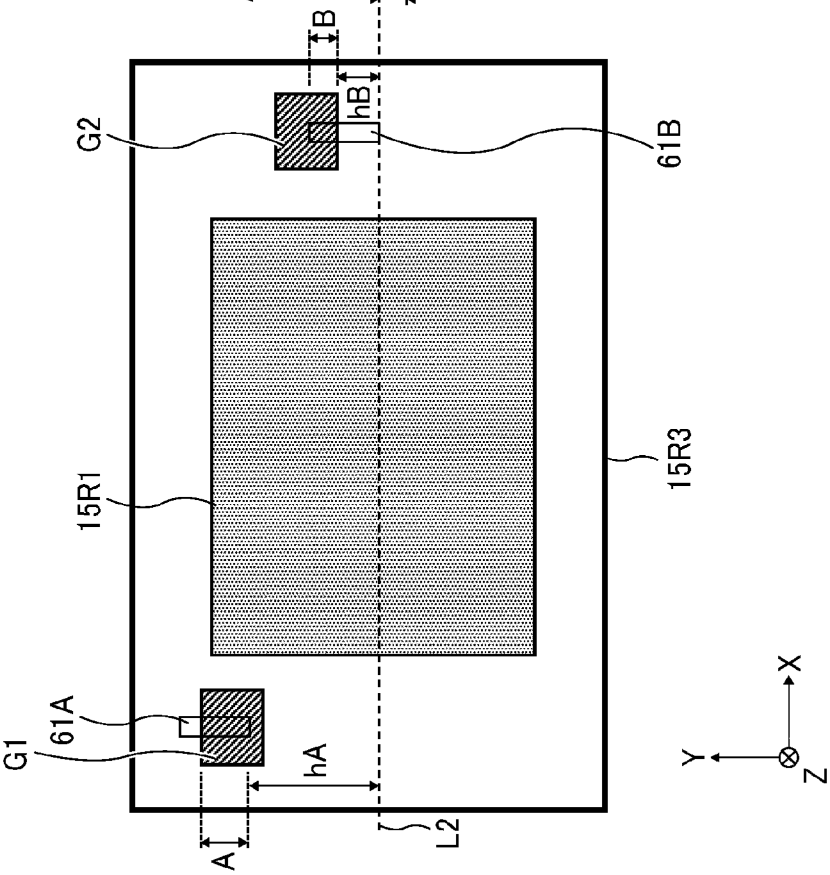

FIG. 33

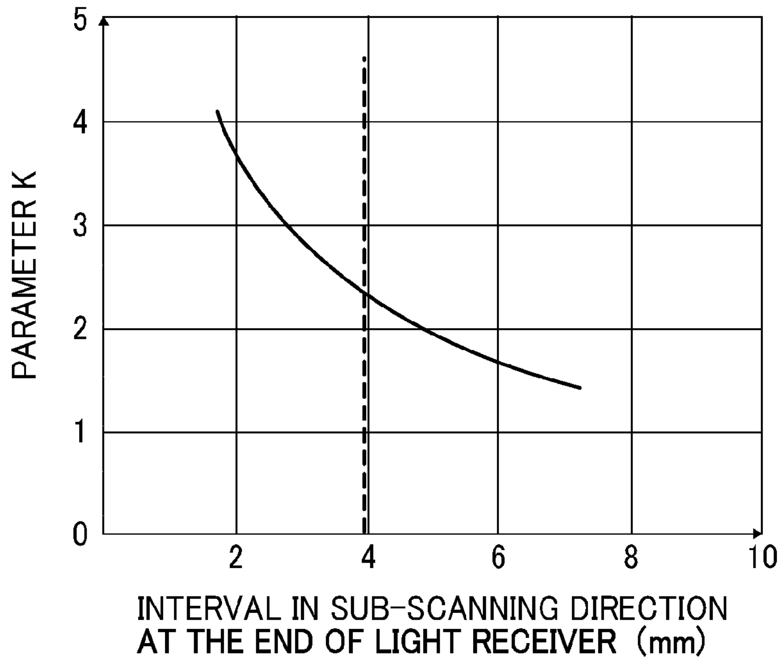
5
4
3
2
1
0
PARAMETER K
2
4
6
8
10
INTERVAL IN SUB-SCANNING DIRECTION
AT THE END OF LIGHT RECEIVER (mm)

FIG. 34

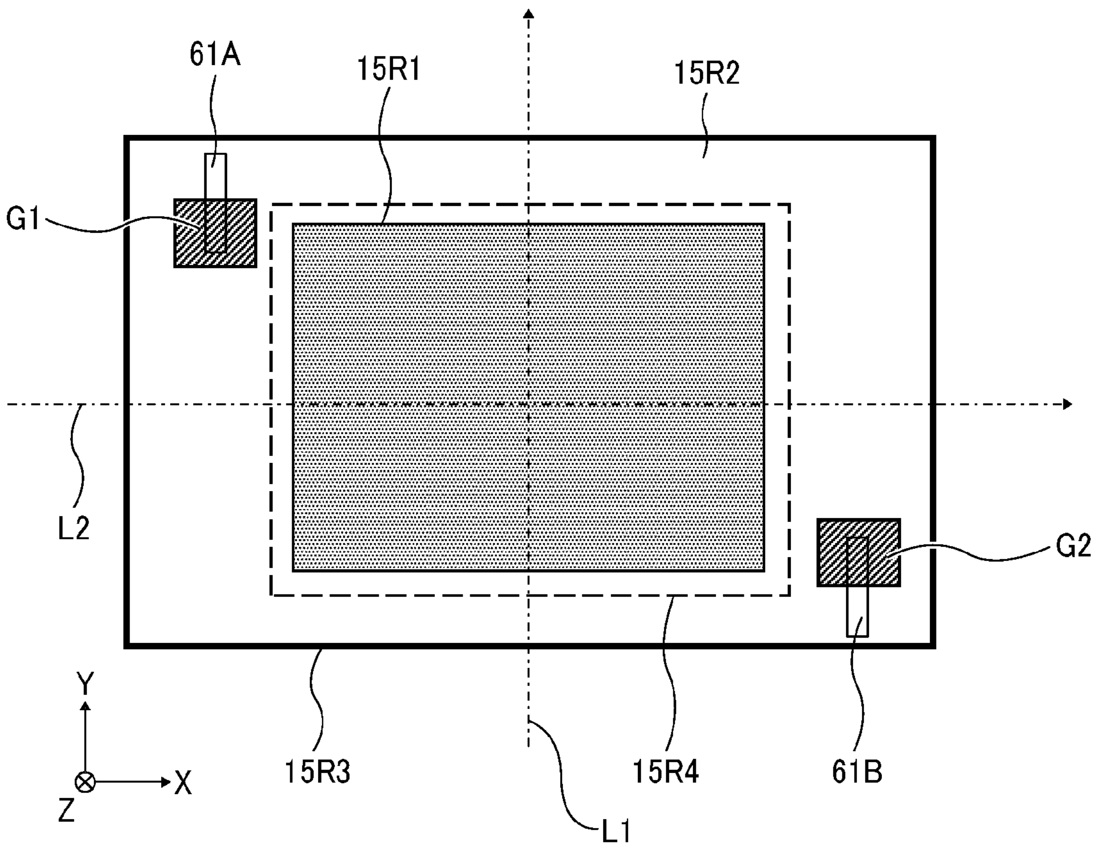
61A
15R1
15R2
G1
L2
G2
Y
X
Z
15R3
15R4
61B
L1

FIG. 35

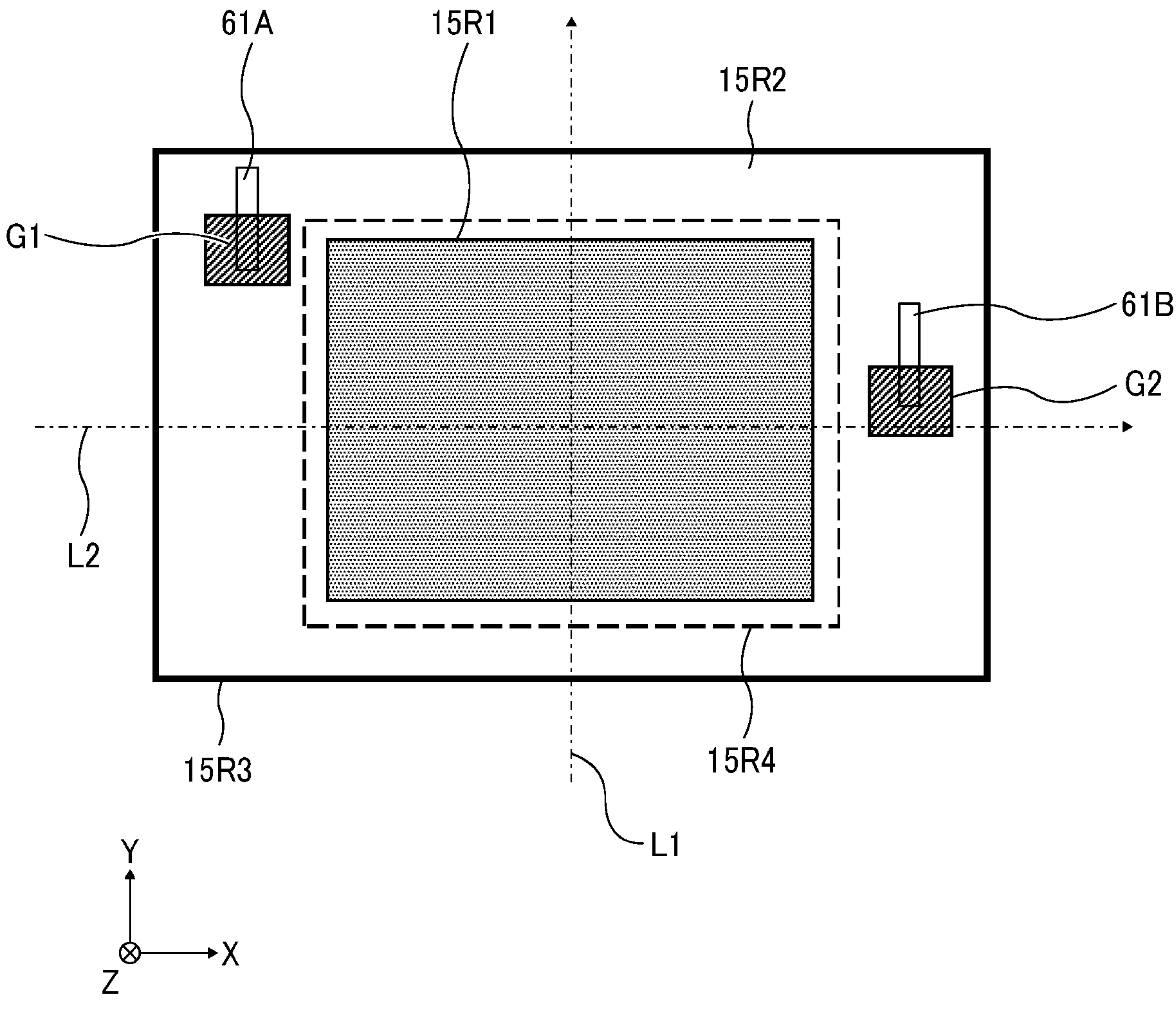

FIG. 36

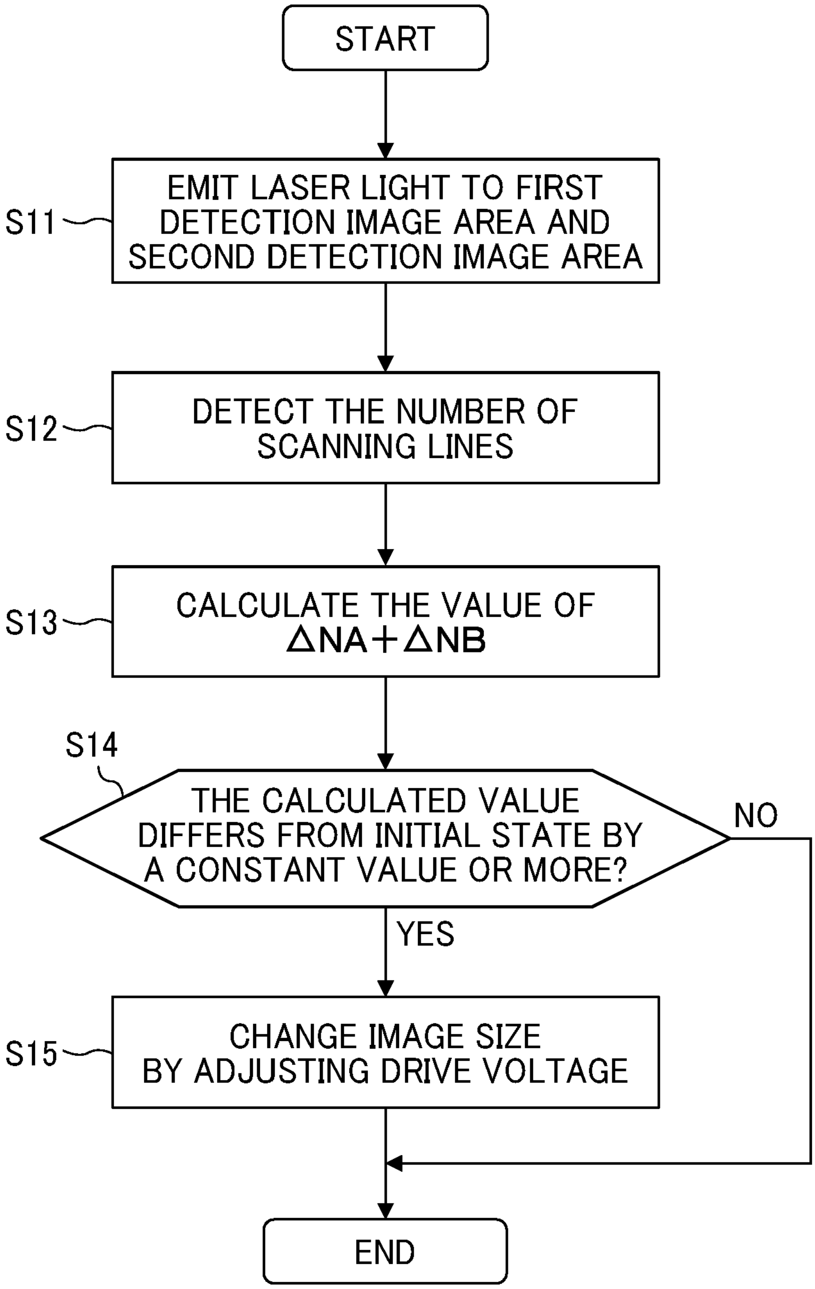
START
S11
EMIT LASER LIGHT TO FIRST DETECTION IMAGE AREA AND SECOND DETECTION IMAGE AREA
S12
DETECT THE NUMBER OF SCANNING LINES
S13
CALCULATE THE VALUE OF ΔNA+ΔNB
S14
THE CALCULATED VALUE DIFFERS FROM INITIAL STATE BY A CONSTANT VALUE OR MORE?
NO
YES
S15
CHANGE IMAGE SIZE BY ADJUSTING DRIVE VOLTAGE
END

FIG. 37

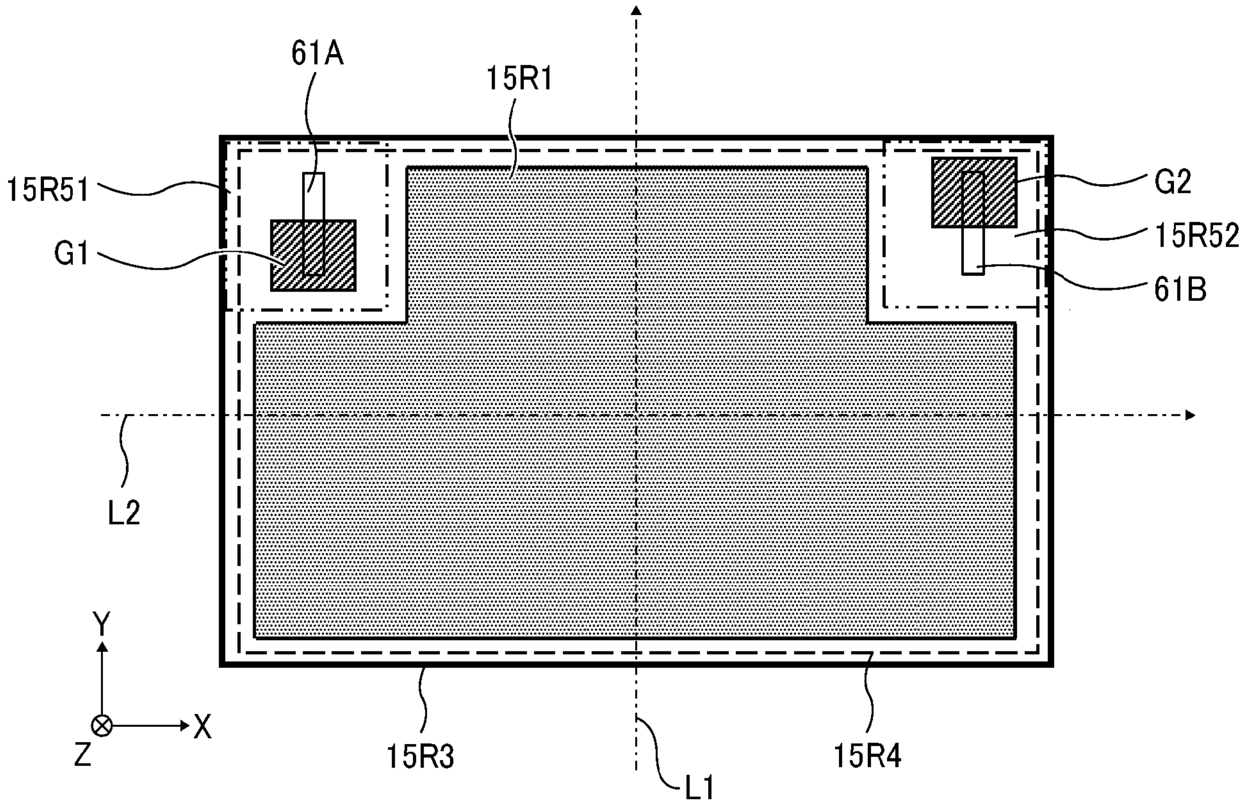

FIG. 38

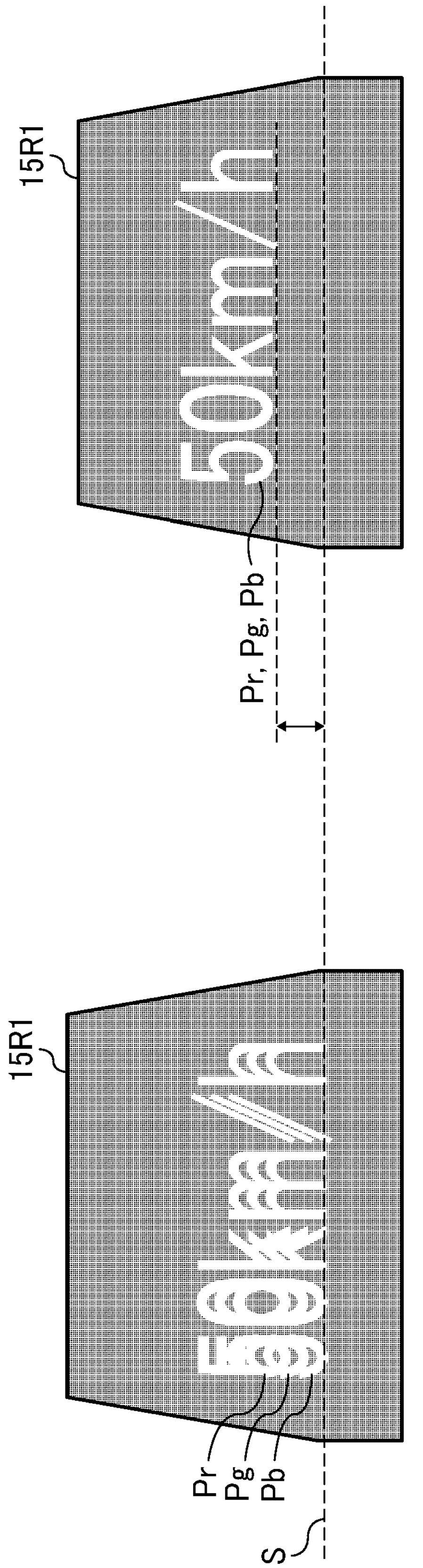

FIG. 39A

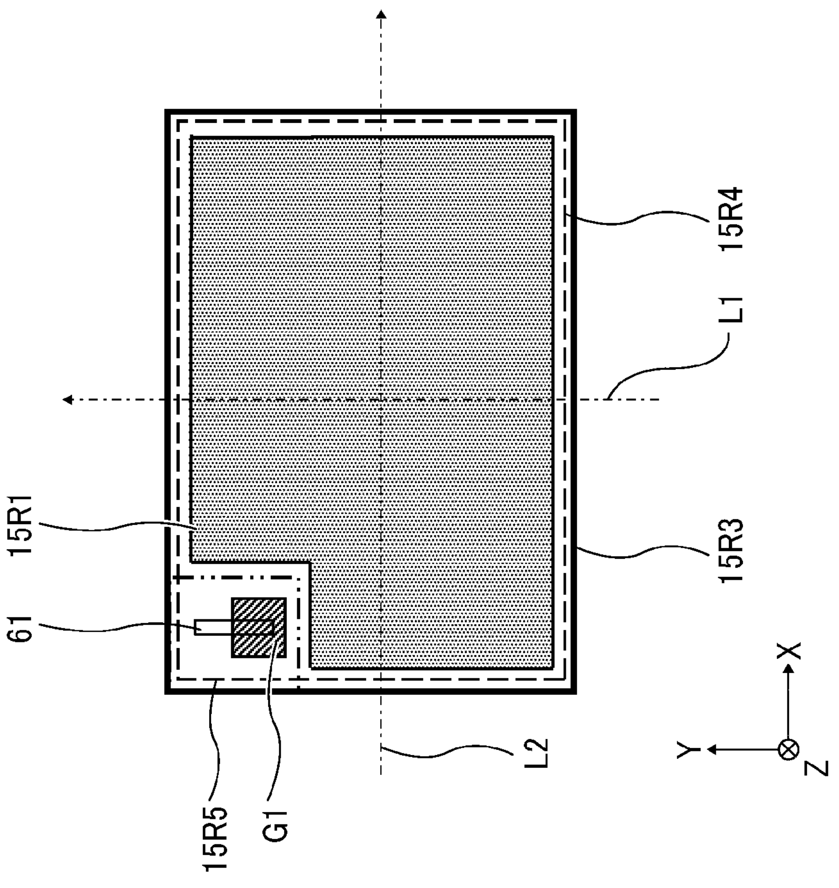


FIG. 39B

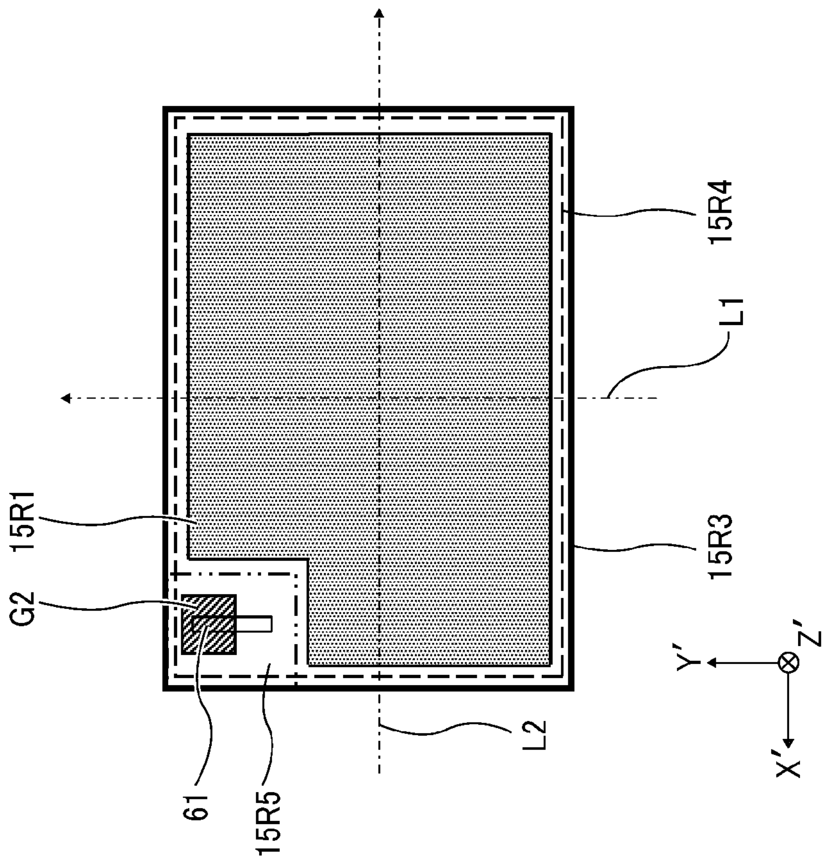

FIG. 40

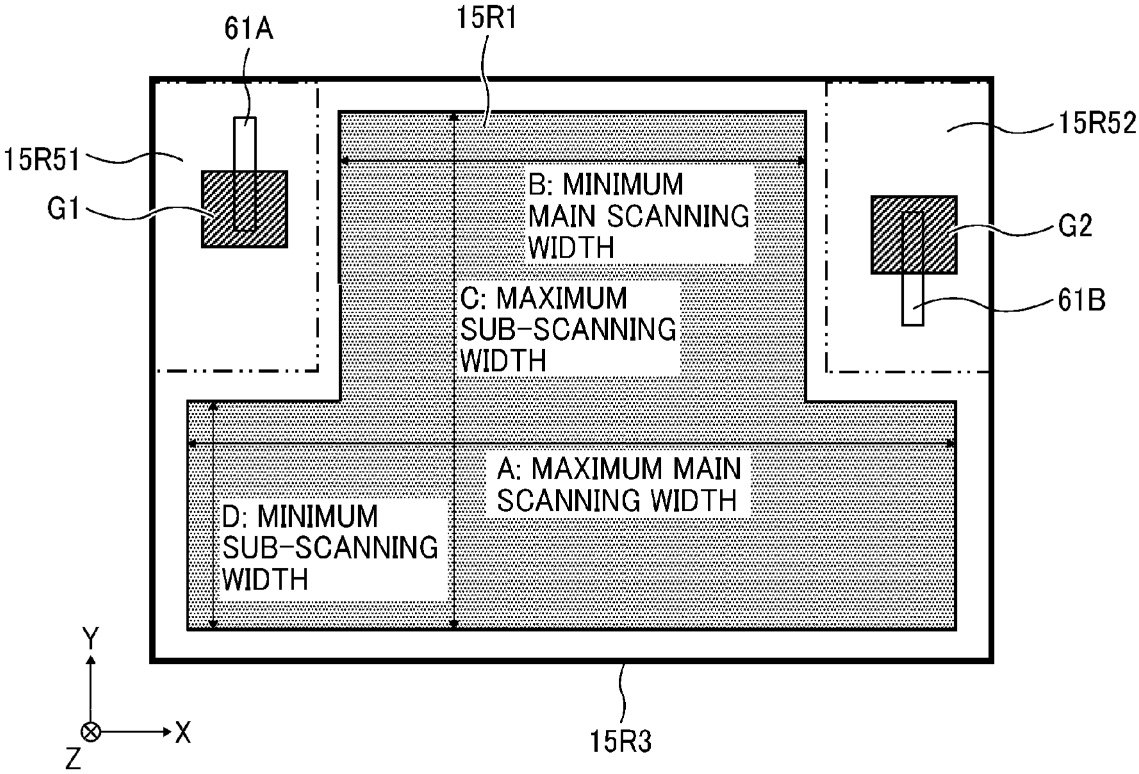
61A
15R1
15R51
G1
15R52
G2
61B
B: MINIMUM MAIN SCANNING WIDTH
C: MAXIMUM SUB-SCANNING WIDTH
A: MAXIMUM MAIN SCANNING WIDTH
D: MINIMUM SUB-SCANNING WIDTH
Y
X
Z
15R3

FIG. 41

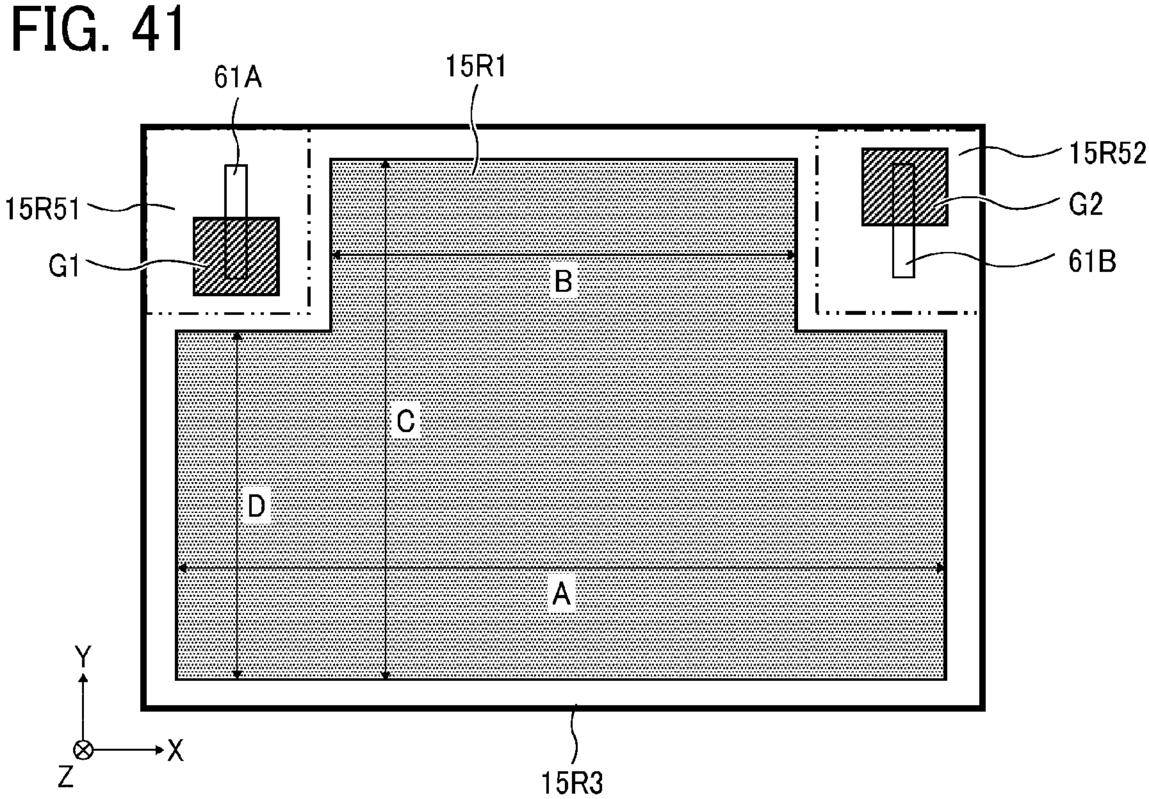
61A
15R1
15R51
G1
15R52
G2
61B
B
C
D
A
Y
X
Z
15R3

FIG. 42

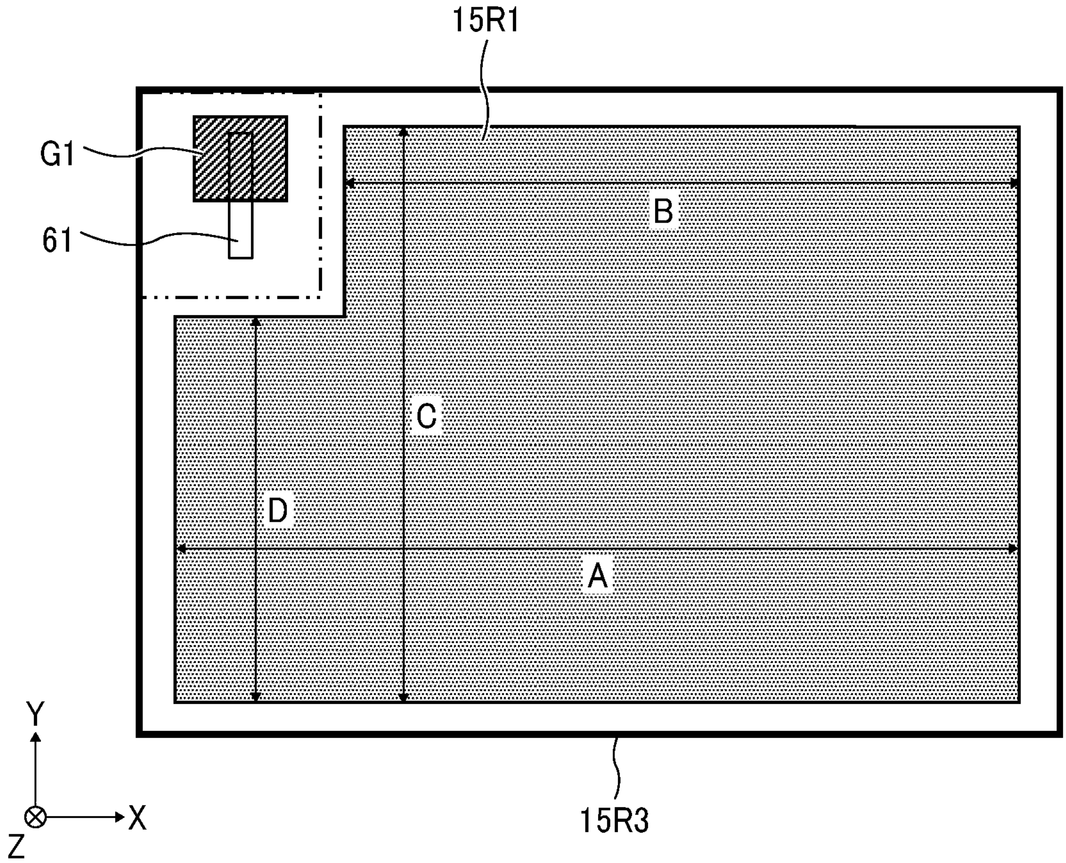


FIG. 43

| | (a) | (b) | (c) |
|---|---|---|---|
| A: MAXIMUM MAIN SCANNING WIDTH | 1X | 1X | 1X |
| B: MINIMUM MAIN SCANNING WIDTH | 1X | 1X | 1.3X |
| C: MAXIMUM SUB-SCANNING WIDTH | 1X | 1X | 1X |
| D: MINIMUM SUB-SCANNING WIDTH | 1X | 1.5X | 1.5X |

Europäisches Patentamt
European Patent Office
Office européen des brevets

# EUROPEAN SEARCH REPORT

Application Number
EP 20 16 1859

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 267 236 A1 (RICOH CO LTD [JP]) 10 January 2018 (2018-01-10)<br>* abstract; figures 1,3,4,11-14 *<br>* paragraph [0028] - paragraph [0030] *<br>* paragraph [0055] - paragraph [0062] *<br>----- | 1-15 | INV.<br>G02B26/10<br>G02B27/01 |
| X | US 2006/192094 A1 (TANIGUCHI NAOSATO [JP] ET AL) 31 August 2006 (2006-08-31)<br>* abstract; figures 2,3 *<br>* paragraphs [0030], [0031] *<br>----- | 1-3,14, 15 | |
| X | EP 3 267 237 A1 (RICOH CO LTD [JP]) 10 January 2018 (2018-01-10)<br>* abstract; figures 1,5-10, 12,13 *<br>* paragraph [0054] - paragraph [0086] *<br>----- | 1-3,14, 15 | |
| X | EP 3 432 069 A1 (RICOH CO LTD [JP]) 23 January 2019 (2019-01-23)<br>* abstract; figures 1,6,7 *<br>* paragraph [0033] - paragraph [0040] *<br>----- | 1-3,14, 15 | |

TECHNICAL FIELDS SEARCHED (IPC)

G02B

The present search report has been drawn up for all claims

1

| Place of search | Date of completion of the search | Examiner |
|---|---|---|
| Munich | 24 July 2020 | Jakober, François |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO. EP 20 16 1859

This annex lists the patent family members relating to the patent documents cited in the above-mentioned European search report. The members are as contained in the European Patent Office EDP file on
The European Patent Office is in no way liable for these particulars which are merely given for the purpose of information.

24-07-2020

| Patent document cited in search report | Publication date | Patent family member(s) | Publication date |
|---|---|---|---|
| EP 3267236 A1 | 10-01-2018 | EP 3267236 A1 | 10-01-2018 |
| | | JP 2018005007 A | 11-01-2018 |
| US 2006192094 A1 | 31-08-2006 | JP 4574394 B2 | 04-11-2010 |
| | | JP 2006235274 A | 07-09-2006 |
| | | US 2006192094 A1 | 31-08-2006 |
| EP 3267237 A1 | 10-01-2018 | EP 3267237 A1 | 10-01-2018 |
| | | JP 2018005078 A | 11-01-2018 |
| | | US 2018013992 A1 | 11-01-2018 |
| EP 3432069 A1 | 23-01-2019 | EP 3432069 A1 | 23-01-2019 |
| | | JP WO2017159443 A1 | 28-02-2019 |
| | | US 2019025473 A1 | 24-01-2019 |
| | | WO 2017159443 A1 | 21-09-2017 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 5221965 B
- JP 2009180753 A